(19) Europäisches Patentamt / European Patent Office / Office européen des brevets

(11) **EP 2 839 298 B1**

(12) **FASCICULE DE BREVET EUROPEEN**

(45) Date de publication et mention de la délivrance du brevet:
**01.06.2022  Bulletin 2022/22**

(21) Numéro de dépôt: **13723827.5**

(22) Date de dépôt: **11.04.2013**

(51) Classification Internationale des Brevets (IPC):
**G01Q 60/20** *(2010.01)*      **G02B 21/00** *(2006.01)*
**G02B 27/00** *(2006.01)*

(52) Classification Coopérative des Brevets (CPC):
**G02B 21/0056; G02B 21/0072; G02B 21/0076**

(86) Numéro de dépôt international:
**PCT/FR2013/000098**

(87) Numéro de publication internationale:
**WO 2013/153294 (17.10.2013 Gazette 2013/42)**

(54) **PROCÉDÉ ET DISPOSITIF DE MESURE OPTIQUE**

VERFAHREN UND VORRICHTUNG ZUR OPTISCHEN MESSUNG

OPTICAL MEASUREMENT METHOD AND DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.04.2012  FR 1201094**
                  **13.04.2012  FR 1201095**

(43) Date de publication de la demande:
**25.02.2015  Bulletin 2015/09**

(73) Titulaire: **Bioaxial SAS**
**75010 Paris (FR)**

(72) Inventeurs:
• **SIRAT, Gabriel, Y.**
  **F-75009 Paris (FR)**
• **MOISAN, Lionel**
  **F-75014 Paris (FR)**
• **BRAITBART, Louis Philippe**
  **f-75010 Paris (FR)**

(56) Documents cités:
WO-A1-92/18850          WO-A1-2010/133678
WO-A1-2011/086519       WO-A2-2009/066253
DE-U1-202009 007 250

• **C. F. PHELAN ET AL: "Conical diffraction and Bessel beam formation with a high optical quality biaxial crystal", OPTICS EXPRESS, vol. 17, no. 15, 20 juillet 2009 (2009-07-20), page 12891, XP055056299, ISSN: 1094-4087, DOI: 10.1364/OE.17.012891**

EP 2 839 298 B1

**Description**

La présente invention concerne un procédé et un dispositif de mesure optique. Elle trouve des applications dans tous les domaines de l'imagerie, en particulier mais non limitée au domaine de la Microscopie, incluant mais non limité aux domaines de la Biologie, de la Médecine, de la Pharmacie, des Semiconducteurs, de l'Etude des matériaux, de la Métrologie, du contrôle, de la mesure et de l'observation et à l'ensemble des processus d'acquisition de l'information à partir d'observations optiques, dans le domaine macroscopique ou microscopique.

Un Microscope optique est un instrument optique utilisé en général pour voir, analyser ou mesurer les objets trop petits pour être visualisés par l'œil nu.

Nous utiliserons le terme biologique pour décrire toute entité de la Science du vivant, quelle que soit sa provenance, humaine, animale ou végétale et la finalité de son observation, recherche, diagnostique ou thérapeutique. Ce terme inclut les utilisations médicales de la technique décrite. La Microscopie est utilisée dans le domaine de la Biologie, par exemple, pour observer, étudier et mesurer des entités (objets) biologiques et leur dynamique.

Nous utiliserons, par extension, le terme de *Vision artificielle* pour décrire l'ensemble des applications de mesure, métrologie ou observation d'objets ou éléments produits ou construits ou réalisés par un être humain ou une machine, par exemple, pour observer, étudier et mesurer des Semiconducteurs ou pour caractériser les matériaux.

Les définitions usuelles sont utilisées pour: limite de diffraction optique, critère de Rayleigh, disque d'Airy et ses rayon et diamètre. Nous utilisons dans le contexte de l'invention les termes de superrésolution, superrésolu, d'imagerie de superrésolution et de microscopie de superrésolution pour décrire l'acquisition de données optiques, en imagerie, en microscopie ou en Vision artificielle, à une résolution supérieure à la limite de diffraction optique. Les définitions usuelles sont utilisées pour la fluorescence et pour les fluorophores.

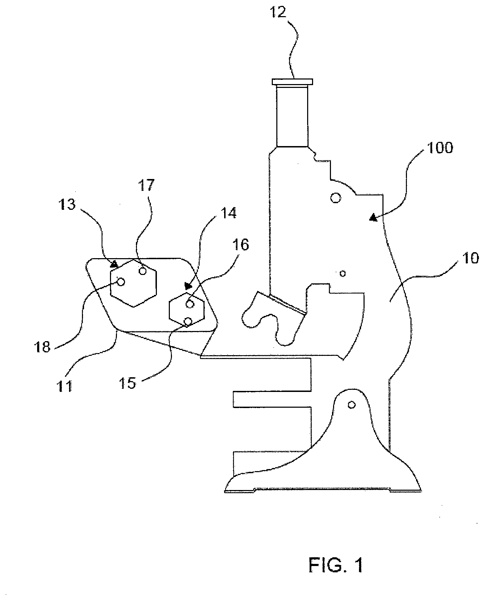

On se réfère maintenant à la Figure. 1, qui représente une illustration du paradigme de la Microscopie, 100.

La Microscopie optique consiste en l'illumination, par une source lumineuse, non représentée, à l'aide d'un Microscope, 10, d'un échantillon biologique ou non-biologique, 11, et la mesure en fonction du temps, à l'aide d'une observation visuelle ou d'un module de détection, 12, de la lumière émise, réémise, diffusée ou réfléchie ou transmise par l'échantillon. En Biologie, l'échantillon consiste en une - ou une pluralité - d'entités objets biologiques différentes, 13 et 14, positionnées à différentes positions. Des exemples de tels objets, sont, entre autres, une cellule, un virus, une protéine et un fragment d'ADN. En vision industrielle artificielle l'échantillon peut être, par exemple, un élément semi-conducteur

La Microscopie est segmentée en différentes modalités ayant des caractéristiques et des finalités différentes. De nombreuses descriptions des différentes modalités, de leurs caractéristiques et de leurs avantages existent extensivement dans la littérature et se trouvent par exemple sur les web des sociétés Zeiss [1], Leica, Nikon, [2] ou Olympus.

On peut structurer les applications de Microscopie de nombreuses manières différentes: l'une d'entre elles est de distinguer les modalités de Microscopie dévolues à visualiser des minuscules sources ponctuelles de celles dévolues à mesurer des objets continus.

Le cas des minuscules sources ponctuelles est a priori beaucoup plus simple. L'objet consiste en un petit nombre de points lumineux ; ceux-ci peuvent être décrits par un petit nombre de paramètres - les descripteurs définis par la suite - simplifiant de beaucoup le problème physique et la complexité algorithmique. Le cas d'un objet continu, décrit que par une distribution spatiale - ou spatio-temporelle, si on prend en compte la dynamique - continue, est différent et est décrit aussi dans cette demande de brevet.

La microscopie de fluorescence est une des modalités de la microscopie; elle a remplacé, dans de nombreuses applications, les autres techniques de microscopie. Un microscope à fluorescence est un microscope optique utilisé pour étudier les propriétés d'objets, ou de substances organiques ou inorganiques en utilisant les phénomènes de fluorescence au lieu de, ou en plus d'autres modalités telle que la réflexion et l'absorption.

On se réfère de nouveau à la Figure. 1, décrivant, cette fois, un microscope de fluorescence utilisé soit en Biologie soit en Vision artificielle pour caractériser, par exemple, des matériaux; en microscopie de fluorescence on fixe des minuscules sources ponctuelles, 15 à 18, par exemple des fluorophores basées sur le phénomène physique de la fluorescence à un photon, à des positions spécifiques et prédéterminées des objets, 13 et 14; on observe la lumière émise par les sources ponctuelles en lieu et place d'observer la lumière émise par les objets, 13 et 14, eux-mêmes.

L'échantillon est éclairé par une lumière de longueur d'onde, ou de longueurs d'onde spécifiques, qui est absorbée par les sources ponctuelles, induisant ainsi l'émission de lumière à des longueurs d'onde différentes et plus élevées. Lors de la collection de la lumière émise, en fluorescence, la lumière d'illumination est séparée de la fluorescence émise, qui est plus faible, par l'utilisation d'un filtre spectral d'émission.

La microscopie de fluorescence étudie la lumière émise par de petites sources ponctuelles, les fluorophores. Toutefois, lorsque la densité des fluorophores est élevée, les fluorophores ne sont plus analysés individuellement mais traités comme un objet continu. Il est important de noter, dès ce stade, que le même système permet l'observation d'objets continus, et n'est pas limité à l'observation de sources ponctuelles.

Les fluorophores sont devenus un outil important de la visualisation d'objets biologiques. L'activité et l'information biologique comprenant des détails au-dessus de la limite de résolution de 200 nm sont systématiquement visualisés et mesurées en utilisant la microscopie de fluorescence. Cette limite de résolution est dérivée du critère de Rayleigh, qui, dans le meilleur des cas, atteint 200nm dans des systèmes conçus spécialement. Pendant longtemps, jusqu'à l'émergence des techniques de superrésolution décrites ci-dessous, il était reconnu que les techniques optiques, y compris la microscopie de fluorescence, sont incapables de visualiser des détails plus petits que le critère de Rayleigh, de l'ordre de 200 nm.

Cependant, d'autres activités biologiques fondamentales se produisent également à des échelles de taille inférieure à 200 nm dans des échantillons biologiques. A ce niveau de résolution spatiale, des phénomènes importants peuvent être observés : les processus biologiques à l'échelle intracellulaire, le transfert d'information cellulaire, le repliement et le dépliement des protéines et les modifications de l'ADN et l'ARN. Ainsi, par exemple, la mesure de ces informations intracellulaires ouvrira de nouvelles voies à la compréhension de l'activité biologique, et conduira à des progrès dans la connaissance et le suivi de la recherche et du diagnostic médical.

Les principales implémentations de la microscopie de fluorescence, décrites en détails dans la littérature, sont le microscope confocal, souvent utilisé dans une configuration à balayage ou à disque rotatif et le microscope d'imagerie à grand champ.

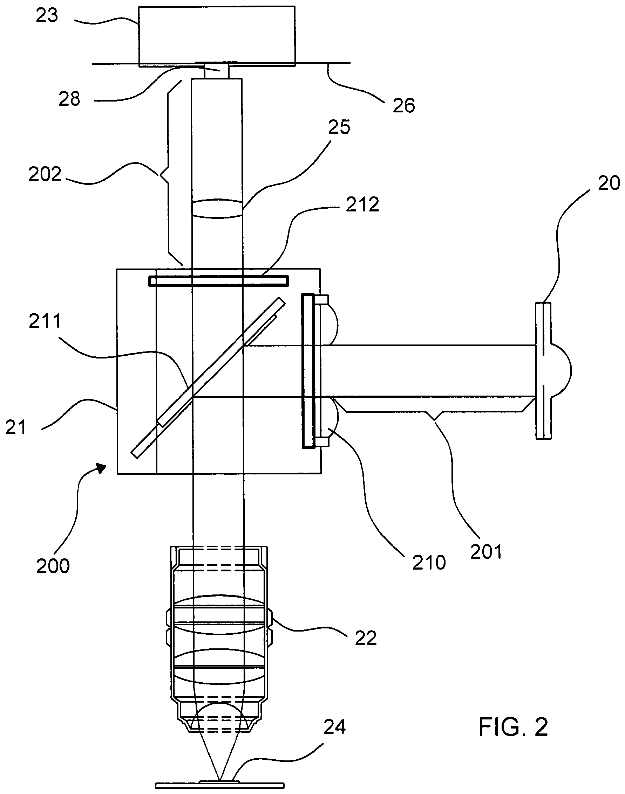

On se réfère maintenant à la figure 2, qui est une représentation simplifiée d'un microscope confocal à fluorescence de l'art antérieur 200.

Un microscope confocal de fluorescence, Fig. 2, est un instrument optique. Ses principaux composants matériels sont représentés dans la figure. 2. Ils comprennent:

Une source de lumière, 20,

un cadre optomécanique non représenté,

un cube de filtres, 21,

un objectif de microscope 22, et,

un ensemble détecteur, 23,

une unité de traitement, non représentée.

La source de lumière, 20, qui peut être une lampe à arc ou d'un laser, crée de l'énergie lumineuse nécessaire pour la fluorescence.

Le cadre optomécanique, non représenté, est le support de tous les éléments optiques et comprend des optiques auxiliaires et les capacités d'alignement. Il comprend également, des éléments optiques, non représentés, capables de façonner le faisceau, pour permettre sa focalisation d'un point de taille minimale, au moyen de l'objectif du microscope.

Il peut comprendre également, dans un microscope confocal de fluorescence à balayage, un mécanisme de balayage, spatial ou angulaire, non représenté pour modifier la position de la source ponctuelle par rapport à l'objet à mesurer.

Le mécanisme de balayage peut alternativement:

translater mécaniquement l'objet, en utilisant par exemple une platine de translation,

scanner optiquement le faisceau sur l'objet, en utilisant par exemple un ensemble de miroirs galvanométriques ou translateurs acousto-optiques, ou

utiliser une combinaison quelconque de ces moyens de translation, mécaniques ou optiques.

Dans un microscope confocal de fluorescence à balayage, l'information est recueillie point à point, en utilisant le mécanisme de balayage.

Il peut comprendre également, dans un microscope confocal de fluorescence à disque rotatif, un disque rotatif, comportant une pluralité de trous microscopiques, permettant la projection simultanée d'une pluralité de points. Dans un microscope confocal de fluorescence à disque rotatif, un ensemble de points, correspondant aux trous microscopiques est acquis à chaque instant et la rotation du disque permet de balayer l'ensemble de la surface de l'échantillon pour une position longitudinale donnée.

Le cube de filtres, 21, canalise les différents signaux optiques et évite la contamination du signal de fluorescence par la lumière d'excitation. Le cube de filtres se décompose en: filtre d'excitation, 210, miroir dichroïque, 211, et filtre d'émission, 212. Les filtres et le miroir dichroïque sont choisis en fonction de la longueur d'onde d'excitation et des caractéristiques spectrales d'émission du fluorophore.

L'objectif de microscope, 22, focalise la lumière créée par la source dans le plan focal de l'objectif, 24, en une distribution lumineuse de taille réduite, la distribution lumineuse optimale consistant en un disque d'Airy. L'objectif de microscope, 22, permet également de recueillir en retour la lumière fluorescente émise par les fluorophores.

Pour un microscope confocal de fluorescence à balayage le système peut être déscanné, c'est-à-dire que la lumière en retour peut passer par le mécanisme de balayage pour compenser la translation due au balayage.

Une lentille de détecteur, 25, crée, au plan image du détecteur 26, une image magnifiée du plan focal de l'objectif, 24.

Un trou confocal, 27, est théoriquement placé dans le plan image du détecteur, 26. Dans la plupart des systèmes pratiques, le trou confocal, 27, est placé dans un plan d'imagerie intermédiaire non représenté et réimagé sur le plan image du détecteur, 26.

L'assemblage du détecteur, 23, détecte l'intensité fluorescente globale dans le volume éclairé, et la transforme en signal numérique. Pour un microscope confocal à balayage, l'assemblage du détecteur est constitué d'un détecteur d'un seul élément, comme un PMT ou SPAD. Pour un microscope confocal à disque rotatif, l'assemblage du détecteur est constitué d'une matrice d'éléments de détection, telle qu'un CCD, un EMCCD, un CMOS ou une matrice de SPAD.

L'ensemble des composants montés à partir de la source lumineuse jusqu'au filtre dichroïque est la voie d'éclairage, 201. L'ensemble des composants montés à partir du filtre dichroïque jusqu'à l'assemblage du détecteur est la voie de détection, 202.

Le processus optique élémentaire d'un microscope confocal peut être segmenté en six étapes:

- Projection de la lumière sur le volume d'analyse

- émission de lumière fluorescente par les fluorophores

- Imagerie des fluorophores sur le plan focal

- Limitation dans le plan focal de la lumière analysée par le trou confocal

- Intégration de la lumière analysée par un détecteur photoélectrique

- Visualisation de l'intensité mesurée sous forme d'une valeur de pixel dans une image

Des microscopes à fluorescence sont disponibles auprès de plusieurs fabricants, comme par exemple, Nikon, Zeiss, Leica ou Olympus. Les microscopes à fluorescence peuvent être soit des microscopes standards adaptés à la fluorescence soit des microscopes spécifiques optimisés pour la fluorescence. Les microscopes modernes sont des instruments polyvalents capables de fonctionner dans de nombreuses modalités différentes, y compris, mais sans s'y limiter, les modalités de fluorescence, en utilisant la même plate-forme optomécanique et la plupart des composants. La plupart des microscopes à fluorescence sont développés en tant que plate-forme ouverte, capable d'effectuer plusieurs fonctionnalités additionnelles avec des modifications minimes. D'autres microscopes à fluorescence sont des instruments dédiés, personnalisés à une tâche spécifique, comme le diagnostic médical ou pharmaceutiques.

**Superrésolution**

De nouvelles méthodes optiques, les méthodes de superrésolution, sont capables de discriminer des sources ponctuelles, en dessous du critère de Rayleigh. Ces méthodes sont développées par plusieurs entreprises, laboratoires et chercheurs et certains des instruments utilisant ces méthodes, les microscopes de superrésolution, sont disponibles commercialement. Plusieurs analyses comparatives des méthodes de superrésolution ont été publiées récemment dans la littérature, comme les articles de Schermelleh et al. [3].

Une bibliographie mise à jour sur la superrésolution se trouve sur le site web de la société Zeiss, [1], et sur le site web de la société Nikon, [2].

Des exemples sont divulgués dans les documents DE 20 2009 007250 U1, WO 2011/086519 A1,WO 2010/133678 A1.

Les différentes méthodes de microscopie existantes et les microscopes existants, n'incorporant pas la super-résolution, permettent l'observation microscopique dans la limite de la diffraction optique. Ceci réduit leur champ d'utilisation à un ensemble d'applications limité.

Les nouvelles techniques de superrésolution permettent elles d'obtenir des informations au-delà de la limite de résolution. Le principal problème de l'ensemble des techniques existantes de superrésolution est que l'enveloppe des performances, exprimée en termes de résolution latérale, de résolution longitudinale, de vitesse, d'intensité lumineuse nécessaire, de photo-toxicité dans l'objet biologique, d'aptitude à mesurer des objets différents, est très limitée.

De plus, la plupart des méthodes et instruments existants de superrésolution peuvent fournir soit une bonne résolution latérale, soit une bonne résolution longitudinale, mais rarement les deux.

De plus, tous ces instruments sont complexes et nécessitent une haute technicité de l'opérateur.

De plus, ces instruments ne peuvent observer généralement qu'une faible partie des spécimens biologiques, en raison de fortes limitations opérationnelles, telles que pour certains d'entre eux une faible profondeur de champ ou de très fortes intensités nocives pour les cellules.

Un autre problème avec les méthodes et instruments existants de super résolution, est que la plupart d'entre eux sont en mesure de récupérer, dans le volume illuminé, les attributs d'un fluorophore unique, mais ne parviennent pas à reconnaître simultanément la présence de plusieurs fluorophores et de mesurer leurs attributs.

Un problème supplémentaire avec les méthodes et instruments existants de superrésolution est que ces méthodes et instruments existants sont présentés aux utilisateurs et perçus par eux comme un outil général, apte à remplacer les microscopes standard ou confocal. Cependant, les méthodes et instruments existants de superrésolution manquent de la simplicité, de la robustesse, de la facilité d'utilisation et des prix compétitifs des microscopes standards ce qui freine leur utilisation comme outils de recherche générale ou comme outils de diagnostic.

Un autre problème avec les méthodes et instruments existants de superrésolution est que la plupart de ces méthodes et instruments sont construits comme des instruments autonomes conçus pour remplacer les microscopes standards. Une telle approche nécessite le remplacement des instruments existants ainsi que le renouvellement de tous les systèmes périphériques et toutes les connaissances et savoir-faire, liés aux plateformes de microscopie et développées depuis de nombreuses années.

Un autre problème avec la plupart des méthodes et instruments existants de microscopie de fluorescence et de superrésolution est que ces méthodes et instruments sont conçus sur un paradigme d'acquisition d'image, pour lequel l'entité de base de l'information est une - ou plusieurs images, ou une - ou plusieurs - régions ROI - Region Of Interest bi ou tridimensionnelles. Les méthodes algorithmiques, systémiques et de superrésolution décrites ultérieurement dans le contexte de l'invention permettront, par leur inhérente flexibilité, le développement de stratégies nouvelles d'acquisition. Ces procédures d'acquisition, dynamiques et sélectives, seront définies par une gestion optimisée de la séquence d'acquisition et de traitement interactif et différé. Elles permettront une optimisation plus évoluée de l'information utile, définie par des critères basés sur la forme, la géométrie et la dynamique d'un ou plusieurs objets fluorescents, séparément ou l'un par rapport à l'autre.

Il y a donc toujours un besoin urgent de fournir des méthodes et instruments de superrésolution et des méthodes algorithmiques capable de mesurer avec une grande précision les attributs d'un fluorophore. Il est en outre nécessaire de fournir des méthodes et des instruments pour détecter et quantifier la présence de plusieurs fluorophores placés dans le même volume illuminé.

Un autre problème avec la plupart des méthodes et instruments existants de microscopie de fluorescence et de superrésolution est que ces méthodes et instruments sont conçus pour étudier des échantillons sur des lamelles de microscopes. Cependant, le microscope confocal est aujourd'hui utilisé dans de nombreux domaines médicaux comme instrument de diagnostics in-vivo pour des examens internes et externes au corps humain par le biais de fibres optiques utilisées pour illuminer et pour visualiser la fluorescence émise par les tissus à diagnostiquer. La superrésolution ne permet pas actuellement de pratiquer des tels diagnostics in-vivo. Les méthodes algorithmiques, systémiques et de superrésolution décrites ultérieurement dans le contexte de l'invention permettront le développement de nouvelles méthodes de diagnostics in-vivo qui réduiront les besoins de pratiquer des biopsies et raccourciront le temps d'attente du patient.

L'invention est définie par les revendications.

Un premier aspect de l'invention vise un procédé optique de mesure pour déterminer la distribution spatiale ou spatiotemporelle d'un échantillon, l'échantillon comportant au moins une source réémettrice ledit au moins une source réémettrice réémettant de la lumière en fonction de la lumière projetée, sur l'échantillon, le procédé comportant :

la projection sur l'échantillon, au moyen d'un appareil optique de projection, d'au moins deux distributions lumineuses compactes de familles topologiques différentes, se propageant suivant le même chemin optique,
la détection de la lumière réémise par ledit au moins une source réémettrice de l'échantillon ;
la génération, d'au moins une image optique, à partir de la lumière détectée ; et
l'analyse algorithmique des images optiques pour obtenir une information de localisation dudit au moins une source réémettrice.

La projection sur l'échantillon peut être faite séquentiellement ou simultanément. La source réémettrice peut être une source ponctuelle, un objet structuré, par exemple des segments de lignes, des cercles ou un objet continu.

Selon un mode de réalisation l'appareil optique de projection est achromatique

Selon un mode de réalisation les au moins deux distributions lumineuses compactes de familles topologiques différentes sont projetées séquentiellement.

Selon un mode de réalisation la génération, d'au moins une image optique, à partir de la lumière détectée est effectuée, à chaque moment où l'image est illuminée.

Selon un mode de réalisation lesdites au moins deux distributions lumineuses compactes de familles topologiques différentes sont créées par une interférence entre une onde régulière et une onde singulière, ou entre deux ondes singulières, et une différenciation spatiale entre lesdites au moins deux distributions est créée en faisant varier au moins un des paramètres suivants:

a) au moins un des paramètres de l'onde régulière;

b) au moins un paramètre d'au moins une onde singulière et

c) une différence de phase entre l'onde régulière et l'onde singulière ou entre les deux ondes singulières.

Selon un mode de réalisation la projection de distributions lumineuses de familles topologies différentes est effectuée par une diffraction conique.

Selon un mode de réalisation, le procédé comporte en outre la modification de la projection par une variation des états de polarisation d'entrée et de sortie d'un au moins un cristal conique effectuant la diffraction conique.

Selon un mode de réalisation, la projection de distributions lumineuses de topologies différentes est effectuée par une diffraction conique dans un cristal mince.

Selon un mode de réalisation, le procédé comporte en outre la transmission le long d'une partie du chemin optique des au moins deux distributions lumineuses compactes de familles topologiques différentes par une fibre optique.

Selon un mode de réalisation, la fibre optique comporte une fibre photonique.

Selon un mode de réalisation, le procédé comporte la séparation temporelle, par l'application d'un effet physique, des sources réémettrices positionnées, dans l'échantillon, à des distances faibles l'une de l'autre, en utilisant une technique de microscopie de localisation.

Selon un mode de réalisation, le procédé comporte en outre l'induction de l'effet physique à l'aide d'une onde supplémentaire, régulière ou singulière, par un effet de photoactivation ou de photodepletion.

Selon un mode de réalisation, les ondes des distributions lumineuses projetées interagissent de façon non linéaire, par effet de fluorescence à multiphotons ou par effet Raman.

Selon un mode de réalisation, la fibre optique est configurée pour transmettre les distributions lumineuses compactes de familles topologiques différentes , créées antérieurement, avec une atténuation différente pour les différentes distributions lumineuses.

Selon un mode de réalisation, la fibre optique est agencée pour créer, par couplage, statique ou dynamique dans la fibre, une interaction entre les distributions lumineuses injectées dans la fibre optique et pour que les distributions lumineuses émergeantes de la fibre diffèrent de celles injectées dans la fibre

Selon un mode de réalisation, la dépendance spectrale de l'émission d'une source réémettrice est de surcroit modifiée par un effet de transfert d'énergie de Förster.

Selon un mode de réalisation, ledit au moins deux distributions lumineuses compactes de familles topologiques différentes sont collocalisées.

Selon un mode de réalisation, l'appareil achromatique comporte au moins une source lumineuse de longueur d'onde comprise dans une bande spectrale de largeur supérieure à15% de la longueur d'onde médiane de la bande spectrale,l'appareil optique achromatique créant des distributions lumineuses compactes, collocalisées, de familles topologiques différentes, se propageant suivant le même chemin optique pour toute longueur d'onde comprise dans la bande spectrale.

Un deuxième aspect de l'invention vise un dispositif de mesure pour déterminer la distribution spatiale ou spatiotemporelle d'un échantillon, l'échantillon comportant au moins une source réémettrice, ledit au moins une source réémettrice réémettant de la lumière en fonction de la lumière projetée, sur l'échantillon, le dispositif comportant:

- un module de projection achromatique à projeter sur l'échantillon d'au moins deux distributions lumineuses compactes de familles topologiques différentes se propageant suivant le même chemin optique, un module de détection apte à détecter de la lumière réémise par ledit au moins une source réémettrice de l'échantillon ;

- un module de génération, apte à générer au moins une image optique, à partir de la lumière détectée; et

- un module d'analyse algorithmique apte à analyser des images optiques pour obtenir une information de localisation dudit au moins une source réémettrice.

Selon un mode de réalisation, le module de projection est configuré pour projeter séquentiellement les au moins deux distributions lumineuses compactes de familles topologiques différentes.

Selon un mode de réalisation, le module de génération est configuré pour générer ledit au moins une image optique, à partir de la lumière détectée à chaque moment où l'image est illuminée.

Selon un mode de réalisation :

- le module de projection est apte à créer lesdites au moins deux distributions lumineuses compactes de familles topologiques différentes par une interférence entre une onde régulière et une onde singulière, ou entre deux ondes singulières, et une différenciation spatiale entre lesdites au moins deux distributions est créée en faisant varier au moins un des paramètres suivants:
- a) au moins un des paramètres de l'onde régulière;
- b) au moins un paramètre d'au moins une onde singulière et
- c) une différence de phase entre l'onde régulière et l'onde singulière ou entre les deux ondes singulières.

Selon un mode de réalisation, le module de projection comporte au moins un cristal conique pour effectuer la projection de distributions lumineuses de familles topologies différentes par une diffraction conique.

Selon un mode de réalisation, le dispositif comporte en outre des moyens de modification de projection configurés à varier des états de polarisation d'entrée et de sortie dudit au moins un cristal conique.

Selon un mode de réalisation, ledit au moins un cristal conique est un cristal mince.

Selon un mode de réalisation, le dispositif comporte en outre une fibre optique pour effecteur la transmission le long d'une partie du chemin optique des au moins deux distributions lumineuses compactes de familles topologiques différentes.

Selon un mode de réalisation, la fibre optique comporte une fibre photonique.

Selon un mode de réalisation, le dispositif comporte en outre un module de séparation temporelle apte à séparer temporellement, par l'application d'un effet physique, des sources réémettrices positionnées, dans l'échantillon, à des distances faibles l'une de l'autre, en utilisant une technique de microscopie de localisation.

Selon un mode de réalisation, le dispositif comporte en outre des moyens d'induction de l'effet physique à l'aide d'une onde supplémentaire, régulière ou singulière, par un effet de photoactivation ou de photodepletion.

Selon un mode de réalisation, le module de projection est configuré pour projeter les ondes des distributions lumineuses tel que elles interagissent de façon non linéaire, par effet de fluorescence à multiphotons ou par effet Raman.

Selon un mode de réalisation, la fibre optique est configurée pour transmettre les distributions lumineuses compactes de familles topologiques différentes , créées antérieurement, avec une atténuation différente pour les différentes distributions lumineuses.

Selon un mode de réalisation, la fibre optique est agencée pour créer, par couplage, statique ou dynamique dans la fibre, une interaction entre les distributions lumineuses injectées dans la fibre optique et pour que les distributions lumineuses émergeantes de la fibre diffèrent de celles injectées dans la fibre

Selon un mode de réalisation, le dispositif comporte en outre des moyens pour modifier la dépendance spectrale de l'émission d'une source réémettrice par un effet de transfert d'énergie de Förster.

Selon un mode de réalisation, le dispositif comporte un dispositif de microscopie modifié pour le rendre achromatique, athermal ou achromatique et athermal, par l'ajout d'éléments optiques supplémentaires ou par modification des éléments internes du dispositif.

Selon un mode de réalisation les éléments optiques ajoutés comprennent au moins un prisme, un réseau, une lentille ou un cristal supplémentaire ayant des dispersion inverses.

Selon un mode de réalisation le module de projection achromatique est apte à créer au moins deux distributions lumineuses compactes de familles topologiques différentes collocalisées.

Selon un mode de réalisation le module de projection achromatique comporte au moins une source lumineuse de longueur d'onde comprise dans une bande spectrale de largeur supérieure a 15% de la longueur d'onde médiane de la bande spectrale, et est configuré pour créer des distributions lumineuses compactes, collocalisées, de familles topologiques différentes, se propageant suivant le même chemin optique pour toute longueur d'onde comprise dans la bande spectrale.

Un troisième aspect de l'invention concerne un procédé optique de mesure pour déterminer la distribution spatiale ou spatiotemporelle d'un échantillon, l'échantillon comportent au moins une source réémettrice ledit au moins une source réémettrice réémettant de la lumière en fonction de la lumière projetée suivant une loi déterminée sur l'échantillon, le procédé comportant:

la projection sur l'échantillon, , par diffraction conique ou à l'aide de cristaux uniaxes, d'au moins deux distributions lumineuses compactes de familles topologiques différentes par un système optique a chemin commun

la détection de la lumière réémise par ledit au moins une source réémettrice de l'échantillon ;

la génération, d'au moins une image optique, à partir de la lumière détectée, et

l'analyse algorithmique des images optiques pour obtenir une information de localisation dudit au moins une source réémettrice.

Selon un mode de réalisation les moyens de projection sont aptes à créer lesdites au moins deux distributions lumineuses compactes de familles topologiques différentes sont créées par une interférence entre une onde régulière et une onde singulière, ou entre deux ondes singulières, et une différenciation spatiale entre lesdites au moins deux distributions est créée en faisant varier au moins un des paramètres suivants:

a) au moins un des paramètres de l'onde régulière;

b) au moins un paramètre d'au moins une onde singulière et

c) une différence de phase entre l'onde régulière et l'onde singulière ou entre les deux ondes singulières.

Selon un mode de réalisation une onde singulière, issue d'un système optique à chemin commun, à une longueur d'onde différente de l'onde régulière, crée un effet de déplétion de l'onde régulière par soit désexcitation dudit au moins une source réémettrice soit par transition entre états excités différents dudit au moins une source réémettrice

Selon un mode de réalisation un effet de dispersion de polarisation est utilisé pour permettre au système optique à chemin commun de créer sans modification dynamique, une onde régulière à une longueur d'onde et une onde singulière à une différente longueur d'onde.

Un quatrième aspect de l'invention vise un dispositif optique de mesure pour déterminer la distribution spatiale ou spatiotemporelle d'un échantillon, l'échantillon comportent au moins une source réémettrice ledit au moins une source réémettrice réémettant de la lumière en fonction de la lumière projetée suivant une loi déterminée sur l'échantillon, le dipositif comportant:

au moins un cristal conique ou uniaxe pour projeter sur l'échantillon, par diffraction conique d'au moins deux distributions lumineuses compactes de familles topologiques différentes à chemin commun

des moyens de détection aptes à détecter de la lumière réémise par ledit au moins une source réémettrice de l'échantillon ;

des moyens de génération aptes à générer moins une image optique, à partir de la lumière détectée, et

des moyens d'analyse algorithmique aptes à analyser de façon algorithmique des images optiques pour obtenir une information de localisation dudit au moins une source réémettrice.

Selon un mode de réalisation le dispositif comporte en outre

des moyens d'interférence pour créer lesdites au moins deux distributions lumineuses compactes de familles topologiques différentes par une interférence entre une onde régulière et une onde singulière, ou entre deux ondes singulières, et une différenciation spatiale entre lesdites au moins deux distributions est créée en faisant varier au moins un des paramètres suivants:

a) au moins un des paramètres de l'onde régulière;

b) au moins un paramètre d'au moins une onde singulière et

c) une différence de phase entre l'onde régulière et l'onde singulière ou entre les deux ondes singulières.

Selon un mode de réalisation l'onde singulière, issue d'un système optique à chemin commun, à une longueur d'onde différente de l'onde régulière, crée un effet de déplétion de l'onde régulière par soit désexcitation dudit au moins une source réémettrice soit par transition entre états excités différents dudit au moins une source réémettrice

Selon un mode de réalisation le dispositif comporte des moyens de dispersion de polarisation pour effectuer un effet de dispersion de polarisation pour permettre au système optique à chemin commun de créer sans modification dynamique, une onde régulière à une longueur d'onde et une onde singulière à une différente longueur d'onde.

Un autre aspect de l'invention vise l'utilisation du procédé selon l'un quelconque des modes de réalisation pour la vision artificielle

Un autre aspect de l'invention vise l'utilisation du procédé selon l'un quelconque des modes de réalisation pour une application médicale

Un autre aspect de l'invention vise l'utilisation du procédé selon l'un quelconque des modes de réalisation pour l'étude des cellules biologiques

Un autre aspect de l'invention vise un procédé optique comportant

la séparation physique, au moyen d'un appareil optique achromatique basé sur la diffraction conique et, d'une onde régulière incidente principale d'au moins une onde régulière incidente auxiliaire incidente, ledit au moins une onde régulière incidente auxiliaire étant différente par rapport à l'onde régulière principale,

l'onde régulière principale n'étant pas modifiée par la propagation dans ledit appareil achromatique et ledit au moins une onde régulière auxiliaire, transfèrent une partie mesurable de son énergie à une onde singulière émergente de telle manière que l'onde singulière émergente n'inclut que l'énergie dudit au moins une onde régulière auxiliaire; et

la séparation de l'onde singulière émergente de l'onde régulière incidente principale par un élément optique polarisant, absorbant ou séparant.

Selon un mode de réalisation de l'invention, l'onde régulière incidente principale et ledit au moins une onde régulière incidente auxiliaire sont polarisées.

Selon un mode de réalisation de l'invention, l'onde régulière incidente principale et ledit au moins une onde régulière incidente auxiliaire sont, au moins partiellement, collimatées.

Selon un mode de réalisation de l'invention, l'onde régulière principale et ledit au moins une onde régulière auxiliaire se différencient par leurs degrés de collimation respectifs.

Selon un mode de réalisation de l'invention, l'onde régulière principale et ledit au moins une onde régulière auxiliaire se différencient par leurs paramètres du rayon de courbure respectifs.

Selon un mode de réalisation de l'invention ,l'onde régulière principale et ledit au moins une onde régulière auxiliaire sont issues de sources différentes, l'onde régulière principale et ledit au moins une onde régulière auxiliaire se différencient en fonction de la position, latérale ou longitudinale de la source respective

Selon un mode de réalisation de l'invention, l'onde régulière principale est issue d'une source, le procédé comportant en outre la détermination de la position, latérale ou longitudinale de la source à partir des mesures d'intensité ou de phase de l'onde singulière émergente.

Selon un mode de réalisation de l'invention ,l'appareil optique achromatique est basé sur la diffraction conique.

Un autre aspect de l'invention vise un dispositif optique comportant :

au moins un module optique achromatique basé sur la diffraction conique ou sur la propagation de la lumière dans au moins un cristal uniaxe pour effectuer une séparation physique, d'une onde régulière incidente principale d'au moins une onde régulière incidente auxiliaire incidente, ledit au moins une onde régulière incidente auxiliaire étant différente par rapport à l'onde régulière principale,

ledit module optique achromatique étant configuré pour que l'onde régulière principale ne soit pas modifiée par sa propagation dans ledit cristal et pour transférer une partie mesurable de l'énergie dudit au moins une onde régulière auxiliaire, à une onde singulière émergente de telle manière que l'onde singulière émergente n'inclut que l'énergie dudit au moins une onde régulière auxiliaire; et

un élément optique polarisant, absorbant ou séparant pour séparer l'onde singulière émergente de l'onde régulière incidente principale.

Selon un mode de réalisation de l'invention, le dispositif comporte en outre un module de polarisation pour polariser l'onde régulière incidente principale et ledit au moins une onde régulière incidente auxiliaire.

Selon un mode de réalisation de l'invention, le dispositif comporte en outre un module de collimation pour collimater, au moins partiellement, l'onde régulière incidente principale et ledit au moins une onde régulière incidente auxiliaire.

Selon un mode de réalisation de l'invention, l'onde régulière principale et ledit au moins une onde régulière auxiliaire se différencient par leurs degrés de collimation respectifs.

Selon un mode de réalisation de l'invention, l'onde régulière principale et ledit au moins une onde régulière auxiliaire se différencient par leurs paramètres du rayon de courbure respectifs.

Selon un mode de réalisation de l'invention, l'onde régulière principale et ledit au moins une onde régulière auxiliaire sont issues de sources différentes, l'onde régulière principale et ledit au moins une onde régulière auxiliaire se différencient en fonction de la position, latérale ou longitudinale de la source respective.

Selon un mode de réalisation de l'invention, le dispositif comporte en outre un module de mesure configuré pour déterminer la position, latérale ou longitudinale de la source de l'onde régulière principale à partir des mesures d'intensité ou de phase de l'onde singulière émergente.

Selon un mode de réalisation de l'invention, le module optique achromatique est basé sur la diffraction conique

Un but d'au moins un mode de réalisation de la présente invention est de fournir une technique de super-résolution en microscopie de fluorescence pour la biologie, plus généralement aux sciences de la vie et, finalement, à la pharmacologie, la médecine et le diagnostic, qui permettra de surmonter les lacunes des dispositifs de l'art antérieur.

Un des buts d'au moins un mode de réalisation de la présente invention est de fournir une technique de super-résolution en microscopie de fluorescence pour la biologie afin de réaliser un système optique qui est capable de mesurer avec une grande précision les attributs d'un fluorophore, ainsi que de reconnaître et de mesurer les attributs de plusieurs fluorophores placés dans le même volume illuminé.

Un autre but d'au moins un mode de réalisation de l'invention est de fournir une technique de super-résolution en microscopie de fluorescence pour la biologie qui mesure avec une grande précision les attributs d'un fluorophore.

Un autre but d'au moins un mode de réalisation de l'invention est de fournir une technique de super-résolution en microscopie de fluorescence pour la biologie qui acquiert et mesure, avec une grande précision, les attributs de plusieurs fluorophores présents dans le même volume illuminé.

Un autre aspect de l'invention propose un procédé optique de mesure et un appareil optique achromatique pour déterminer la position spatiale d'au moins un nanoémetteur lumineux, d'un objet structuré ou d'une distribution continue sur un échantillon, le procédé comportant : la projection d'une séquence d'au moins deux distributions lumineuses compactes de familles topologiques différentes sur l'échantillon, la détection de la lumière réémise par ledit au moins un nanoémetteur lumineux, objet structuré ou distribution continue de l'échantillon ; la génération, d'au moins une image optique pour chaque distribution lumineuse, à partir de la lumière détectée ; et l'analyse algorithmique des images optiques pour obtenir une information de localisation dudit au moins un nanoémetteur lumineux, objet structuré ou distribution continue.

Un autre aspect de l'invention concerne en outre un procédé optique achromatique de mesure and un appareil optique achromatique pour déterminer la position spatiale d'une pluralité de sources lumineuses ponctuelles le procédé comportant la détection de la lumière émise par la pluralité des sources lumineuses ponctuelles ; et la séparation de la lumière émise sur une pluralité de détecteurs pour des détections simultanées ou séquentielles ; la proportion de la lumière émise par un source lumineuse ponctuelle, canalisée vers un détecteur spécifique, étant dépendant de la position spatiale dudit source lumineuse ponctuelle; et la génération, des images optiques, à partir de la lumière détectée ; et l'analyse algorithmique des images optiques pour obtenir une information de localisation de la pluralité des sources lumineuses ponctuelles.

La description des modes de réalisation de l'invention basée sur la microscopie confocale de fluorescence, peut être étendue *mutatis mutandis*, aux autres modalités de microscopie, confocales ou non, et à la Vision artificielle, qu'elles observent des objets biologiques, de vision artificielle ou autres, et que l'objet consiste de sources ponctuelles, d'objets structurés ou d'objets continus.

BREVE DESCRIPTION DES DESSINS

L'invention va maintenant être décrite en relation avec certains modes de réalisation préférés en référence aux figures illustratives suivantes de sorte qu'elle puisse être mieux comprise.

Avec une référence spécifique à présent aux figures en détail, il est souligné que les indications figurantes sont présentées à titre d'exemple, et à des fins d'illustration de la discussion des modes de réalisation préférés de l'invention et ne sont présentés que dans le but de fournir ce qui est puisse être considéré la description la plus utile et facile à comprendre des principes et des aspects conceptuels de l'invention. À cet égard, aucune tentative n'est faite pour montrer des détails de structure de l'invention plus en détail que ce qui est nécessaire pour une compréhension fondamentale de l'invention, la description prise avec les dessins faisant apparaître à l'homme de l'art comment les différentes formes de l'invention peuvent être réalisées dans la pratique.

Dans les dessins:

Fig, 1 est une représentation simplifiée en perspective d'un microscope à fluorescence confocal de l'art antérieur;

Fig. 2 est une représentation picturale simplifiée d'un système de superrésolution en microscopie de fluorescence;

Fig. 3 est une illustration schématique simplifiée d'un sctup d'un module de diffraction conique, conformément à un mode de réalisation de la présente invention;

Fig. 4 est une représentation picturale simplifiée des deux paradigmes de mesure selon des modes de réalisation de l'invention, utilisant la microscopie confocale et la méthodologie ;

Fig. 5 est une représentation picturale simplifiée d'un mode de réalisation particulier de la méthodologie de mesure, à plateforme de microscopie SRCDP

Fig. 6 est une illustration schématique simplifiée d'un module latéral de superrésolution, conformément à un mode de réalisation de la présente invention;

Fig. 7 présente des tables de distributions lumineuses d'un module de diffraction conique en fonction de la polarisation des polariseurs d'entrée et de sortie pour plusieurs valeurs du paramètre de diffraction conique, po. Ces distributions lumineuses ont été calculées par simulation des équations développées par Berry, [4]

Fig. 8 est une illustration schématique simplifiée d'un module longitudinal de superrésolution. conformément à un mode de réalisation de la présente invention

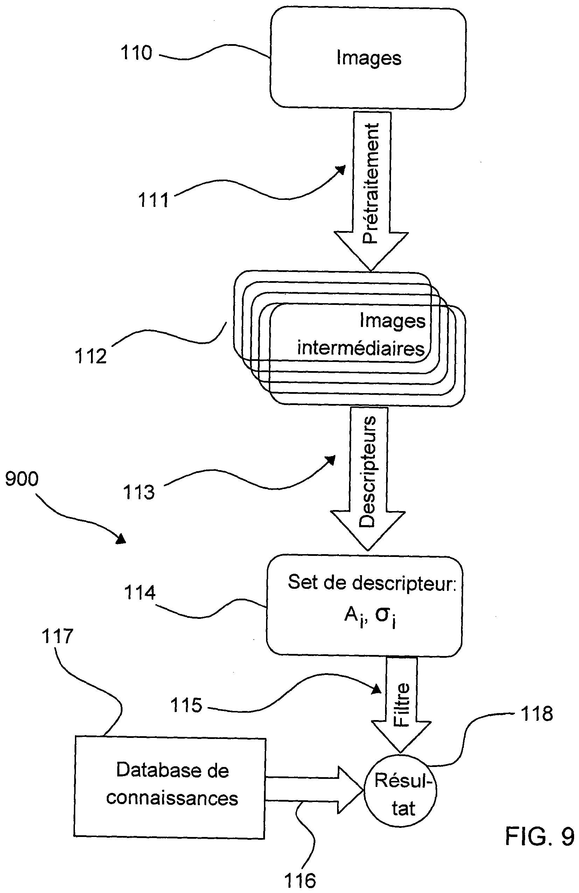

Fig. 9 est une illustration schématique simplifiée d'une méthode d'algorithme de superresolution de données de fluorophores, conformément à un mode de réalisation de la présente invention.

Fig. 10 est une illustration schématique simplifiée du calcul des descripteur

Fig. 11 est une illustration schématique simplifiée du module de contrôle de la plateforme SRCDP.

Dans toutes les figures, des chiffres de référence similaires identifient des pièces similaires.

## Définitions et compléments techniques

Les définitions usuelles sont utilisées dans la description pour: phase et polarisation, polarimétrie, vecteurs et matrices de Jones, paramètres de Stokes et techniques de mesure des paramètres de Jones et de Stokes.

Les définitions usuelles sont utilisées dans la description pour le mode $TEM_{00}$ d'une fibre et les termes anglais, « Photonic Crystal Fiber » - PCF - et « dual core Photonic Crystal Fiber ».

Le centre ou centroïde d'une distribution de lumière est le centre de gravité de l'intensité. Le diamètre d'une distribution de lumière est le diamètre du premier zéro d'intensité, pour des ondes régulières et singulières, sans prendre en compte le zéro central de l'onde singulière.

Deux distributions de lumière sont collocalisées si leurs centres coïncident ou sont séparés par une valeur spatiale faible par rapport à la dimension de la distribution de lumière..

Dans cette demande de brevet, nous utiliserons la longueur d'onde d'émission, comme métrique de base du système.

Dans cette demande de brevet, les définitions usuelles sont utilisées pour les composants optiques suivants : lentille dont la définition est élargie, pour inclure l'ensemble des moyens optiques qui transmettent, réfractent ou réfléchissent la lumière, optique auxiliaire - sous-module optique visant à interfacer et à ajuster soit les paramètres géométriques soit les paramètres de phase et/ou de polarisation entre deux autres sous-modules ou modules optiques -, polariseur, analyseur, lame de retard, séparateur de faisceau beamsplitter en anglais, polarisant et non-polarisant, combineur de faisceau beam combiner en anglais, polarisant et non-polarisant.

Dans cette demande de brevet, les définitions usuelles sont utilisées pour les polariseurs azimutal et radial. Nous étendrons, implicitement ou explicitement, certains développements décrits ultérieurement pour les polariseurs azimutal et radial, à l'ensemble des éléments polarisants variables dans l'espace.

Dans cette demande de brevet, les définitions usuelles, [5], sont utilisées pour les différentes techniques de superrésolution telles que le Stimulated Emission Depletion microscopy (STED), Ground state depletion (GSD), Photoactivated localization microscopy (PALM), Stochastic optical reconstruction microscopy (STORM), Structured illumination microscopy (SIM), Spatially Structured Illumination Microscopy (SSIM)et Förster resonance energy transfer (FRET)et la microscopie de localisation, « Localisation Microscopy » en anglais.

Dans cette demande de brevet, les définitions usuelles sont utilisées pour différentes techniques de Microscopie, de résolution standard ou de superrésolution, fluorescentes ou non, telles que « Computational Microscopy », « Correlative Microscopy », « Cross-platform-microscopy, FCS - Fluorescence Correlation Spectroscopy », FCCS - « Fluorescence Cross-Correlation Spectroscopy », ou PCH - Photon Counting Histogram, RICS « Raster Imaging Correlation Spectroscopy » ou FRAP - « Fluorescence Recovery after Photobleaching) analysis ».

Dans cette demande de brevet, les définitions usuelles sont utilisées pour la Transformée de Hough.

Nous nous référons à un polariseur partiel pour décrire un élément ou un module dont l'absorption est différente pour les deux polarisations linéaires - dichroïsme linéaire - ou pour les deux polarisations circulaires - dichroïsme circulaire.

Nous nous référons à des éléments dynamiques de polarisation ou de phase, pour décrire les moyens optiques dont les propriétés de polarisation ou de phase varient en fonction du temps de façon contrôlée, de façon discrète ou continue.

Ces éléments dynamiques de polarisation ou de phase comprennent, mais ne sont pas limités à: lames d'onde tournante sur leur axe, valves de lumière basées sur des technologies à cristaux liquides, dispositifs électro-optiques, connus aussi comme cellules de Pockels, cellules de Kerr, dispositifs électro-optiques résonnants, dispositifs magnéto-optiques, connus également en tant que cellules de Faraday, dispositifs acousto- ou élasto-optiques ou toute combinaison de ces moyens.

Nous nous référons à des éléments dispersifs de polarisation ou de phase pour décrire des éléments dont l'état de polarisation dépend de la longueur d'onde. Le plus simple des sous-modules dispersifs de polarisation est la lame d'onde multimode ou *épaisse,*

Nous nous referons a l' « algorithme du centroïde » pour décrire la procédure usuelle de mesure du centroïde et éventuellement de la largeur (FWHM - acronyme en anglais pour « Full width Half Maximum ») d'une distribution lumineuse. De nombreux articles ont été publiés sur cet algorithme comme par exemple l'article de Lindegren en 1978, [6].

Cet algorithme a sa source dans l'Astronomie et l'Astrométrie, et a permis la mesure de la position des étoiles avec une très grande précision. Cet algorithme est utilisé aujourd'hui dans l'ensemble de l'instrumentation optique, y compris en Biologie de superrésolution.

Dans ce document, les définitions usuelles sont utilisées pour les composants optoélectroniques suivants : détecteur photoélectrique, CCD, EMCCD, CMOS, SPAD Single Photon Avalanche Diode et matrice de SPAD.

Nous utiliserons les termes:

o image optique, pour la distribution spatiale d'intensité lumineuse,

o image électronique, pour décrire la distribution spatiale de charges pour un CCD, de courant pour un CMOS ou d'événements pour un SPAD, créées par l'image optique, à un instant donné, dans un plan de détection,

o image numérique, pour décrire une matrice de nombres créée par la numérisation de l'image électronique.

Pour simplifier la lecture et la compréhension du texte nous utiliserons aussi le terme d'image pour la sortie d'un détecteur à pixel unique tel qu'un PMT ou SPAD, en la considérant comme une image consistant en un unique pixel.

Lorsqu'aucune ambiguïté n'existe, ou que la distinction entre les trois types d'images n'est pas nécessaire, nous utiliserons le terme simplifié générique d'image.

Nous avons présentés les images en utilisant la terminologie utilisée pour les détecteurs matriciels, tels que les CCD, les EMCCD et les CMOS. Pour les SPAD et les matrices de SPAD, le résultat d'une mesure est une liste ordonnée dans le temps, d'impacts de photons détaillant, pour chaque photon, le temps d'impact et la position de l'impact. Pour simplifier la présentation de ce document, nous inclurons ce cas dans notre définition des images.

Les images détaillées dans ce document peuvent être qualifiées des microimages, des images de taille sensiblement égale à un petit nombre de diamètres du disque d'Airy, typiquement inférieur à 5 diamètres, et/ou à faible nombre de pixels, typiquement 4*4 à 32*32.

Dans une image numérique Aj, les indices m et n représentent les indices des pixels ; l'origine des pixels sera choisie comme la projection du centre du volume d'analyse défini dans un paragraphe ultérieur.

### Polarimétrie et vecteur de Stokes

La polarimétrie se réfère à la mesure de l'état de polarisation de la lumière incidente. L'état de polarisation de la lumière incidente peut être décrit par les paramètres de Stokes, un ensemble de valeurs, introduit par George Gabriel Stokes en 1852, et utilisé en Optique.

### Copropagation de deux faisceaux optiques

De nombreux systèmes et dispositifs optiques utilisent deux faisceaux - ou plus - ayant des propriétés différentes. Les faisceaux peuvent soit interagir entre eux, être projetés séquentiellement ou simultanément. Dans la majorité de ces systèmes et dispositifs, les deux chemins optiques sont séparés physiquement l'un de l'autre. Cette séparation physique créée, au niveau de l'ingénierie du système un ensemble de contraintes, qui bien que résolubles, alourdissent de façon importante la complexité du système et son coût. Nous nous référons à des systèmes à *chemin commun* « common path » en anglais, pour référencer un ensemble de dispositifs dans lesquels les deux faisceaux différenciés se propagent suivant le même chemin physique, à des variations mineures près.

### Champ électrique en coordonnées polaires et modes angulaires

$$\mathbf{E}(\rho,\theta) = A(\rho,\theta) \cdot \exp\left[i\,\varphi(\rho,\theta)\right]\mathbf{u}(\rho,\theta) \qquad (\text{EQ. 1})$$

Il est usuel en Optique de décomposer les composantes du champ, soit son amplitude, sa phase et sa polarisation, en modes orthogonaux, cartésiens ou polaires.

De nombreuses décompositions en modes orthogonaux polaires, tels que les modes Gaussiens, Hermite-Gaussiens, et Laguerre-Gaussiens sont connus de l'Homme de l'Art.

Nous utiliserons principalement dans ce document, la décomposition de l'amplitude du champ électrique en modes Hypergéométriques-Gaussiens HyGG de forme :

$$A(\rho,\theta) \propto \rho^{p+|m|} \exp\left(-\rho^2 + i\ell\theta\right) \qquad \text{(EQ. 2)}$$

Dans cette décomposition, p est le mode radial et $\ell$ l'ordre azimutal.

### Ondes singulières

Une onde singulière comprend une intensité nulle en son centre et une variation de phase azimutale d'un multiple de $2\pi$. Ce thème de recherche en Optique, initié par l'article majeur de J.F Nye et M. Berry, en 1974, [7], est maintenant connu comme l'« optique singulière ». Des exemples d'ondes régulières et singulières sont présentés dans la suite.

### Topologie et distributions lumineuses compactes

Une distribution lumineuse, ponctuelle, sera réputée compacte si elle remplit une des conditions de compacité définies ci-dessous, par deux conditions alternatives et non exclusives :

soit, plus de 75% de l'énergie est contenue dans un cercle de rayon inférieur à 1.75 fois le rayon d'Airy,

soit un domaine lumineux, contenant plus de 65% de l'énergie est délimité par une ligne d'intensité nulle comprise dans un cercle de rayon inférieur à deux fois le rayon d'Airy,

Nous distinguons différentes familles de distributions lumineuses ponctuelles, de topologies différentes :

Les distributions régulières, dans leur définition usuelle en Optique,

Les distributions singulières, dénommées aussi vortices optiques, de charge topologique (ordre azimutal) $\ell$, dans lesquelles la phase varie de 0 à $2\pi\,\ell$, autour de la direction de propagation, $\ell$ étant un entier.

Les distributions d'amplitude à variation azimutale d'ordre $\ell$, dénommées aussi distribution de Laguerre-Gauss,

Les distributions de polarisation et optionnellement de phase à variation azimutale d'ordre $\ell$ dénommées aussi modes de Laguerre-Gauss polarisés radialement.

Deux distributions lumineuses compactes, seront réputées de familles topologiques différentes si elles remplissent au moins une, et n'importe laquelle, des conditions suivantes :

L'une est régulière et l'autre est singulière,

L'une est ponctuelle et l'autre est annulaire,

Les ordres azimutaux $\ell$ de l'amplitude des deux distributions lumineuses diffèrent,

Les ordres azimutaux $\ell$ de la polarisation ou de la phase des deux distributions lumineuses diffèrent.

Alternativement, deux distributions lumineuses projetées sur un volume donné seront réputées de topologies différentes si dans une partie conséquente de la surface illuminée conjointement, les gradients sont de direction inversées.

### Nanoémetteurs lumineux

Un nanoémetteur lumineux est un petit émetteur secondaire, attaché à un objet; il est de taille sensiblement inférieure à une fraction de longueur d'onde, typiquement mais non limité à une taille inférieure à un cinquième de la longueur d'onde ; un nanoémetteur lumineux absorbe l'énergie incidente et réémet de la lumière à la même longueur d'onde que la lumière incidente ou à des longueurs d'onde différentes ; la lumière émise par le nanoémetteur peut être cohérente, partiellement cohérente ou incohérente avec la lumière absorbée. Les principaux exemples de nanoémetteurs lumineux sont les fluorophores et les nanoparticules, mais ils incluent aussi un grand nombre d'autres éléments.
La définition, dans le contexte de l'invention, des nanoémetteurs lumineux est, déterminée par les deux conditions suivantes:

création d'un émetteur lumineux secondaire ponctuel,

et

positionnement prédéterminé de cet émetteur relativement à une entité artificielle, biologique ou organique.

Les mécanismes physiques qui peuvent créer un nanoémetteur sont nombreux ; ils incluent mais ne sont pas limités à l'absorption, la diffusion ou la réflexion, la fluorescence, «émission-déplétion», [8], les phénomènes de photo activation, la fluorescence à deux ou plusieurs photons, la diffusion élastique ou non, la diffusion Raman, ou à d'autres mécanismes physiques connues de l'Homme de l'Art. Nous utiliserons le terme émission de lumière pour décrire l'émission d'ondes électromagnétiques par le nanoémetteur lumineux, que la lumière soit cohérente, incohérente ou partiellement cohérente.

Nous étendrons notre définition des nanoémetteurs, en y incluant les particules diffusantes, absorbantes et réfléchissantes, attachées à une entité biologique ou organique ; l'action d'une particule diffusante, réfléchissante ou absorbante sur le champ électromagnétique peut en effet être décrite comme la création avec une phase inverse, suivant le principe de Babinet, pour une particule absorbante d'un champ secondaire auxiliaire, émergeant de la particule, superposé au champ électromagnétique incident.

Nous nous référerons dans cette demande de brevet aux descripteurs d'un nanoémetteur pour dénoter l'ensemble d'information décrivant un nanoémetteur en tant que source ponctuelle, à un instant déterminé. Etant donné que le nanoémetteur est considéré comme une source ponctuelle, l'ensemble de l'information le représentant contient un nombre limité de paramètres, soit : sa position dans l'espace, son intensité, les caractéristiques spectrales, d'intensité, de cohérence, de phase et de polarisation de la lumière émise par le fluorophore, en fonction de la lumière incidente.

Nous nous référerons dans cette demande de brevet aux descripteurs d'un objet structuré. Par exemple, pour une ligne uniforme, l'ensemble de l'information le représentant contient un nombre limité de paramètres, soit : son orientation dans l'espace, son intensité, les caractéristiques spectrales, d'intensité, de cohérence, de phase et de polarisation de la lumière émise par le l'objet, en fonction de la lumière incidente.

Pour une distribution continue, l'objet est représenté, comme habituel en traitement d'image, par une matrice d'intensités.

Toutefois, dans la majorité des cas, et dans la description de l'invention, nous nous référons, sous la désignation de descripteurs, à un sous-ensemble des descripteurs d'un nanoémetteur comprenant sa position géométrique, son intensité, et le type du fluorophore, lorsque plusieurs populations de nanoémetteurs lumineux, différenciées par exemple par leur spectre d'émission, sont présentes dans un même échantillon. Cette simplification utilisée dans la description n'altère pas le domaine de l'invention qui inclura dans son champ d'application l'intégralité des descripteurs des nanoémetteurs lumineux.

Pour simplifier la compréhension du contexte de l'invention, la suite de la description référence seulement le cas le plus simple, celui dans lequel le nanoémetteur est un fluorophore et l'interaction physique est la fluorescence à un photon. Pourtant, cette description doit être comprise comme une illustration simplifiée d'une description générale des méthodes et concepts applicables à l'ensemble des nanoémetteurs lumineux cités préalablement ou connus de l'Homme de l'Art, quel que soit le phénomène physique sous-jacent.

Il est marquant que le nanoémetteur échantillonne le champ ou l'intensité incidente à une position tridimensionnelle précise, sans influence de l'ensemble de la distribution spatiale de l'intensité incidente. Nous référencerons cette propriété remarquable dans cette demande de brevet comme la capacité d'échantillonnage du nanoémetteur lumineux.

Toutefois, le mode préféré de réalisation de l'invention décrit permet aussi de mesurer des objets structurés et des distributions continues ne possédant pas la capacité d'échantillonnage du nanoémetteur lumineux.

On se réfère de nouveau à la Figure. 1 ; qui représente un ensemble de nanoémetteurs ou d'objets structurés, positionnés sur un objet biologique donné, 15 et 16 d'une part et 17 et 18 d'autre part. Alternativement, la lumière émise peut consister en une distribution continue, non représentée sur la Figure 1, ou en toute combinaison de nanoémetteurs, d'objets structurés ou de distribution continues. L'ensemble de nanoémetteurs, d'objets structurés ou de distribution continues est référencé comme un ensemble «d'objets biologiques lumineux»; ils représentent une carte de l'objet biologique, dans le sens défini par Alfred Korzybski en sémantique générale. Il est toutefois de pratique courante pour simplifier la description, de référencer l'objet biologique lumineux comme l'objet biologique lui-même, lorsqu'aucune ambiguïté ne peut apparaître. L'objet biologique lumineux contient de nombreuses informations pertinentes liées à l'objet biologique, principalement l'information spatiotemporelle, la position de l'objet et son orientation en fonction du temps, et l'information morphologique, par exemple dans le cas de la scission d'une cellule en deux.

Le système de mesure selon au moins un mode de réalisation de l'invention permettra de calculer la carte mesurée, et effectuer une évaluation des descripteurs de toute combinaison de nanoémetteurs, d'objets structurés ou uneévaluation de la distribution spatiale de distributions continues. Cette carte mesurée diffère de la carte originale, en raison du bruit, des conditions de mesure, des limites du système ou de l'incertitude de mesure. Cette information de la carte mesure peut être élaborée ultérieurement en différents niveaux d'abstraction. Ce premier niveau d'abstraction, qui décrit les résultats directs de la mesure, ne contient, a priori, aucune information biologique mais les résultats d'une mesure physique décrite par des nanoémetteurs, d'objets structurés ou de distribution continues, qui pourrait d'ailleurs représenter n'importe quelle entité marquée.

Le second niveau, le niveau d'abstraction géométrique structure les nanoémetteurs, d'objets structurés ou de distribution continues sous forme d'objets géométriques. Il consiste en une description d'objets lumineux et de leurs caractéristiques dynamiques, telles que leur position ou orientation, ou leur morphologie. A ce niveau, l'information est encore une information physique et géométrique décrivant un ensemble d'objets. L'information géométrique utilise la carte mesurée et une information auxiliaire, potentiellement extérieure au système, sur la relation entre les points lumineux et des objets.

Le niveau d'abstraction biologique permet une certaine appréhension de la réalité biologique grâce à une relation constitutive entre les objets mesurés et des entités biologiques correspondantes. Il contient un ensemble d'informations sur l'objet biologique, principalement la position et sa dynamique, sa forme et sa morphologie. L'information biologique utilise la carte mesurée et l'information géométrique, et une information auxiliaire, potentiellement extérieure au système, sur la relation des points lumineux et des objets aux entités biologiques. Un certain nombre de conclusions sur la fonctionnalité biologique de l'échantillon peuvent être obtenues à ce niveau.

Le niveau d'abstraction fonctionnel permet une appréhension de la réalité biologique. Il consiste en une information fonctionnelle, décorrélée des informations géométriques, et répondant à des interrogations en termes et jargon biologique, tel que : « le virus a-t-il pénétré la cellule ? ».

Un niveau additionnel d'information peut être défini incluant le processus de contrôle et d'instrumentation ; en effet, un processus de contrôle et d'instrumentation plus évolué peut être défini, permettant de remonter à une information biologique plus structurée, à travers une automatisation du processus d'acquisition de données. Un exemple de tels processus est décrit par Steven Finkbeiner, sous la dénomination de « Robotic Microscopy systems », [9].

Cette description des niveaux d'abstraction, définis dans cette demande, a été rédigée, pour simplicité, pour la Biologie. Elle est applicable, *mutatis mutandis*, à tous les domaines de la Vision, biologique et médicale, artificielle et industrielle.

### Diffraction conique

La diffraction ou réfraction conique, est un phénomène optique prédit par Hamilton, [10], en 1832, et confirmé expérimentalement deux mois après par Lloyd, [11]. La diffraction conique décrit la propagation d'un faisceau de lumière dans la direction de l'axe optique d'un cristal biaxe.

En effet, dans un cristal biaxe, l'axe optique est positionne dans le plan créé par le axes cristallographiques x et z; l'angle par rapport à l'axe z est $\theta_0$, dépendant des trois indices de réfraction suivant la loi,

$$\tan \theta_0 = \sqrt{\frac{n_1^{-2} - n_2^{-2}}{n_2^{-2} - n_3^{-2}}}.$$

Hamilton a prédit que la lumière émerge sous la forme d'un cône creux de rayons. La réfraction conique est une étape importante de l'histoire des sciences et a joué un rôle dans la démonstration de la théorie des ondes électromagnétiques.

Un regain d'intérêt pour la diffraction conique eu lieu dans les dernières années du XXe siècle; elle a abouti à une théorie complète par Berry et al.[4, 12, 13], validée expérimentalement en 2009, [14]. Nous suivons ici la théorie, la terminologie et les définitions de Berry, y compris le changement de dénomination de l'effet physique, à partir de ce point, utilisant le terme plus rigoureux de diffraction conique.

Toutefois, il est important de noter, que le terme « diffraction conique » est aussi utilisé pour deux autres techniques n'ayant aucune relation avec la technique que nous décrivons :

• la diffraction en incidence oblique est aussi appelée diffraction conique

• Le terme anglais, « conical diffraction mounting » référence un montage de réseau de diffraction dans lequel le réseau est monté sur une surface courbe.

La diffraction conique a suscité un intérêt considérable au niveau théorique et expérimental, mais, « aucune application pratique semble avoir été trouvée », [15].

Historiquement, la diffraction conique a été observée dans les cristaux biaxes. Nous nous référons à un cristal conique pour décrire un cristal biaxe inorganique ou organique, présentant le phénomène de diffraction conique. Quelques exemples non limitatifs de cristaux biaxes comprennent, l'Aragonite, KTP, KTA, KBiW, LBO, KNbO3, MDT, YCOB, BIBO, DAST, POM, NPP, LAP, LiInS2 et LiInSe2.

D'autres effets existent, créant une diffraction conique intrinsèquement plus faible ou des effets créant une diffraction conique le long d'un trajet optique court. Ces effets comprennent les polymères, les cristaux liquides et les effets de biréfringence induite par voie externe. Les polymères comprennent mais ne sont pas limités à: les feuilles de polymère étirées et à la polymérisation en cascade, [16]; les cristaux liquides comprennent mais ne sont pas limités à: la phase nématique biaxe thermotrope, [17]; les effets externes de biréfringence induite comprennent, mais ne sont pas limités à: l'application d'un champ électrique créant un effet électro-optique, sur un cristal cubique non-centrosymétrique, [18], et le modulateur photo-élastique, [19].

La phase dans le vortex créé par diffraction conique est une phase géométrique et est donc intrinsèquement achromatique.

Les effets chromatiques additionnels sont la dispersion de l'axe optique et la dépendance des différents paramètres présents dans les équations de la diffraction conique en fonction de la longueur d'onde.

La dispersion chromatique de l'axe optique crée un angle de l'axe optique du cristal, dépendant de la longueur d'onde, par rapport à l'axe optique du système. Elle est due, dans la majorité des cas, à la dispersion des indices de réfraction.

Les indices de longueur d'onde dépendent de la longueur d'onde, suivant les équations de Sellmeier. L'angle de l'axe optique varie donc en fonction de la de longueur d'onde, il crée un angle d'inclinaison chromatique de l'axe optique dans le plan créé par le axes x et z cristallographiques.

Il dépend fortement du type de cristal. Dans un cristal de MDT, le cristal achromatique plus disponible dans le visible, la direction de l'axe optique varie de moins de 0,1 degrés entre 540 nm et 700 nm. Dans un cristal de KTP, le cristal plus achromatique dans l'IR de télécommunication, l'angle varie de 0,05 degrés, entre 1,350 nm et 2,100 nm, et moins de 0,02 degrés sur la fenêtre de télécommunication - 1450 nm à 1650 nm. D'autre part, $\theta_0$ peut varier fortement en fonction de la longueur d'onde dans certains cristaux organiques comme le DAST.

La compensation de la dispersion chromatique de l'axe optique peut être effectuée en utilisant l'optique géométrique, La dispersion chromatique de la direction de l'axe optique peut être compensée en utilisant la dispersion naturelle de verre ou d'autres matériaux optiques, ou en utilisant des réseaux ou de prismes. La procédure d'achromatisation ne diffère pas, dans ce cas, de la procédure standard de correction de toute aberration chromatique en optique géométrique, Cette procédure peut être conçue et optimisée en utilisant l'un des logiciels optiques commerciaux disponibles en définissant des fonctions cibles adéquates.

Un concept différent d'achromatisation, est basé sur l'utilisation de deux matériaux différents, ayant des effets de diffraction coniques inverses, à haute et basse dispersions chromatiques.

La dépendance des différents paramètres présents dans les équations de la diffraction conique en fonction de la longueur d'onde, modifie les paramètres d'efficacité des effets de diffraction conique.

Pour des cristaux coniques linéaires, définis ultérieurement, la fonction de transfert fondamentale est identique à un et ainsi trivialement indépendante de longueur d'onde. La fonction de transfert de vortex peut être représentée comme un facteur d'efficacité chromatique égal à $\tau\,(\lambda)$.

Pour des cristaux coniques sinusoïdaux, définis ultérieurement, le comportement est différent de celui de cristaux linéaires coniques: l'onde fondamentale dépend de la longueur d'onde et l'onde vortex est presque indépendante de celui-ci. Effet, les simulations montrent que la forme de l'onde vortex n'est que légèrement modifiée par une variation du paramètre, $\theta_0$ de 0,5 à 0,75. Par contre, la forme de l'onde fondamentale dépend de longueur d'onde et cette effet doit être pris en compte dans la conception de systèmes utilisant les deux ondes, fondamentale et vortex.

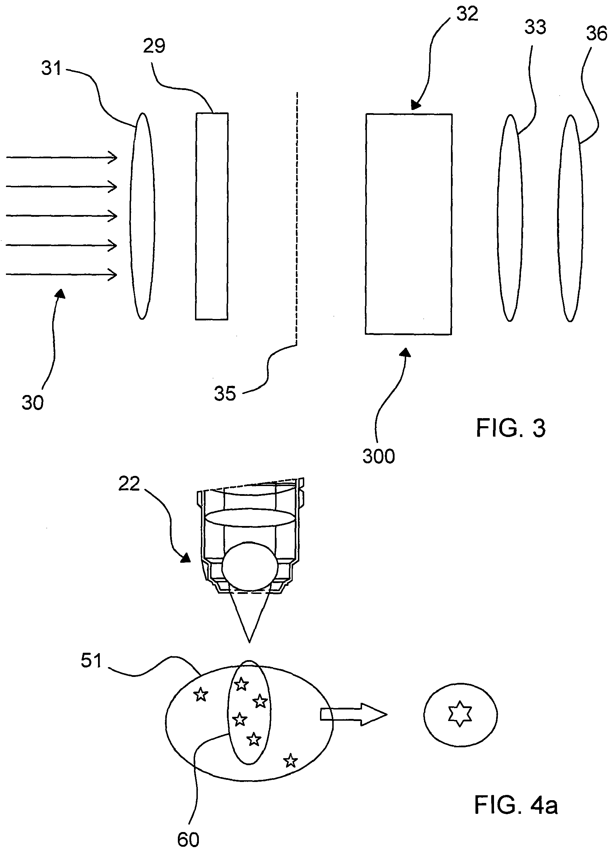

On se réfère maintenant à la figure 3, qui est une illustration schématique simplifiée d'une configuration d'un module de diffraction conique, 300, conformément à un mode de réalisation de la présente invention.

La lumière incidente, 30, est supposée être parallèle, même si d'autres conditions peuvent être adaptées en utilisant des moyens optiques simples. Le setup lui-même comprend une première lentille, 31, un cristal conique, 32 et une lentille optionnelle 33. Les deux premières lentilles, 31 et 33, sont configurées de préférence sous forme d'un télescope Kepler 1:1. L'ouverture numérique de la première lentille, 31, dans l'espace image, représentée ci-dessous par $U_0$, détermine les paramètres de l'effet conique à travers le rayon conique, défini ci-dessous. Un plan d'imagerie conique, 35, est placé au plan focal de la première lentille 31; un polariseur partiel, 29, décrit ci-dessus, peut également être ajouté. Une lentille de focalisation, 36, détermine l'échelle finale de la tache lumineuse. Elle peut être un objectif de microscope externe, ou peut être fusionnée avec la seconde lentille 33, telle qu'implémentée dans un autre mode de réalisation de cette invention. La répartition de la lumière projetée sur l'échantillon est, en première approximation, en négligeant les effets vectoriels, une image réduite de la distribution de la lumière dans le plan image. L'influence des effets vectoriels sera discutée ci-dessous. Le rapport d'échelle est déterminé pour un objectif de microscope par son grossissement.

Soit la variable spatiale, R, au plan d'imagerie conique, et le vecteur d'onde, U, représentées en coordonnées cylindriques par R, $\theta_R$ et U, $\theta_U$. Soit $\lambda$, la longueur d'onde de la lumière.

Le comportement du champ électrique émergeant du cristal conique 32 est entièrement caractérisé par un seul paramètre, le rayon conique, $R_0$; le rayon conique dépend du matériau et l'épaisseur du cristal.

Nous introduisons des paramètres normalisés permettant à la description ci-dessous de la répartition de la lumière, d'être valide à la fois au plan d'imagerie conique et au foyer de l'objectif du microscope, dans les limites de la théorie scalaire de diffraction.

La position radiale normalisée, p, le vecteur d'onde normalisé, u, représentés en coordonnées cylindriques par p, $\theta_R$ et u, $\theta_U$, et le rayon normalisé conique, $\rho_0$, sont donnés par:

$$\boldsymbol{\rho} = 2\frac{\mathbf{R}}{\lambda}U_0, \qquad \mathbf{u} = \frac{\mathbf{U}}{U_0}; \qquad \rho_0 = 2\frac{R_0}{\lambda}U_0. \tag{EQ. 3}$$

$$\boldsymbol{\rho} = 2\frac{\mathbf{R}}{\lambda}U_0, \qquad \mathbf{u} = \frac{\mathbf{U}}{U_0}; \qquad \rho_0 = 2\frac{R_0}{\lambda}U_0. \tag{EQ. 4}$$

$U_0$ étant l'ouverture numérique du système. Pour $\rho_0 < 2$, nous faisons référence ici à un cristal conique mince; pour $\rho_0 \ll 1$, nous nous référons ici à la forme d'un cristal conique mince linéaire, et pour $\rho_0 < 0.5$ à un cristal conique mince sinusoïdal.

L'onde émergeante du cristal conique mince, $E(\rho, \theta_R)$, exprimée en coordonnées normalisées, est constituée par la superposition de deux ondes, référencées ici comme l'onde fondamentale, $E_F(\rho)$, une onde régulière, et l'onde vortex, $E_V(\rho,\theta_R)$, une onde singulière; ces deux ondes sont cohérentes l'une avec l'autre, collocalisées, polarisées circulairement et de chiralité inverse :

$$\mathbf{E}(\rho,\theta_R) = \mathbf{E}_F(\rho) + \mathbf{E}_V(\rho,\theta_R) = E_F(\rho)\begin{pmatrix}1\\-i\end{pmatrix} + F_V(\rho)\exp\left(-i\theta_R\right)\begin{pmatrix}1\\i\end{pmatrix} \tag{EQ. 5}$$

$$\mathbf{E}(\rho,\theta_R) = \mathbf{E}_F(\rho) + \mathbf{E}_V(\rho,\theta_R) = E_F(\rho)\begin{pmatrix}1\\-i\end{pmatrix} + F_V(\rho)\exp\left(-i\theta_R\right)\begin{pmatrix}1\\i\end{pmatrix} \tag{EQ. 6}$$

Dans cette équation, $E_F(p)$ est l'amplitude fondamentale scalaire, $F_V(\rho)$ est l'amplitude scalaire de vortex réduite; elles sont donnés par:

$$E_F(\rho) = 2\pi \int du\, u \cos(\rho_0 u) J_0(\rho u); \quad F_V(\rho) = 2\pi \int du\, u \sin(\rho_0 u) J_1(\rho u). \tag{EQ. 7}$$

Pour un cristal conique mince linéaire, l'onde fondamentale peut être approximée par une tache d'Airy et l'onde de vortex peut être approximée à un vortex linéaire, représenté par:

$$F_V(\rho) = 2\pi\rho_0 \int du\, u^2\, J_1(\rho u). \tag{EQ. 8}$$

En supposant que l'action du polariseur partiel, 29, est la mise à l'échelle de l'onde vortex par $\alpha$, les paramètres de Stokes peuvent être déduits des équations précédentes, $\beta$ étant l'angle de la polarisation lineaire:

$$S_0 = \left(E_F(\rho)\right)^2 + \left(\alpha^2 F_V(\rho)\right)^2$$
$$S_1 = 2\alpha E_F(\rho)F_V(\rho)\sin\theta_R; \; S_2 = 2\alpha E_F(\rho)F_V(\rho)\cos\theta_R; \tag{EQ. 9}$$
$$S_3 = \left(E_F(\rho)\right)^2 - \left(\alpha^2 F_V(\rho)\right)^2$$

$$\beta = \theta_R;$$

Nous utiliserons les termes d'un objet parcimonieux « sparse object » en anglais, pour décrire un ensemble d'émetteurs lumineux ponctuels, d'un nombre inférieur à douze, positionné dans un volume dont la taille, dans chacune des dimensions, est inférieure à 3 longueur d'ondes, à la longueur d'onde d'émission ou de réflexion des émetteurs. Le volume de taille inférieure à 3 longueurs d'ondes, qui contient l'objet clairsemé, sera référencé comme un volume d'analyse de taille réduite.

Nous utiliserons le terme d'objet continu pour décrire un ensemble d'émetteurs lumineux ponctuels ou continus, ne remplissant pas les conditions décrites précédemment dans la définition de l'objet clairsemé.

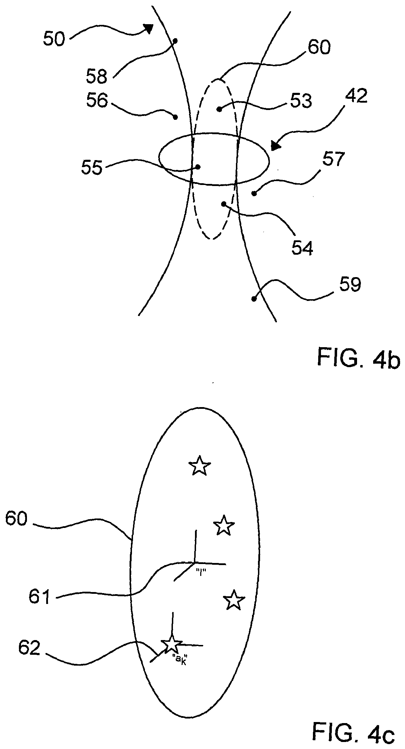

On se réfère maintenant aux figures 4a à 4c qui sont une représentation simplifiée du concept de confinement volumique du microscope confocal.

La fonctionnalité du confinement volumique est de limiter, dans les trois dimensions spatiales, la région observée de l'échantillon à un volume de taille la plus petite possible, le volume d'analyse. La fonctionnalité du confinement volumique limite le volume d'analyse par la combinaison de deux effets : le confinement de la lumière projetée sur une petite surface, idéalement de la taille de la tâche d'Airy, 50, et l'élimination de la lumière défocalisée par le trou confocal, 28 de la Figure 2. La superposition de ces deux effets crée un petit volume, le volume d'analyse, 60. Ce volume détermine la taille de la cellule élémentaire détectée par le système.

Considérons un objet parcimonieux ou continu, 51, consistant en un ensemble de nanoémetteurs, 53 à 59. Les nanoémetteurs 53 à 55 positionnés dans le volume d'analyse 60, et seulement eux, sont à la fois excités par la source lumineuse et les photons émis par eux arrivent au module du détecteur. Les nanoémetteurs ne se trouvant pas dans le cône d'éclairage, 56 et 57, ne sont pas illuminés par la lumière incidente. La lumière émise par les nanoémetteurs 58 et 59 ne se trouvant au plan conjugué du trou confocal, 28 de la

Figure 2, est bloquée, presque intégralement, par le trou confocal, 28 de la Figure 2.

Deux repères cartésiens différents sont définis dans le système, Figure 4c:

Le référentiel « i » : Les axes référencés « i » représentent un repère cartésien centré sur le centre du volume d'analyse, 61.

Le référentiel « a » : Les axes référencés « a » représentent un repère cartésien centré, pour chaque nanoémetteur lumineux, sur le nanoémetteur lumineux considéré comme un point discret, 62,

Lorsque, en utilisant un mode de réalisation de l'invention qui sera décrite ultérieurement, on projette un vortex sur l'échantillon sous analyse, le centre du vortex sera en général défini comme le centre du volume d'analyse.

Le microscope confocal permet de limiter le volume d'analyse en utilisant le confinement volumique décrit précédemment. Le confinement volumique est obtenu par la combinaison de deux effets : le confinement de la lumière projetée sur une petite surface, idéalement de la taille de la tâche d'Airy, 50, et l'élimination de la lumière défocalisée, par le trou confocal, 41. La superposition de ces deux effets crée un petit volume, le volume d'analyse, 60. Ce volume détermine la taille de la cellule élémentaire détectée par le système.

Au moins un mode de réalisation de l'invention utilise la diffraction conique pour réaliser les modules optiques fondamentaux de la technique. Toutefois, des implémentations alternatives, remplaçant les modules basés sur la diffraction conique, par des modules basés sur d'autres concepts optiques, sont en mesure de fournir les mêmes fonctionnalités. Elles font partie du champ de cette invention. Les concepts optiques alternatifs comprennent mais ne sont pas limités aux cristaux uniaxes, aux réseaux à pas inférieur à la longueur d'onde, « subwavelength gratings », aux modes de laser structurés, aux composants holographiques et à d'autres techniques connues de l'Homme de l'Art,

Les concepts, techniques et dispositifs optiques et optoélectroniques, qui peuvent être utilisé dans des modes de réalisation de l'invention sont décrits dans par exemple le livre écrit par D. Goldstein, «Polarized light», [20], le « Handbook of Confocal Microscopy », [21], le « Handbook of Optics », [22].

### Sémaphore optique

Nous utilisons dans ce mode de réalisation de l'invention le terme de sémaphore optique pour décrire un élément optique, passif ou actif, capable de canaliser la lumière incidente vers différents canaux ou détecteurs en fonction d'une propriété de la lumière. Le cas le plus simple est une lame dichroïque qui sépare la lumière en deux canaux en fonction de la longueur d'onde.

Nous utilisons dans ce mode de réalisation de l'invention le terme, en anglais, de « Position dependent Optical Sémaphore » - acronyme PDOS - ou sémaphore optique dépendant de la position - pour décrire un sémaphore optique qui canalise la lumière en fonction de la position du point émetteur. Le PDOS sera déterminé par une série de fonctions de transfert, $T_i(x,y,z)$ dépendant, pour chaque canal ou détecteur i, de la position de l'émetteur (x,y,z), dans un volume de référence. L'ordre du PDOS sera le nombre de canaux ou détecteurs. Le PDOS sera « sans perte », lossless en anglais, dans un volume d'analyse, si la somme des fonction de transfert, Ti(x,y,z) est égale à l'unité dans le volume d'analyse.

Le trou confocal, décrit par Minsky, [23], est considéré dans ce mode de réalisation de l'invention comme un PDOS dégénéré d'ordre 1.

Dans la majorité des cas la dépendance du PDOS est une fonction complexe des positions latérales et longitudinale. Toutefois, nous utilisons dans des modes de réalisation de l'invention le terme, en anglais, de « Longitudinal Position dependent Optical Semaphore » - acronyme LPDOS - ou sémaphore optique dépendant de la position longitudinale - pour décrire un sémaphore optique qui canalise la lumière en fonction de la position longitudinale du point émetteur. Le LPDOS sera déterminé par une série de fonctions de transfert, Ti(z) dépendant, pour chaque canal ou détecteur i, de la position longitudinale de l'émetteur (z), dans un volume de référence. L'ordre du PDOS sera le nombre de canaux ou détecteurs. Le LPDOS sera « sans perte », lossless en anglais, dans un volume d'analyse, si la somme des fonction de transfert, Ti(z) est égale à l'unité dans le volume d'analyse. Le LPDOS sera souvent couplé à un stop, limitant le champ latéral du système.

*Transmission par des fibres optiques*

Une utilisation principale des fibres optiques est la transmission exclusive du mode TEM$_{00}$. Toutefois, certaines configurations de fibres optiques, principalement mais non exclusivement basées sur des fibres dites « Photonic Crystal Fiber » (en anglais) - acronyme PCF - permettent la transmission simultanée ou non, de modes plus complexes, y compris des modes de vortex, ayant une vorticité égale ou inférieure à 2, [24]. Il serait donc possible de déporter les distributions optiques créées par la difraction conique à l'aide de fibres optiques, permettant une simplification majeure du système optique.

La possibilité de déporter les distributions optiques créées par la réfraction conique à l'aide de fibres optiques permet l'application des modes de réalisation de l'invention à de nombreuses applications supplémentaires, par exemple mais non limité à l'observation gastrique ou gastroentérologique, et à l'observation du colon et des voies urinaires.

De plus, certaines fibres les « dual-core photonic crystal fibers », en anglais, [25], permettent une interaction entre deux modes, l'un d'entre eux pouvant être un vortex, et fournissent un mécanisme physique supplémentaire pour créer des fonctions de transfert diversifiées.

*Mesures à plusieurs longueur d'onde*

Dans des modes de réalisation de l'invention l'objet peut être éclairé en lumière monochromatique et en utilisant par exemple un laser classique ou une lampe monochromatique. Cette configuration est simple, car un des paramètres principaux du système est fixe et bien déterminé. Toutefois, dans d'autres modes de réalisation de l'invention l'objet peut aussi être éclairé à plusieurs longueurs d'onde, soit de façon discrète, en utilisant par exemple plusieurs lasers, soit de façon continue, en utilisant par exemple une lampe ou un laser ayant un spectre plus large.

De nombreux systèmes de superresolution existants mesurent simultanément ou séquentiellement à plusieurs longueurs d'ondes. En effet, il est possible de marquer des éléments similaires ou différents avec des fluorophores ayant des réponses spectrales différentes, permettant de les reconnaître et de les séparer. Il est important de présenter deux cas différents :

- L'utilisation de marqueurs fluorescents, émettant à deux longueurs d'ondes différentes, excités par la même longueur d'onde

- L'utilisation de marqueurs fluorescents émettant à deux longueurs d'ondes différentes, excités par deux longueurs d'ondes différentes

Il faut noter que dans le cas de l'utilisation de marqueurs fluorescents, émettant à deux longueurs d'ondes différentes, excités par la même longueur d'onde, le problème du recalage entre les mesures d'une longueur d'onde par rapport à la seconde, sont intrinsèquement inexistants car l'information de position de superrésolution est dérivée de la projection de la lumière, qui est parfaitement identique.

Ceci permet une calibration relative de la position de fluorophores à deux longueur d'onde différentes, avec une précision limitée seulement par le système expérimental de calibration, enlevant le problème majeur du recalage entre deux images de longueur d'onde différentes.

La possibilité d'achromatiser les systèmes optiques basés sur la diffraction conique en font un outil de choix pour l'implémentation de systèmes optiques, a chemin commun, pour de nombreuses applications, et plus particulièrement pour des modes de réalisation de l'invention décrits.

L'achromatisation est aussi possible pour les systèmes optiques basés sur les cristaux uniaxes, et pour presque toutes les implémentations alternatives de cette invention, avec, pour chacun d'entre eux, une complexité pratique plus ou moins grande.

D'autres systèmes de fluorescence existants utilisent une lumière ayant un contenu spectral plus large, pour réduire des artefacts, et principalement les effets de speckle.

Corollairement, les propriétés spectrales des protéines fluorescentes permettent de mesurer le potentiel des interactions moléculaires intracellulaires en utilisant la technique de transfert d'énergie de Förster - Förster (Fluorescence) Resonance Energy Transfer (FRET).

### *Interactions non-linéaires*

L'interaction non linéaire entre deux faisceaux de lumière, dans un milieu matériel, est un méthode de super-resolution décrit par exemple par Hell, [8] ou par Schermelleh et al. [3]. Ces interactions non linéaires incluent mais ne sont pas limitées aux phénomènes d'interaction à deux photons, aux effets d'émission-déplétion sur lesquels sont basés la technologie STED ou GSD, et aux effets de photoactivation, sur lesquels sont basés les techniques stochastiques, naturels ou induits par un faisceau optique supplémentaire, telles que le « stochastic blinking », le PALM et le STORM.

### *L'information*

### *Information a priori et information complémentaire*

Des modes de réalisation de l'invention décrite permettent l'intégration et la fusion d'information supplémentaire externe à la plateforme décrite, optique ou contextuelle, pour obtenir une amélioration de la précision de l'information recueillie de l'échantillon pour l'un quelconque des niveaux d'abstraction cités : la carte, le niveau d'abstraction géométrique, le niveau d'abstraction biologique et le niveau d'abstraction fonctionnel.

Plus généralement, la diversité spectrale, l'information obtenue a plusieurs longueurs d'onde, la diversité de polarisation, et l'information obtenue en projetant différents états de polarisation, étend l'étendue de l'information disponible.

Le fait que l'absence d'énergie, par exemple dans le cas du zéro du vortex, est une information pertinente, ouvre des possibilités supplémentaires à l'acquisition d'information sans « coût » en nombre de photons. Cette situation a une grande importance pour la détection de phénomènes de fluorescence faible, comme par exemple l'autofluorescence.

Nous introduisons le concept d'information intégrale optique, l'information qui pourrait être récupérée à partir de mesures optiques ou par ondes électromagnétiques, sur une cible, par un observateur, à partir d'un point de vue donné. Cette information contient de très nombreux paramètres de l'objet, liés à sa position, les matériaux qui la composent, sa température, ou son orientation.

L'information intégrale optique ne contient pas, par contre, des informations sur des régions de l'objet n'ayant pas de chemin optique vers l'observateur, par exemple un élément positionné dans une boite opaque, ou une information physique qui n'a pas de transcription optique.

### *Mesures superrésolues et limite de diffraction*

Il a été considéré longtemps que l'optique limitait intrinsèquement la résolution de tout système optique, à travers la limite de diffraction. L'apparition de techniques de superrésolution - dans différents domaines et sous différentes dénominations - a montré qu'il est possible de dépasser cette limite de diffraction, par différents moyens.

Des modes de réalisation décrits dans cette invention, tels que la détection de la présence de deux points de même intensité, par projection d'un vortex au centre de gravite de la distribution lumineuse créée par l'onde fondamentale, ne sont pas limités en résolution a priori et pourrait idéalement - avec un nombre de photons infini - obtenir n'importe quelle résolution, comme nous le décrirons ultérieurement pour un cas spécifique.

### *Acronymes*

Nous utiliserons dans cette demande de brevet l'acronyme, SRCD, « Super Resolution using Conical Diffraction » pour nommer la plateforme, les modules et systèmes spécifiques à l'implémentation préférée de cette invention.

Nous utiliserons dans cette demande de brevet l'acronyme, PSIT, méthode de projection d'une séquence d'intensités lumineuses différant topologiquement, soit en anglais : « Projected Sequence of Intensities with various Topologies »

Nous utiliserons dans cette demande de brevet l'acronyme, PDOS, sémaphore optique à dépendance spatiale, soit en anglais : «Position Dependent Optical Semaphore».

La plateforme SRCDP, « Super Resolution using Conical Diffraction Platform», est une plateforme de Microscopie implémentant la méthodologie de mesure en utilisant des modules optiques basés sur la diffraction conique. La plateforme SRCDP est l'implémentation préférée de la méthodologie de mesure

Nous utiliserons dans cette demande de brevet l'acronyme, LatSRCS pour nommer le module optique implémentant la méthode PSIT à l'implémentation préférée de cette invention.

Nous utiliserons dans cette demande de brevet l'acronyme, LongSRCS pour nommer le module optique implémentant la méthode PDOS à l'implémentation préférée de cette invention.

Des modes de réalisation de la présente invention consistent en une nouvelle méthodologie de mesure, la méthodologie de mesure, et un ensemble cohérent de méthode systémiques et algorithmiques, d'outils matériels, d'outils algorithmiques et logiciels permettant son implémentation.

La méthodologie de mesure selon des modes de réalisation permet l'acquisition optique de données nanométriques et d'images de superrésolution. La méthodologie de mesure est principalement, mais non exclusivement, utilisée pour la mesure de données superrésolues d'échantillons biologiques marqués par des nanoémetteurs.

La méthodologie de mesure selon ce mode de réalisation de l'invention peut être implémentée en utilisant différentes procédés de mesure et de traitement algorithmique, décrites ci-dessous. Entre autres, la méthodologie de mesure peut être implémentée en utilisant conjointement ou séparément deux nouvelles méthodes de mesure, complémentaires, référencées PSIT et PDOS.

Certains modes de réalisation de l'invention concernent aussi un système - une plateforme de microscopie la plateforme SRCDP - implémentant la méthodologie de mesure en utilisant les méthodes de mesure PSIT et PDOS. La plateforme SRCDP est l'implémentation préférée de la méthodologie de mesure.

La plateforme SRCDP, décrite en détails par la suite, consiste principalement en deux modules matériels, deux modules optiques nouveaux et complémentaires, les modules optiques LatSRCS et LongSRCS, montés sur un microscope, et un module algorithmique, SRCDA, permettant de reconstruire l'information superrésolue de l'échantillon. De plus la plateforme SRCDP, inclut un module de détection amélioré, un module de contrôle du système, et un support informatique et logiciel.

La méthodologie de mesure consiste en l'utilisation conjointe des deux méthodes de mesure, les méthodes PSIT et PDOS. Toutefois, dans certaines applications, l'utilisation des deux méthodes peut ne pas être nécessaire ; nous nous référerons dans ce cas à la méthodologie de mesure simplifiée qui fait partie du champ d'application de cette invention.

Certains modes de réalisation de l'invention concernent aussi des méthodes d'utilisation de la méthodologie de mesure pour la mesure de distribution de nanoémetteurs et de fluorophores, et du suivi en deux ou trois dimensions de nanoémetteurs.

De plus, certains modes de réalisation de l'invention concernent un nombre important de variantes d'implémentations de la méthodologie et des méthodes PSIT et PDOS, de la plateforme SRCD, des modules optiques LatSRCS et LongSRCS et de l'algorithmique, SRCDA.

**Le paradigme de mesure de la méthodologie**

La fonctionnalité du microscope confocal, décrite par Minsky, [19], et explicité antérieurement, est de limiter, dans les trois dimensions spatiales, la région observée de l'échantillon à un volume de taille la plus petite possible, le volume d'analyse.

En corollaire, dans un microscope de fluorescence confocal, l'information acquise est une valeur unique d'intensité pour l'ensemble du volume d'analyse, conçu comme une entité unique. Plus clairement, l'information détaillée de la position des nanoémetteurs à l'intérieur du volume d'analyse n'est pas accessible, a priori, dans un microscope confocal. Il était généralement admis qu'aucune information optique additionnelle ne pouvait être créée qui aurait permis une discrimination supplémentaire à l'intérieur du volume éclairé.

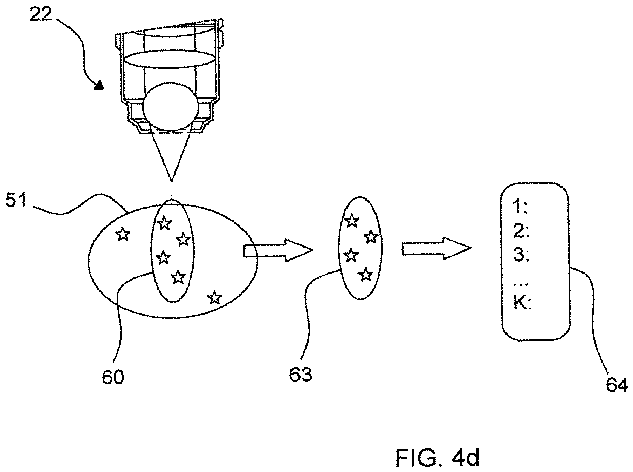

On se réfère maintenant à la Figure 4d, qui est une représentation conceptuelle simplifiée du paradigme de mesure de la méthodologie selon au moins un mode de réalisation de l'invention. Le paradigme de mesure de cette méthodologie est beaucoup plus ambitieux que celui du microscope confocal de fluorescence, représenté schématiquement dans la Figure 4a.

Dans la figure. 4d, un volume d'analyse, 60, est créé au plan focal de l'objectif du microscope, 22 ; il contient un objet clairsemé, 51, consistant en plusieurs nanoémetteurs, 53 à 59; le résultat du système implémentant la méthodologie est un objet parcimonieux reconstruit, 63, et une liste des nanoémetteurs et une liste de leurs attributs, 64. Toutefois, l'utilisation d'un objet parcimonieuxdans la figure 4d est à fin d'illustration et cette figure aurait parfaitement pu représenter un objet continu, *mutatis mutandis.*

Un système implémentant la méthodologie selon au moins un mode de réalisation de l'invention est capable de récupérer de manière indépendante et avec précision les attributs de plusieurs nanoémetteurs dans un volume lumineux de dimension similaire à celle de la microscopie confocale. Pour atteindre cet objectif, la méthodologie selon des modes de réalisation de l'invention est conçue pour créer optiquement pour chaque volume éclairé, une grande quantité d'informations, dans les deux domaines temporel et spatial.

Le processus le plus développé de la méthodologie de mesure selon un mode de réalisation de l'invention peut être segmenté en sept étapes, cinq étapes optiques, une étape de détection optoélectronique et une étape algorithmique.

Étapes optiques :

- projection d'une séquence de distributions lumineuses compactes de topologies différentes, sur le volume d'analyse

- émission de lumière fluorescente par les nanoémetteurs

- Imagerie des fluorophores sur le plan focal

- Séparation de la lumière réémise en plusieurs canaux indépendants détectés simultanément et/ou séquentiellement

- optionnel limitation dans le plan focal de la lumière analysée Étape de détection

- Détection de l'intensité lumineuse par un ou plusieurs détecteurs photoélectriques ponctuels ou matriciels

Étape algorithmique :

- Soit

   o Reconstruction de la liste de nanoémetteurs, constituant l'objet clairsemé, et de leurs attributs à partir de l'ensemble des images détectées,

   o Reconstruction de la distribution spatiale (ou spatio-temporelle, si on prend en compte la dynamique) constituant l'objet continu, à partir de l'ensemble des images détectées,

Suivant un autre mode de réalisation de la présente invention, la méthodologie de mesure consiste en la réalisation des étapes optiques décrites antérieurement, en omettant soit la première étape optique soit la quatrième étape optique.

Le processus optique composé implémentant la méthodologie comprend la réalisation d'une série de processus optiques de mesure, contrôlés par le module de contrôle du système, en variant les séquences d'illumination et/ou les fonctionnalités des canaux et/ou la position de la séquence d'illumination en fonction de données mesurées ou d'information externes. Un exemple de processus optique composé implémentant la méthodologie selon un mode de réalisation de l'invention sera détaillée ci-dessous.

**Méthode de mesure PSIT**

Une méthode de mesure PSIT selon un mode de réalisation de l'invention, une séquence de distributions lumineuses de topologies différentes est projetée sur le volume d'analyse.

La méthode de mesure PSIT réalise les fonctions suivantes :

∘ Projection d'une séquence, la séquence d'émission, de distributions lumineuses compactes de familles topologiques différentes sur un échantillon, ; et

∘ Pour chaque distribution lumineuse compacte :

- émission de lumière par les nanoémetteurs de l'échantillon,

- création, à l'aide de l'optique du microscope, d'une image optique,

- acquisition de l'image optique par un détecteur photoélectrique et création d'une image numérique.

Plus en détails, il est à noter que :

La séquence d'émission consiste en, au moins deux, distributions lumineuses ponctuelles, de familles topologiques différentes

La séquence d'émission est projetée sur un échantillon biologique marqué par des nanoémetteurs,. L'émission lumineuse émergente de chaque nanoémetteur est dépendante, pour chaque nanoémetteur, de l'intensité, cas incohérent, ou du champ électromagnétique cas cohérent, incidents à la position spatiale, tridimensionnelle du nanoémetteur lumineux susdit propriété d'échantillonnage du nanoémetteur lumineux discutée préalablement.

Pour chaque distribution lumineuse de la séquence d'émission projetée sur l'échantillon, une image optique est créée. L'ensemble des images correspondantes à l'ensemble des distributions lumineuses de la séquence d'émission est référencée comme la séquence d'images.

La méthode PSIT selon ce mode de réalisation permet d'acquérir une information essentiellement latérale, c'est-à-dire la position latérale chacun des nanoémetteurs.

Dans un mode de réalisation préféré, la méthode PSIT est implémentée par la projection de distributions lumineuses de topologies différentes créées par diffraction conique et modifiées par une variation des états de polarisation d'entrée et de sortie.

**Méthode PDOS**

Une méthode PDOS selon un mode de réalisation de l'invention comprend la distribution par un « sémaphore optique», de la lumière réémise par les nanoémetteurs ou par l'objet continu entre au moins deux détecteurs.

Idéalement, la fonction du sémaphore optique est de séparer sur des détecteurs différents des régions différentes du volume d'analyse. Pratiquement, le sémaphore optique crée, pour chaque détecteur, une fonction de transfert de la lumière émise par un nanoémetteur lumineux, dépendant de la position dans l'espace du nanoémetteur lumineux et différente pour les différents détecteurs.

Dans un mode de réalisation préféré, la méthode PDOS est implémentée de façon à séparer sur des détecteurs différents la lumière collimatée, émergente de nanoémetteurs positionnés au plan focal de l'objectif, de la lumière non-collimatée émergente de nanoémetteurs se trouvant en-deçà ou au-delà du plan focal.

La méthode PDOS, dans l'implémentation préférée, permet d'acquérir une information essentiellement longitudinale, c'est-à-dire la position longitudinale de chacun des nanoémetteurs.

Mathématiquement, le procédé selon des modes de réalisation de l'invention réalise une fonction de transfert transformant la distribution spatiale dans l'espace des nanoémetteurs en l'information brute consistant en un ensemble d'images. L'algorithmique réalise l'opération inverse : elle reconstruit la distribution spatiale dans l'espace des nanoémetteurs à partir de l'ensemble d'images composant l'information brute.

### L'information dans des modes de réalisation de l'invention

Le résultat intermédiaire, l'information brute, est obtenu à l'issue de l'étape de détection. L'information brute consiste en un ensemble d'images Aop(m,n), représentant pour la distribution lumineuse o, l'image issue du canal de détection p.

Comme dans un microscope confocal, le processus de mesure analyse un volume de petite taille dans un objet de taille beaucoup plus grande. Il nécessitera donc l'ajout de modules supplémentaires, similaires à ceux d'un microscope confocal incluant un processus de balayage, un module logiciel d'intégration, d'analyse et de visualisation des données ponctuelles en surfaces et/ou en objets tridimensionnel.

En termes mathématiques l'algorithmique résout un problème inverse ou d'estimation de paramètres. Les équations du modèle sont connues et l'on dispose d'un modèle a priori, paramétrique ou non, sur la configuration des nanoémetteurs. Le modèle le plus naturel consiste à supposer un faible nombre de nanoémetteurs (objet clairsemé), mais on peut également utiliser des modèles continus, supposant la présence de structures unidimensionnelles (lignes, courbes) ou de motifs spécifiques. On peut alors parcimonieux utiliser l'ensemble des procédures mathématiques connues de l'Homme du métier pour la résolution de problèmes inverses ou l'estimation de paramètres. Nous décrivons ultérieurement un exemple d'algorithmique adapté spécifiquement à la méthodologie de mesure selon un mode de réalisation de l'invention.

De plus, nous présentons, pour sa valeur emblématique, une solution nouvelle du problème de la discrimination de deux points positionnés à faible distance l'un de l'autre. Ce problème, étudié par Lord Rayleigh, est la base du critère de résolution dans de nombreux domaines de l'Optique.

Il a ainsi été décrit, de manière assez large, les caractéristiques des modes de réalisation de l'invention afin que la description détaillée de celle-ci puisse être mieux comprise, et afin que la présente contribution à l'art puisse être mieux appréciée. De nombreuses fonctionnalités supplémentaires de l'invention seront décrites ci-après.

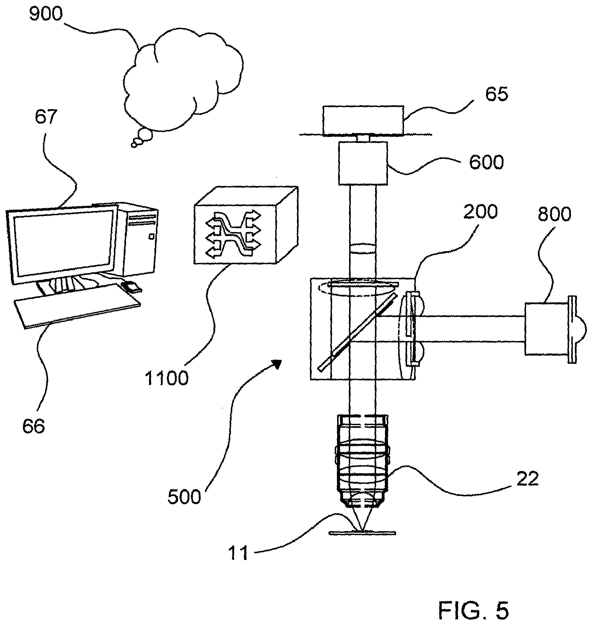

L'implémentation préférée de la méthode selon un mode de réalisation de l'invention est une plateforme matérielle et algorithmique, référencée comme la plateforme SRCDP, 500, illustré à la Figure 5.

La plateforme SRCDP, 500, implémente la méthode selon un mode de réalisation de l'invention, en combinant les deux méthodes PSIT et PDOS décrites ci-dessus.

Dans un des modes de réalisation, la plateforme SRCDP observe, Figure 5, un échantillon biologique, 11, intégrant un ensemble de nanoémetteurs. Le résultat de l'observation de l'échantillon biologique par la plateforme SRCDP est l'acquisition d'information de superrésolution, représentative de l'échantillon observé.

La plateforme SRCDP, 500, Figure 5, comprend principalement :

Dans sa partie matérielle :

- Un microscope confocal 200, adapté ou optimisé, similaire au microscope confocal, décrit antérieurement, et comprenant l'ensemble des composants adéquats, tel que décrit antérieurement

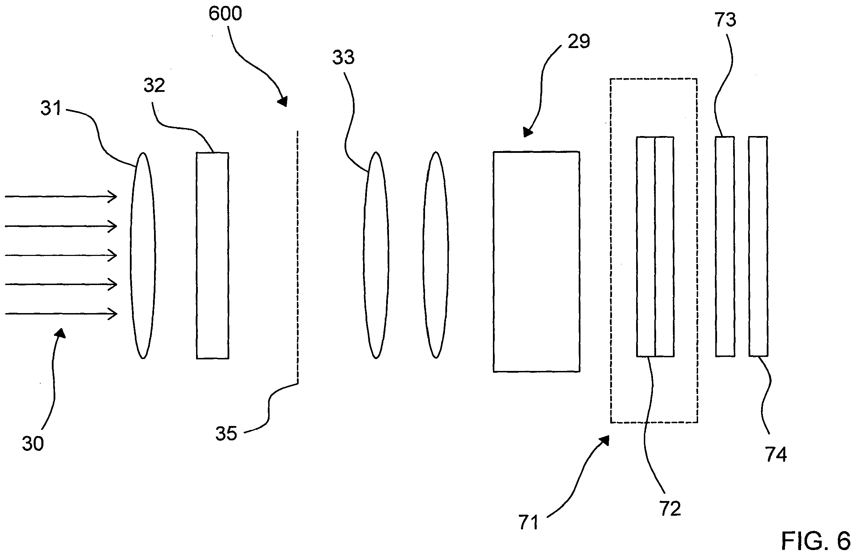

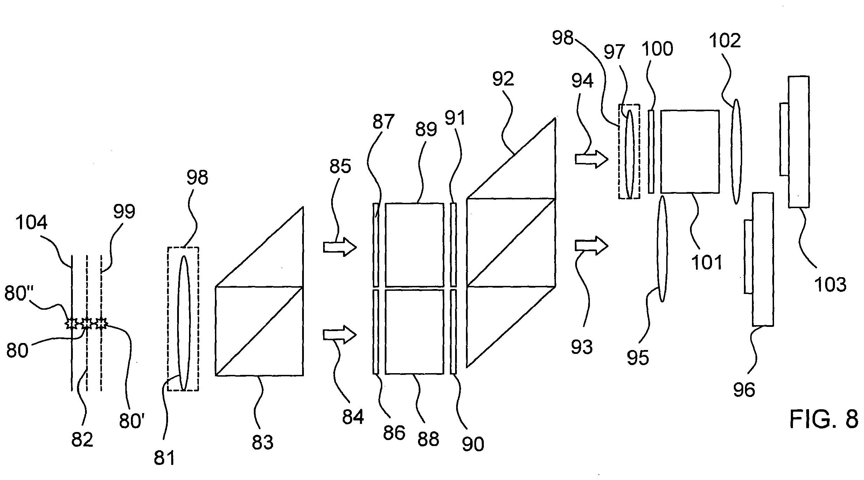

- Deux modules optiques nouveaux et complémentaires, montés sur un microscope standard. Les deux modules optiques nouveaux sont les modules optiques LatSRCS, 700, et LongSRCS, 800, décrit en détails ultérieurement en se référant aux Figures 6 et 8, respectivement. Le module optique LatSRCS 700, implémente les étapes d'illumination nécessaires à l'implémentation de la méthode PSIT selon un mode de réalisation de l'invention. Le module optique LongSRCS, 800, implémente les étapes de distribution de l'intensité lumineuse émergente en une pluralité de images de la méthode PDOS selon un mode de réalisation de l'invention et,

- le module algorithmique SRCDA, 600, qui sera décrit en se référant à la Figure 8, est capable, à partir des images créées par la plateforme SRCDP de reconstruire l'information de superrésolution de l'échantillon biologique.

- D'autres éléments auxiliaires, tels que l'ordinateur 66 et le logiciel 67, nécessaires à la réalisation de la plateforme,

### *Module optique LatSRCS implémentant la méthode PSIT*

Nous décrivons, en se référant à la figure 6, un module optique selon un mode de réalisation de l'invention, le module optique LatSRCS, 700, et sa fonction spécifique en microscopie.

Le module optique, LatSRCS, 700 selon ce mode de réalisation, est un module optique, projetant sur une pluralité de nanoémetteurs d'un échantillon, une séquence de distributions lumineuses compactes de topologie différente. Chaque nanoémetteur fluoresce avec une séquence d'intensités fluorescentes lumineuses dépendant de l'intensité incidente sur le nanoémetteur et caractérisant la position latérale du nanoémetteur. Dans la plupart des modes de réalisation, les distributions lumineuses compactes de topologies différentes sont créées par l'interférence, avec des amplitudes et phases variables entre une onde reguliere et une onde singulière. Dans le mode de réalisation préféré, les ondes régulière et singulière sont créées par un cristal conique mince.

Le module optique LatSRCS, 700, est positionné dans la voie d'éclairage du microscope confocal 200 ; il projette une séquence de distributions lumineuses compactes de topologies différentes sur l'échantillon 11 en utilisant l'objectif du microscope confocal 200. Dans le mode de réalisation préféré utilisant la diffraction conique, l'intensité incidente à une position spécifique sur l'échantillon 11 sera proportionnelle, pour chaque distribution lumineuse, à une combinaison spécifique des paramètres de Stokes.

Le module optique LatSRCS, 700, utilise une fonctionnalité inhérente, décrite précédemment, spécifique au nanoémetteur, qui échantillonne l'intensité lumineuse incidente à sa position précise (du nanoémetteur) et réémet une lumière fluorescente dépendante de la lumière incidente. Il est remarquable que l'information mesurée soit directement liée à la position du nanoémetteur à l'intérieur de la distribution lumineuse compacte. Cette information est figée par la fonctionnalité du nanoémetteur, sa propriété d'absorber et de réémettre la lumière, qui rompent la chaîne optique. Cette information est portée par la lumière fluorescente, sous forme d'une distribution lumineuse émergente, récupérable par un ensemble de détection 65.

Si la lumière incidente varie dans le temps en fonction d'une séquence de distributions lumineuses compactes de topologies différentes, l'intensité de la lumière fluorescente réémise varie dans les mêmes proportions. La séquence de la lumière fluorescente réémise sera proportionnelle à la séquence des distributions lumineuses compactes de topologies différentes. A partir de cette information, il est possible de récupérer la position du nanoémetteur, comme expliqué ci-dessous.

La méthode PSIT selon des modes de réalisation de l'invention fait référence à la projection d'une séquence de distributions lumineuses compactes de topologies différentes dans un microscope, l'interaction avec l'objet parcimonieux ou l'objet continu, la collecte de la lumière réémise par l'objectif du microscope, 22, la détection de la lumière, fluorescente ou non, par l'ensemble de détection amélioré 65, et l'analyse de l'information par un algorithme approprié. Dans certains modes de réalisation, l'ensemble de détection amélioré, 65, se compose d'un détecteur unique, et ne récupère que l'intensité globale en fonction du temps, tandis que dans d'autres modes de réalisation, l'ensemble de détection amélioré se compose d'une petite zone de pixels et récupère aussi la répartition spatiale de la lumière fluorescente. L'ensemble des informations récupérées, consistant en une pluralité d'images, désigné comme les images latérales de superrésolution.

Dans un des modes de réalisation, la contribution d'un nanoémetteur positionné dans le volume éclairé à une image latérale de superrésolution spécifique est proportionnelle à une combinaison des paramètres de Stokes de la lumière incidente à la position du nanoémetteur.

Les images latérales de superrésolution, l'information créée par les distributions lumineuses compactes de topologies différentes est nouvelle, et n'était pas présente dans l'art antérieur. Cette information nouvelle permet d'affiner la position des nanoémetteurs ou la distribution spatiale de l'objet continu, de quantifier le nombre de nanoémetteurs présents dans le volume éclairé et de différencier plusieurs nanoémetteurs présents dans le même volume.

On se réfère maintenant à la figure 6, qui est une illustration schématique simplifiée d'un module optique LatSRCS, 700, conformément à un mode de réalisation de la présente invention.

La figure 6 représente un module optique, LatSRCS, 700, il inclut tous les composants du module de diffraction conique, de la figure 3, qui sont mis en œuvre de la même manière que dans le module de diffraction conique 300. L'optique de la source lumineuse du microscope confocal à balayage est supposée être achromatique et en conjugaison infinie, même si d'autres conditions peuvent être adaptées en utilisant une optique auxiliaire. La lumière incidente, entrant depuis la source lumineuse est parallèle, 30. Le module optique 700 lui-même comprend une première lentille, 31, un cristal conique achromatique 32, ou un sous-ensemble réalisant achromatiquement la fonctionnalité d'un cristal conique comme explicité précédemment, et une seconde lentille 33; un polariseur partiel, 29, décrit ci-dessus, peut également être ajouté. Les deux premières lentilles, 31 et 33, sont configurées de préférence sous forme d'un télescope de Kepler de rapport 1:1; le plan d'imagerie conique, 35, est placé au plan focal commun des lentilles 31 et 33. L'ouverture numérique de la première lentille, 31, détermine les paramètres de l'effet de diffraction conique à travers le rayon normalisé conique, définies ci-dessous. Le second objectif. 33, restaure le parallélisme de la lumière, pour l'injecter au microscope. Il comprend en outre un sous-module de contrôle de polarisation, 71, comprenant, par exemple, une lame quart d'onde tournante, une paire de valves de lumière à cristaux liquides ou une cellule de Pockels, 72, et un analyseur 73. L'information des paramètres de Stokes peut être transformée en information séquentielle, à travers une séquence de distributions lumineuses spatialement différenciés, et portant des informations séquentielles, comme décrit ci-dessus.

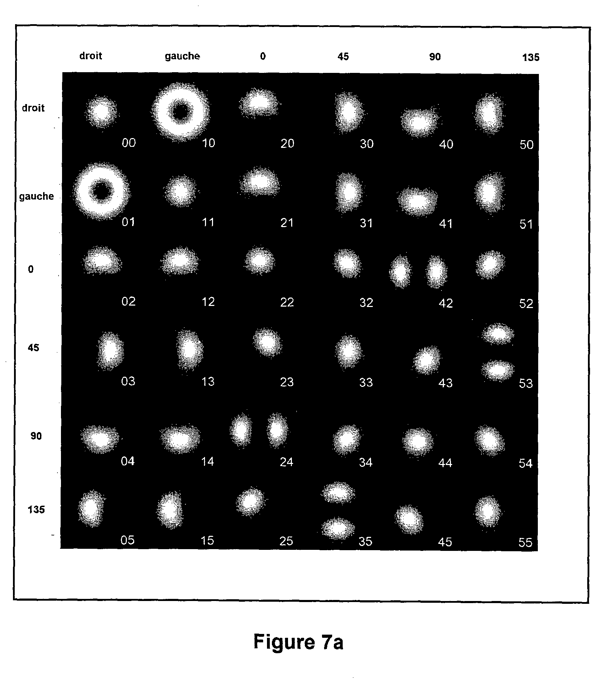

Se référant à la Figure 7a, cette figure représente les distributions lumineuses, créées à travers un cristal conique de paramètre conique normalisé $\rho_0$ de 0.388, calculées par une approximation scalaire, pour différents états de polarisation d'entrée et de sortie, incluant en entrée ou en sortie soit un polariseur circulaire ou linéaire soit un polariseur radial ou azimutal. Ces distributions lumineuses ont été calculées dans un plan intermédiaire d'imagerie et non au foyer de l'objectif pour séparer la réfraction conique des effets vectoriels. Les états de polarisation - d'entrée et de sortie - sont caractérisés par leur angle pour les polarisations linéaires et par leurs chiralités pour les polarisations circulaires.

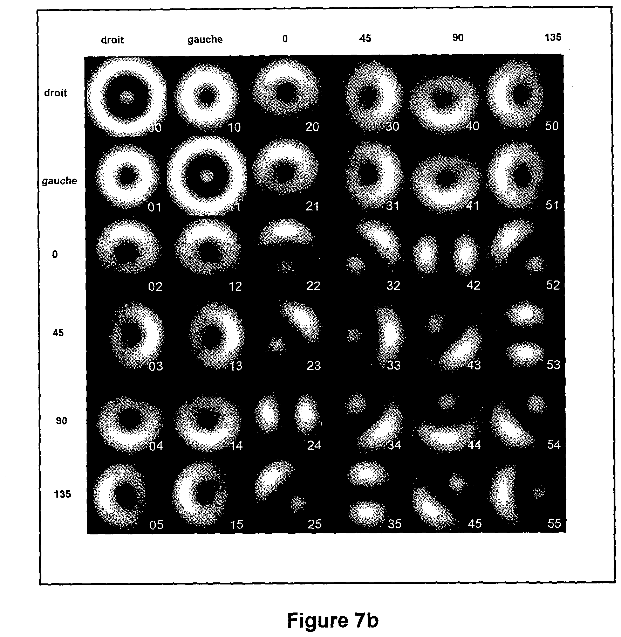

Se référant à la Figure 7b, cette figure représente les distributions lumineuses, créées à travers un cristal conique de paramètre conique normalisé $\rho_0$ de 0.818, calculées par une approximation scalaire, pour différents états de polarisation d'entrée et de sortie, incluant en entrée ou en sortie soit un polariseur circulaire ou linéaire soit un polariseur radial ou azimutal. Ces distributions lumineuses ont été calculées en utilisant le logiciel Diffract de la société MMresearch. Ces distributions lumineuses ont été calculées dans un plan intermédiaire d'imagerie et non au foyer de l'objectif pour séparer la réfraction conique des effets vectoriels. Les états de polarisation d'entrée et de sortie sont caractérisés par leur angle pour les polarisations linéaires et par leurs chiralités pour les polarisations circulaires.

Nous présentons dans ces tables un grand nombre de fonctions de transfert différentes, incluant les cas incluant en entrée ou en sortie des polariseurs circulaires, linéaires, azimutaux ou radiaux. Il faut compléter cette description en y incluant en plus des polariseurs circulaires, linéaires, azimutaux ou radiaux décrits dans les figures, les cas de polariseurs elliptiques, dichroïques ou partiellement dichroïques, et polariseurs variant spatialement. De plus, comme illustré dans les figures 7a et 7b, ces fonctions de transfert varient fortement en fonction du paramètre conique normalisé $\rho_0$. De plus, l'introduction de deux cristaux coniques, ou d'un cristal conique et d'un cristal uniaxe ou biaxe (dans lequel la lumière se propage dans une direction de propagation différente de celle de la diffraction conique) en cascade permet un nombre encore plus grand de fonctions de transfert comme illustré pour deux cristaux coniques dans la figure 7c.

En résumé nous référencerons, dans cette demande de brevet, sous le terme de fonction de transfert de diffraction conique, l'ensemble des fonctions de transfert pouvant être obtenues à l'aide d'un faible (<6) nombre de cristaux en cascade, et des éléments de polarisation, statiques ou dynamiques, uniforme ou variant spatialement

Nous noterons principalement les distributions lumineuses suivantes :

- Le fondamental : Figure 7a00 et 7a11, obtenue entre polariseurs circulaires parallèles, qui est une distribution proche de la distribution d'Airy

- Le vortex : Figure 7a01 et 7a10 obtenue entre polariseurs circulaires, croisés

- La distribution que nous avons appelé la distribution en « croissant de lune », les sous-figures 7a0,2-5, 7a1,2-5, 7a2-5,0 et 7a2-5,1, sont obtenues entre un polariseur circulaire et un polariseur linéaire d'angle variable ; cette distribution est antisymétrique et l'axe tourne avec l'axe du polariseur linéaire,

- La distribution que nous avons appelé la distribution en « demi-lunes», sous-figures 7a42, 7a35, 7a24 et 7a53 sont obtenues entre deux polariseurs croisés ; cette distribution est symétrique.

- Les distributions lumineuses plus complexes, Figure 7b, pour un cristal de paramètre conique normalisé, $\rho 0$, supérieur à 0.5

- la réalisation de distributions lumineuses additionnelles à l'aide de deux - ou plus - cristaux coniques en cascade, (non représentées) avec ou sans éléments de polarisation statiques ou dynamiques entre les cristaux

La réalisation des différentes distributions lumineuses est réalisée par la modification de la polarisation d'entrée ou de sortie. Les différentes distributions lumineuses suivent le même chemin optique et le système optique créant ces distributions est un système optique à chemin commun, tel que nous l'avons défini antérieurement. Il existe un nombre d'éléments de polarisation ayant une polarisation différente à différentes longueur d'ondes. L'utilisation d'un de ces éléments permet de créer deux ondes compactes, soit régulières soit singulières à deux longueurs d'ondes soit une onde régulière à une longueur d'onde et une onde singulière à une autre longueur d'onde. Un tel dispositif permet une implémentation beaucoup plus simple des concepts d'émission-déplétion limités dans certains cas par les tolérances ou par les vibrations du système optique.

### *Redondance et variations de phase aléatoires*

Les distributions lumineuses élémentaires décrites dans la Figure 7 peuvent être obtenues de plusieurs façons différentes. De plus, certaines d'entre elles peuvent être obtenues comme une combinaison linéaire d'autres distributions lumineuses élémentaires; par exemple le vortex peut être obtenu par n'importe quelle somme de deux distributions lumineuses « demi-lunes » orthogonales.

Cette redondance permet de moyenner une partie des erreurs de phases aléatoires présentes inexorablement dans de nombreux processus de mesure d'objets biologiques. Ceci renforce la robustesse de la méthodologie de mesure des modes de réalisation de l'invention et son applicabilité.

Des distributions lumineuses nouvelles peuvent être aussi obtenues comme des combinaisons mathématiques de distributions lumineuses élémentaires. La distribution lumineuse « pseudo-vortex », calculée à partir de combinaisons arithmétiques des quatre distributions en « croissant de lune »a la particularité d'avoir une très forte courbure à l'origine.

La Méthode PSIT a été conçue au départ pour permettre une superrésolution latérale ; toutefois la méthode PSIT peut aussi être utilisée pour obtenir la position longitudinale d'un nanoémetteur. En effet, certaines distributions lumineuses élémentaires sont relativement insensibles - dans des limites raisonnables - à une variation de la position longitudinale du nanoémetteur, d'autres y sont au contraire très sensibles. Une séquence de distributions lumineuses compactes, certaines d'entre elles indépendantes et certaines d'entre elles dépendantes de la position longitudinale, permettrait de remonter à la position longitudinale des nanoémetteurs.

De plus, pour les distributions lumineuses dépendant fortement de la position longitudinale du nanoémetteur, une série de distributions lumineuses élémentaires décalées légèrement longitudinalement l'une par rapport à l'autre peut être projetée sur l'échantillon, permettant un ensemble d'images contenant une information longitudinale.

De plus, certaines distributions lumineuses élémentaires plus complexes, consistant en des superpositions plus complexes d'ondes, existent avec une forte dépendance longitudinale ; par exemple les « spot tridimensionnels obscurs » décrits par Zhang, [26], créent un spot noir entouré en trois dimensions par une sphère lumineuse. Ces « spot tridimensionnels obscurs » consistent en une superposition de fonctions de Laguerre-Gauss, qui peuvent être réalisés à l'intérieur d'une cavité laser ou à l'aide d'un hologramme ou d'une plaque de phase, comme suggéré par Zhang ou à l'aide de cristaux coniques ou uniaxes comme le suggère l'inventeur.

Toute ces variantes de la méthodologie de mesure sont réputées faire partie de l'invention. L'inventeur a pourtant choisi, dans l'implémentation préférée de séparer en deux modules optiques disjoints mais complémentaires les mesures latérales des mesures longitudinales pour réduire la complexité de chacun des modules complémentaires.

### **Effets vectoriels**

La théorie développée jusqu'à présent décrit la distribution de lumière dans le plan d'imagerie du microscope, 35. La répartition de la lumière projetée sur l'échantillon est, selon la théorie de l'imagerie géométrique, une image réduite de la distribution de la lumière dans le plan image.

Toutefois, comme il est décrit abondamment dans la littérature, pour un objectif à forte ouverture numérique, la théorie de l'imagerie géométrique n'est pas exacte et les effets vectoriels, doivent être pris en compte. Ces effets consistent essentiellement en la présence d'une composante polarisée longitudinalement.

En référence de nouveau à la Figure 6, pour atténuer les effets vectoriels, il peut être avantageux de maintenir l'analyseur final fixe et d'ajouter un élément supplémentaire, fixe ou variable, le sous-module d'adaptation de polarisation de sortie, 74, pour contrôler la polarisation de sortie. Nous avons constaté que la polarisation de sortie ayant une symétrie circulaire réduit sensiblement les effets vectoriels. Une telle polarisation peut être circulaire, radial ou azimutale. Pour la polarisation circulaire, le sous-module d'adaptation de polarisation de sortie 74, est tout simplement une lame de retard d'un quatre d'onde. Dans ce cas, les éléments de polarisation longitudinale ont une symétrie de vortex et se fondent harmonieusement dans le système avec seulement une petite modification de la forme des paramètres de Stokes, même pour les objectifs de microscope avec une ouverture numérique très élevé.

Alternativement, le sous-module d'adaptation de polarisation de sortie, 74, peut être variable et s'adapter à la topologie et à la symétrie de chacune des distributions lumineuses compactes.

## Module optique LongSRCS implémentant la méthode PDOS

Nous décrivons un module optique LongSRCS, avec plus de détails ci-dessous. Le système de superrésolution longitudinale selon un mode de réalisation de l'invention canalise les intensités lumineuses incidentes d'une pluralité de sources ponctuelles, placées dans un petit volume lumineux, soit sur des détecteurs séparés soit sur des positions géométriques distinctes sur le même détecteur soit sur une combinaison des deux, en fonction de la position spatiale de chaque source ponctuelle.

En des mots plus simples, l'intensité émise par un nanoémetteur placé longitudinalement au point A sera physiquement séparée de l'intensité émise par un nanoémetteur placé longitudinalement au point B.

Le module optique LongSRCS selon le mode de réalisation de l'invention permet la séparation du volume en tranches, les différentes tranches du volume illuminé étant physiquement séparées sur les différents ensembles de détecteurs.

Dans la réalisation privilégiée, qui sera détaillée ci-dessous, le module optique LongSRCS sépare un volume éclairé en au moins trois tranches adjacentes, en séparant la tranche moyenne des deux autres tranches sur des ensembles de détecteurs améliorés indépendants, et en créant une différenciation spatiale entre les deux tranches subsistantes sur le même ensemble de détecteurs amélioré.

On se réfère maintenant à la figure 8, qui est une illustration schématique simplifiée d'un module optique LongSRCS 800, conformément à un mode de réalisation de la présente invention.

Le module optique LongSRCS canalise l'intensité lumineuse incidente d'une pluralité de sources ponctuelles, placé dans un petit volume lumineux, soit sur des détecteurs séparés soit sur des positions géométriques distinctes sur le même détecteur soit sur une combinaison des deux, en fonction de la position longitudinale de chaque source ponctuelle.

Dans un mode de réalisation préféré, il opère sur des nanoémetteurs, représentés par 80, 80 ' ou 80 ", en fonction de leur position longitudinale. Il comprend une première lentille de collimation 81, qui peut consister, dans certains modes de réalisation de l'objectif du microscope, 4.

Le nanoémetteur 80 est positionné dans le plan focal de la lentille de collimation, 82; la lumière provenant de nanoémetteur 80, émergeant de la lentille de collimation, 81, est collimatée.

Les nanoémetteurs 80 ' et 80 " sont placés avant et après le plan focal de la lentille de collimation, 82, à une distance de $\pm \Delta z$, la lumière provenant de nanoémetteurs 80' ou 80", émergeant de la lentille de collimation 81, est convergente ou divergente.

Le module optique LongSRCS comprend un séparateur de faisceau de polarisation, représenté sur la figure. 8, sous la forme d'un séparateur de faisceau de polarisation à déplacement latéral, 83. Le séparateur de faisceau de polarisation divise la lumière incidente, supposé être non polarisée, en deux canaux de polarisation, 84 et 85, ayant des polarisations linéaires orthogonales. Le système peut être simplifié en utilisant un canal de polarisation unique au lieu de deux, si la lumière entrante est déjà polarisée ou au coût d'une perte de la moitié de l'intensité de la lumière incidente, pour de la lumière non polarisée.

Deux lames de retard d'un quart d'onde, 86 et 87, transforment, pour chaque canal, la polarisation linéaire en polarisations circulaires.

Un cristal conique achromatique, ou un sous-ensemble réalisant achromatiquement la fonctionnalité d'un cristal conique comme explicité précédemment, est placé dans chacun des canaux, 88 et 89. Dans chaque canal, un setup de diffraction conique, comme décrit dans la figure. 3, est constitué par la lentille de collimation, 81, agissant en tant que premier objectif du setup de diffraction conique, 31, et un des cristaux coniques, 88 et 89. La configuration de diffraction conique sera complétée par une seconde lentille, 33, dans la suite.

Pour le nanoémetteur, 80, positionné dans le plan focal de la lentille de collimation, 82, la lumière sortant de la lentille de collimation 81, est, comme discuté ci-dessus, collimatée; se référant au setup de diffraction conique, l'ouverture numérique de la lentille de collimation, 81, dans l'espace image, et le rayon normalisé conique sont nuls, de sorte que l'effet de diffraction conique sur le faisceau issu de nanoémetteur 80 est nul. Par conséquent, le cristal conique ne modifie pas la géométrie de la lumière fluorescente émise par le nanoémetteur, ni sa polarisation, qui reste circulaire avec la même chiralité.

Pour les nanoémetteurs, 80' ou 80 ", qui ne sont pas positionnés dans le plan focal de la lentille de collimation, 82, la lumière converge ou diverge; se référant à nouveau au setup de diffraction conique décrit ci-dessus, l'ouverture numérique dans le plan image de la lentille de collimation, 81, qui équivaut à la première lentille du setup de diffraction conique, 31, est non-nulle. Pour une valeur donnée $\Delta z$ de défocalisation, positive ou négative, la majeure partie de la lumière émergeant du cristal conique est contenue dans l'onde vortex, qui a une forme de vortex, et est de chiralité inversée.

La fonctionnalité des setups de diffraction conique positionnés dans chacun des canaux est donc de distinguer la lumière collimatée, de la lumière convergente ou divergente en inversant la chiralité de la polarisation circulaire de la lumière, pour la lumière convergente ou divergente.

Deux autres lames de retard d'un quart d'onde, 90 et 91 transforment les polarisations circulaires, émergeantes de chaque canal, en polarisations linéaires. Nous nous référons, pour chaque canal, à la polarisation linéaire, qui aurait émergé de la lame de retard si le cristal eut été retiré comme la polarisation de collimation

Le module optique LongSRCS comprend un combineur/séparateur à quatre ports, représenté sur la figure 8 comme un combineur/séparateur à quatre ports a séparation latérale, 92. Il sépare pour chaque canal les deux polarisations, et fusionne les deux polarisations de collimation dans le même chemin, le chemin de collimation, 93, et la polarisation orthogonale à la lumière de collimation dans un autre chemin, le chemin de non-collimation, 94. Les directions des axes des lames de retard 86, 87, 90 et 91 doivent être choisies de manière adéquate. Les faisceaux combinés n'interfèrent pas, parce qu'ils sont issus d'un faisceau originellement non polarisé.

La lumière incidente dans le chemin de collimation est focalisée sur le détecteur de collimation, 96, en utilisant la lentille de focalisation du chemin de collimation, 95, qui se comporte fonctionnellement comme la seconde lentille 32, du setup de diffraction conique.

Dans le chemin de non-collimation, une lentille supplémentaire, 97 est insérée; la lentille supplémentaire, 97, associée à la lentille de collimation, 81, crée un système de lentilles nouveau, 98, dont le plan focal, 99 est positionné à une position différente, du plan focal de la lentille de collimation, 82, à la position du nanoémetteur 80 '. Une lame de retard d'un quart d'onde supplémentaire, 100, annule l'action des lames de retard 90 ou 91, transformant en retour les faisceaux entrants de chacun des canaux de polarisation, en la polarisation circulaire, suivant laquelle ils étaient polarisés à la sortie des cristaux coniques, 88 ou 89.

Un cristal conique supplémentaire, 101, est ajouté dans la voie de non- collimation constituant un troisième setup de diffraction conique - la configuration de diffraction conique auxiliaire - avec le système de lentilles, 98, agissant en tant que première lentille du setup de diffraction conique, 31.

Le nanoémetteur 80 ' était placé avant le plan focal de la lentille de collimation, 82, à une distance de $\Delta z$; mais, par rapport au système de lentille 98, il est positionné au plan focal, 99. La lumière provenant de nanoémetteur 80' avait déjà été transformée en un vortex par l'un des setups de diffraction conique constitué par la lentille de collimation, 81, et l'un des cristaux coniques 88 ou 89, selon le canal de polarisation que la lumière avait parcourue. La lumière provenant de nanoémetteur 80 ' est collimatée à la sortie du système de lentilles, 98, après la lentille additionnelle, 97.

Se référant au nouveau setup de diffraction conique, l'ouverture numérique du système de lentilles dans l'espace image et le rayon normalisé conique sont nuls pour nanoémetteur 80 '; l'effet de diffraction conique du setup de diffraction auxiliaire, sur le faisceau issu de nanoémetteur 80', est nul. Par conséquent, le cristal conique ne modifie pas la géométrie de la lumière fluorescente émise par le nanoémetteur. La lumière provenant d'un nanoémetteur, 80', est un vortex avant et après le cristal conique, 98.

Le nanoémetteur 80 " avait été placé après le plan focal de la lentille de collimation, 82, à une distance de $\Delta z$ relativement au système de lentille 98, il est placé à une distance de -2 $\Delta z$ de la position focale, 99, et la lumière provenant de nanoémetteur 80 " converge également à la sortie du système de lentilles, 98, après la lentille additionnelle, 97. La lumière provenant de nanoémetteur 80 " a déjà été transformée en un vortex par l'un des setup de diffraction conique constitué par la lentille de collimation 81, et soit l'un des cristaux coniques 88 ou 89 , selon le canal de polarisation que la lumière a suivi. Le cristal conique 101 modifie la lumière provenant de nanoémetteur 80 " et, pour des paramètres adéquats du matériau, de la taille et de l'orientation du cristal conique, il le transforme à nouveau en une onde régulière, légèrement différente du disque d'Airy.

La lentille de focalisation de la voie de non-collimation, 102, est adaptée pour focaliser le plan contenant nanoémetteur 80 ", qui est une onde régulière, 104, et non le nanoémetteur 80 ', qui est singulier, sur l'ensemble de détecteur pixélisé, 103. La lumière incidente émergeant d'un fluorophore positionné au plan 104, comme par exemple le fluorophore 80 ", est parfaitement focalisée et est positionnée au centre du détecteur pixélisé, 103. La lumière incidente émergeant d'un nanoémetteur positionné au niveau du plan 99 est un vortex et se concentre donc sur un anneau extérieur, avec un zéro central. En enregistrant séparément l'intensité au centre et l'intensité à la partie externe du détecteur, il est possible de séparer, avec un léger chevauchement, la lumière incidente des plans 104 et 99. De plus, un nanoémetteur positionné au niveau du plan 104, comme le nanoémetteur 80 ', est légèrement délocalisé, car l'objectif est calculé de façon à focaliser le plan 104 sur le détecteur. Je ne comprends pas la phrase précédente Cela améliore l'action du module optique LongSRCS, en poussant encore plus l'intensité du vortex du centre et en réduisant le chevauchement.

Cette description schématique d'un mode de réalisation préféré du module optique LongSRCS, 800, permet de nombreuses possibilités de variantes et adaptations par des modifications de ce schéma optique, grâce aux modifications connues de l'homme de l'art. Ces modifications comprennent, sans s'y limiter: le matériau des cristaux et leurs orientations, le choix des éléments de polarisation, le choix des axes de polarisation, la cascade d'éléments, le nombre de détecteurs, ou l'inversion des rôles des nanoémetteurs 80 ' et 80 " En outre, le module est idéalement conditionné pour être construit comme un ensemble de sous-ensembles monolithiques ou même comme un seul ensemble monolithique.

### Méthode PDOS et mesures latérales

La Méthode PDOS a été conçue au départ pour permettre une superrésolution longitudinale ; toutefois la méthode PDOS peut aussi être utilisée pour obtenir la position latérale d'un nanoémetteur. En effet, les distributions lumineuses élémentaires sont sensibles aussi à une variation de la position latérale du nanoémetteur. Pour un échantillon plan, dans le cas où la projection de lumière n'est pas réalisable, la méthode PDOS peut remplacer la méthode PSIT pour réaliser des mesures superrésolues.

Toute ces variantes de la méthodologie de mesure sont réputées faire partie de l'invention. L'inventeur a pourtant choisi, dans l'implémentation préférée de séparer en deux modules optiques disjoints mais complémentaires les mesures latérales des mesures longitudinales pour réduire la complexité de chacun des modules complémentaires.

### Module de détection

Le corollaire de la puissance de la méthodologie de mesure est l'exigence d'un module de détection plus complexe, capable de détecter et récupérer les informations créées. En microscopie confocale à balayage le détecteur est un détecteur constitué d'un seul élément comme un PMT ou un SPAD. Le temps d'acquisition du détecteur est déterminé par le mécanisme de balayage.

La méthodologie de mesure nécessite, dans certains modes de réalisation, deux - ou plus - modules de détection, au lieu d'un, dans le cas de deux modules, les modules de détecteur, fondamental et vortex. En outre, la méthodologie de mesure nécessite, dans certains modes de réalisation, pour chaque volume éclairé, l'acquisition de l'information optique sur une petite grille spatiale, typiquement 16 * 16, à un taux plus élevé que le temps du pixel, en raison de la nécessité de reconnaître et de quantifier les signaux séquentiels.

Un module de détection amélioré, 65, peut être mis en œuvre en utilisant des détecteurs de petite taille à faible nombre de pixels. Un tel module n'aurait pas été réalisable il y a dix ou vingt ans, en raison de l'absence de technologies adéquates. Aujourd'hui, les détecteurs de petite taille à faible nombre de pixels, à cadence élevée, avec des caractéristiques de faible bruit, sont disponibles sur la base de plusieurs technologies. Des matrices de SPAD avec un faible nombre de pixels, comme 32 * 32, ont été démontré récemment avec des taux d'acquisition jusqu'à 1 MHz. Le module détecteur amélioré, 65, peut également être mis en œuvre à l'aide de CCD, EMCCD ou capteurs CMOS. Des capteurs CCD, CMOS ou EMCCD avec un faible nombre de pixels existent ou peuvent être conçus spécifiquement. En outre, les détecteurs CCD, CMOS EMCCD peuvent être utilisés en utilisant des fonctionnalités de région d'intérêt, de sousfenêtrage ou de «binning», des modes « crop » ou « fast kinetics », disponibles pour certains détecteurs.

Les informations spatio-temporelles référencées ici sont la position et le temps de l'impact de chaque photon fluorescent. Dans les systèmes réels, l'information spatio-temporelle est corrompue par le bruit du détecteur, ce qui crée des photons erronés, et par l'inefficacité de détection, ce qui crée des photons qui ne sont pas détectés, réduisant les performances. Dans les matrices de SPAD, pour chaque photon, le pixel qui l'a détecté et le temps d'impact sont reçus, à savoir l'information spatio-temporelle complète est disponible. Pour des détecteurs CCD, CMOS ou EMCCD, l'acquisition de plusieurs trames est nécessaire pour approximer l'information spatio-temporelle.

Dans plusieurs implémentations nous ferons référence à des détecteurs séparés; dans de très nombreux cas les détecteurs pourront être soit physiquement séparés soit consistant en des zones différentes sur un même détecteur, soit une combinaison des deux cas précédents.

### Algorithmique SRCDA

L'algorithmique de reconstruction que nous avons détaillée s'applique non seulement dans le cas d'un champ donné analysé à l'aide des méthodes PSIT et PDOS, mais également dans le cas d'un champ de plus grande dimension analysé par balayage. Dans le cas d'un balayage, le modèle direct est enrichi par le fait qu'un recouvrement entre les différentes positions des signaux projetés permet de prendre en compte, en un point donné, plus de mesures. La prise en compte de signaux projetés décalés n'apporte néanmoins aucune complexité supplémentaire sur le plan de la méthodologie de résolution, puisque ces signaux décalés ne font que s'ajouter à la liste des signaux projetés.

### Algorithme du processus optique composé implémentant la méthodologie de mesure

Le processus optique composé selon au moins un mode de réalisation de l'invention est un complément logique de l'algorithme SRCDA. En effet, la reconstruction obtenue par l'algorithme SRCDA peut mener à la conclusion qu'une image supplémentaire permettrait d'améliorer les performances de la mesure. La plateforme de microscopie SRCDP permet l'acquisition d'une - ou plusieurs - images complémentaires choisies dans un ensemble de distributions lumineuses des méthodes PSIT ou PDOS.

Un exemple est explicité ultérieurement.

### Mesure de position d'un point par la méthode PSIT

La méthode PSIT peut être utilisée comme une technique permettant de mesurer la position d'un nanoémetteur avec une haute précision.

Considérons un nanoémetteur positionné à la position x,y en coordonnées cartésiennes et p, θ en coordonnés polaires. Une séquence d'illumination consistant en une onde fondamentale, et un couple de distributions dites « demi-lunes », alignées suivant des axes orthogonaux est projetée sur le nanoémetteur.

La procédure de prétraitement créée deux images :

Une image « top hat » consistant en la somme des trois images de la séquence,

Une image vortex consistant en la somme des deux images demi-lunes.

Un premier descripteur est la position cartésienne calculée à l'aide de l'algorithme du centroide sur l'image « top-hat ».

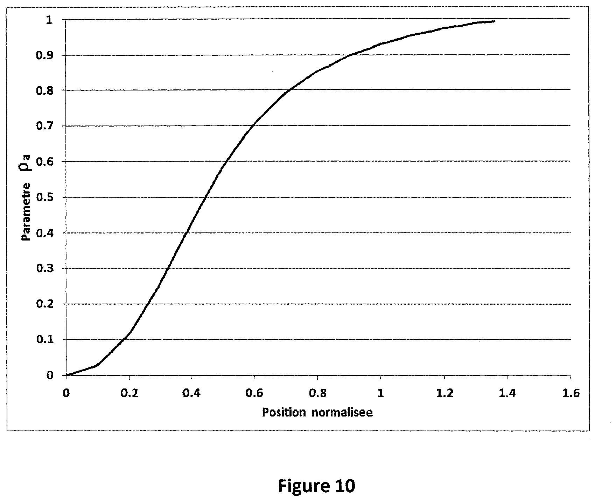

En se référant à la Figure 10, la position radiale $\rho$ peut être mesurée univoquement en mesurant un paramètre, pa, égal à l'arc tangente normalisé d'un facteur $\pi$, du rapport d'intensité entre l'intensité normalisée émise par le nanoémetteur illuminé par l'onde vortex, IV, et l'intensité normalisée émise par le nanoémetteur illuminé par l'onde fondamentale, IF. En effet :

- l'intensité normalisée émise par le nanoémetteur illuminé par l'onde fondamentale varie de 1 au centre pour l'onde fondamentale à 0 au rayon d'Airy,

- l'intensité normalisée émise par le nanoémetteur illuminé par l'onde vortex varie de 0 au centre pour à 1 au maximum du vortex pour arriver à 0 pour une valeur légèrement supérieure au rayon d'Airy. L'arc tangente du rapport est une fonction monotone.

La position azimutale peut être mesurée en mesurant le rapport d'intensité entre l'intensité totale émise par le nanoémetteur illuminé par la première distribution demi-lune, $I_H$, et l'intensité totale émise par le nanoémetteur illuminé par la seconde distribution demi-lune, Ive. Le rapport entre ces deux intensités est une loi géométrique en tangente carrée :

$$\frac{I_{VE}}{I_H} = \tan^2 \theta \qquad \text{(EQ. 10)}$$

Les deux mesures sont redondantes. Cette redondance est une mesure permettant de qualifier l'objet observé comme étant un point unique et de séparer ce cas des autres objets potentiellement présents sur l'échantillon.

Une application directe de l'utilisation de la méthode PSIT selon un mode de réalisation de l'invention pour mesurer la position d'un nanoémetteur avec une haute précision est l'intégration de cette technique de mesure dans une technique nouvelle de reconstruction optique stochastique locale. Une des limites de l'applicativité des techniques stochastiques est le processus de mesure, nécessitant un nombre important d'images et donc un temps de mesure long et une forte phototoxicité. L'utilisation de la technique PSIT selon au moins un mode de réalisation de l'invention, qui permet de mesurer la position d'un émetteur lumineux, à une résolution bien supérieure au disque d'Airy, à des cadences pouvant atteindre les micro ou nanosecondes permet l'extension des techniques stochastiques à de nombreuses applications nouvelles.

Les images résultantes de l'utilisation de la méthode PSIT peuvent aussi être traitées en utilisant la méthode de Hough généralisée, permettant de reconnaître des objets structurés, ligne, cercle ou autres, dans une image.

### *Représentation dans un espace de dimension supérieur : représentation CartesianoPolaire*

Ce résultat peut être généralisé. Nous introduisons dans ce document une ensemble de nouvelles représentations du plan, couplant la représentation cartésienne et la représentation polaire. Nous avons nommé cette représentation la représentation Cartesiano-Polaire. Un point dans le plan sera représenté par un quadruplet, x, y, p, $\theta$. Cette représentation est non-euclidienne et redondante. Une représentation similaire de l'espace peut être définie *mutatis mutandis.*

A première vue cette représentation semble inutile ; c'est une représentation très complexe d'une réalité beaucoup plus simple. Il est fort connu que la position d'un point dans un plan peut être représentée alternativement, soit en utilisant les coordonnées cartésiennes, x et y, soit en utilisant les coordonnées polaires, $\rho$ et $\theta$.

### *Représentation dans un espace de dimension supérieur : Espace de Pythagore*

Nous ne détaillerons dans ce document que la version simplifiée de la Représentation CartesianoPolaire, dans laquelle nous représentons un point par les coordonnées x, y et $\rho$. Nous avons nommé cet espace l'Espace de Pythagore.

Définissons la surface géométrique comme étant une surface bidimensionnelle dans l'espace tridimensionnel, qui remplit l'équation géométrique constitutive $p^2 = x^2 + y^2$ ; supposons un système de mesure mesurant simultanément x, y et p, tel qu'un système de mesure décrit dans le paragraphe précédent conjointement avec un algorithme de centroïde sur les mêmes données. Un point physique sera donc positionné, dans l'espace de Pythagore, sur la surface géométrique. Considérons le cas de deux ou plusieurs points physiques : Le centre de gravité de la mesure des deux points est, en général, en dehors de la surface géométrique et crée un point en dehors de cette surface. Cette représentation mathématique est une formalisation et une généralisation de l'algorithme déterministe permettant la séparation du cas d'un point isolé de celui d'un agrégat de points décrit antérieurement.

### *Reconnaissance et mesure de deux points : un nouveau critère de résolution*

Considérons maintenant deux nanoémetteurs de même intensité positionnés symétriquement autour du centre aux positions p, $\theta$ et p, -$\theta$ en coordonnés polaires. Nous utiliserons le système décrit dans les paragraphes précédents. Les trois descripteurs donneront les résultats suivants :

- Le centroïde mesurera le centre de gravité de la distribution lumineuse, qui sera à l'origine,

- Le descripteur p, mesurera la valeur radiale commune des deux nanoémetteurs,

- le descripteur $\theta$, qui dans le cas des demi-lunes contient une dégénérescence entre $\theta$ et -$\theta$, mesurera la valeur $\theta$.

Comme cité précédemment si la valeur du descripteur p n'est pas nulle nous savons que le cas étudié n'est pas un point mais deux ou plus. De plus, les descripteurs p et $\theta$ nous permettent de mesurer les caractéristiques de deux points à une résolution très supérieure à celle définie par le critère de Rayleigh. Qui plus est, en utilisant un processus composé, il est possible de séparer ce cas de la grande majorité des cas de 3 points et plus. Une distribution lumineuse supplémentaire peut être projetée sur l'échantillon, une demi-lune inclinée d'un angle $\theta$ ; l'hypothèse de la présence de deux points sera confortée ou infirmée en fonction des résultats de cette image. En effet, l'énergie mesurée ne sera nulle que pour deux points, pour une ligne ou pour une série de points alignés dans la direction de l'angle $\theta$.

Cette mesure n'est pas limitée a priori. Bien sûr, une limite de résolution pratique existe d'abord, liée à la qualité du signal, les fluctuations et imperfections diverses. Si on néglige les limites pratiques, la limite de résolution est liée au nombre de photons détectés.

### *Module de contrôle*

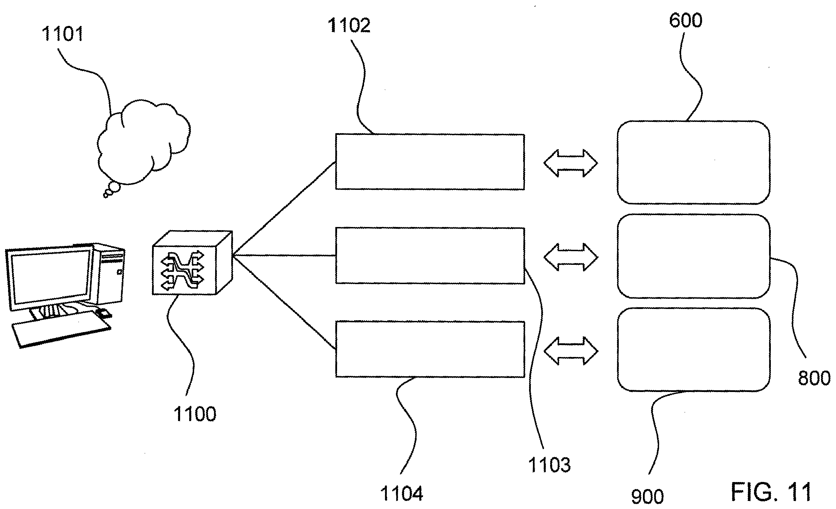

En référence à la Figure 11 et à la Figure 5, dans un mode de réalisation préféré de cette invention, les différents éléments de contrôle intégrés dans la plateforme SRCDP, 500 seront décrits :

Le Module de contrôle, 1100, à l'aide de la procédure systémique de contrôle, 1101, contrôle et modifie les paramètres optiques de la plateforme SRCDP, 500, les paramètres électroniques de l'ensemble de de détection amélioré, 65, et les paramètres mathématiques des procédures algorithmiques SRCDA, 900, pour optimiser l'information émergente, suivant des critères définis par le système ou par l'utilisateur. Le contrôle est réalisé en faisant varier les systèmes de contrôle 1102, 1103 et 1104, des différents éléments de la plateforme, 600, 800 et 900. Le système de contrôle, 1100, utilisera aussi, si elles sont disponibles des informations externes, 1105, relayées par le support informatique. Remarque : 1105 n'est pas présent sur la Figure 11

Il est entendu que l'invention n'est pas limitée dans son application aux détails énoncés dans la description contenue dans les présentes ou illustrés dans les dessins. L'invention est capable d'autres modes de réalisation et d'être pratiquée et effectuée de diverses manières. L'homme de l'art comprendra aisément que diverses modifications et changements peuvent être appliquées aux modes de réalisation de l'invention tel que décrit précédemment sans sortir du champ de cette invention

## IMPLEMENTATIONS ALTERNATIVES de la méthodologie de mesure

Les modes de réalisation de l'invention décrits peuvent être intégrés sur un microscope confocal de fluorescence. Le système de superrésolution selon des modes de réalisation de l'invention consiste en une nouvelle modalité de mesure, en complément ou en remplacement des modalités existantes de la microscopie. Toutefois, le système de superrésolution selon des modes de réalisation de l'invention peut tout aussi bien être intégré sur les autres plateformes de microscopie. Ces plateformes de microscopie, décrites par exemple en comprennent mais ne sont pas limité aux: microscopes à champ large, « Wide field microscope », microscopes à champ obscur, « dark field microscope », les microscopes de polarisation, les microscopes à différence de phase, les microscopes à interférence différentiel de contraste, les microscopes stéréoscopiques, les microscopes Raman, les microscopes dédiés à une tache spécifique, comme le « live cell imaging », le « cell sorting », « cell motility » ou tout autre instrument de microscopie optique, tels que décrits par exemple dans la référence {Nikon., 2011 #1290}

Dans un autre mode de réalisation de l'invention, appelé un mode multi-modalité, la plateforme de microscope comporte en outre au moins un des modules complémentaires suivants :

-au moins un module complémentaire de différente modalité de Microscopietel que, un module de superresolution suivant une autre modalité,
un module de mesure de mobilité moléculaire et d'interaction de molécules marquées par fluorescence,
un module d'analyse de l'interaction moléculaire dans les cellules.

Dans un autre mode de réalisation de l'invention dérivé du mode multi-modalité, la plateforme de Microscopie est configurée pour intégrer un mode confocal et/ou un mode « Champ plein ». Un tel mode de réalisation peut comporter, , en sus des composants communs du Microscope, une partie des mêmes composants optiques, de détection ou outils algorithmiques utilisés par la Plateforme décrite pour des modes de réalisation de l'invention décrits.

Dans un autre mode de réalisation de l'invention dérivé du mode multi-modalité, la plateforme de Microscopie est configurée pour intégrer une mesure de Polarisation, soit d'anisotropie de polarisation, soit de mesure des paramètres de Jones ou de Stokes. Un tel mode de réalisation peut comporter en sus des composants communs du Microscope, une partie des mêmes composants optiques, de détection ou outils algorithmiques utilisés par la Plateforme décrite pour des modes de réalisation de l' invention.

Dans un autre mode de réalisation de l'invention dérivé du mode multi-modalité, la plateforme de Microscopie est configurée pour intégrer soit un système de Microscopie de localisation soit un système d'émission déplétion utilisant l'émission stimulée pour éliminer la fluorescence dans les régions extérieures de la réponse impulsionnelle optique d'excitation. Un tel mode de réalisation peut comporter en sus des composants communs du Microscope, une partie des mêmes composants optiques, de détection ou outils algorithmiques utilisés par la Plateforme décrite pour des modes de réalisation de l'invention.

Une plateforme de microscopie selon au moins un mode de réalisation de l'invention peut être utilisée dans une application médicale, par exemple mais sans se limiter, pour l'observation ophtalmologique. Une telle utilisation peut comprendre la mesure d'objets biologiques ou médicaux de résolution micronique, la résolution étant comprise entre 1 et 10 $\mu$m, par exemple.

Une plateforme de microscopie selon au moins un mode de réalisation de l'invention peut être utilisée dans une application médicale, par exemple mais sans se limiter, pour l'observation gastrique ou gastroentérologique, ou pour l'observation du colon et des voies urinaires. Dans ces modes de réalisation l'information peut être acquise à travers une fibre optique, par exemple.

Dans un autre mode de réalisation de l'invention la plateforme est dédiée à la mesure de phénomènes de fluorescence faible, tel que mais non limité à l'autofluorescence.

Dans un mode particulier de réalisation de la méthode PSIT selon au moins un mode de réalisation de l'invention, les ondes régulière et singulière sont créées par la diffraction conique, la propagation d'une onde incidente régulière à travers un cristal biaxe, aligné en direction de l'axe optique, 32.

Dans un autre mode de réalisation de la méthode PSIT selon au moins un mode de réalisation de l'invention, les ondes régulière et singulière sont créées par la propagation d'une onde incidente régulière à travers un cristal uniaxe, en remplacement du cristal biaxe, aligné en direction de l'axe optique, 32, du mode préféré de réalisation.

Dans un autre mode de réalisation de la méthode PSIT selon au moins un mode de réalisation de l'invention,, les ondes régulière singulière sont créées par le positionnement au niveau du plan de Fourier d'un système optique d'une lame de phase - telle qu'une lame de phase spirale - ou un réseau de pas inférieur à la longueur d'onde, ou par le positionnement à un plan adéquat d'un hologramme.

Dans un mode de réalisation de la méthode PSIT dérivé du précèdent l'élément de phase ou de polarisation est dynamique et contrôlable, tel par exemple un matrice d'éléments à cristaux liquides, ou à effets Pockels, Faraday ou Kerr. La matrice peut être pixélisée, soit sous forme de régions distinctes ou de segments monolithiques.

Dans un mode de réalisation de la méthode PSIT selon au moins un mode de réalisation de l'invention,, l'interaction entre les modes est créée, statiquement ou dynamiquement, une interaction dans une fibre photonique.

Dans un mode de réalisation de la méthode PSIT selon au moins un mode de réalisation de l'invention,, la transmission des « au moins deux distributions lumineuses compactes de familles topologiques différentes » est réalisée par une fibre optique, incluant mais non limitée à une fibre photonique

Dans un autre mode de réalisation de la méthode PSIT selon au moins un mode de réalisation de l'invention, - point épais- non représentée, l'illumination de l'échantillon se compose d'une séquence d'au moins deux distributions lumineuses compactes composées, chaque distribution lumineuse compactes composées étant elle-même constituée d'au moins deux distributions lumineuses compactes simples, projetées simultanément. Lesdits au moins deux distributions lumineuses compactes simples étant cohérents optiquement, cohérents partiellement ou incohérents l'un par rapport à l'autre, lesdits au moins deux distributions lumineuses compactes simples devant être positionnée à des positions spatiales différentes et lesdits au moins deux distributions lumineuses compactes simples différant dans au moins un des caractéristiques, telle que leur position centrale latérale, leur position centrale longitudinale, leur polarisation, leur amplitude ou leur phase. L'ensemble de distributions lumineuses compactes simples contenant des distributions lumineuses compactes de familles topologiques différentes.

Dans un autre mode de réalisation de la méthode PSIT, les distributions lumineuses compactes sont créés par différents modes d'un laser multimode, non représenté et la séquence de distributions lumineuses compactes est créée en créant successivement les différents modes ou, à défaut, en contrôlant l'équilibre de l'énergie entre les modes.

Dans un autre mode de réalisation de la méthode PSIT, non représenté, le rapport entre les ondes régulières et singulières est modifié dynamiquement.

Dans un autre mode de réalisation de la méthode PSIT, non représenté, l'onde régulières et l'onde singulière sont créées par une séparation physique du faisceau incident - au moins - deux voies, la modification du faisceau dans l'une des voies, de régulière à singulière, étant réalisée par des moyens connus comme des lames de phase ou en spirale, élément optique holographique, réseau de pas inférieur à la longueur d'onde, cristaux biaxes ou uniaxes ou combinaison des deux, et la recombinaison des deux faisceaux en utilisant un combineur de faisceaux, en un seul faisceau. Dans ce mode de réalisation, la différenciation des distributions lumineuses compactes peut être effectuée soit sur le faisceau combiné ou sur chacun des faisceaux, de manière indépendante, après la séparation et avant la recombinaison.

Dans un autre mode de réalisation de la méthode PSIT, suivi dynamique, non représenté, le système comporte des moyens, y compris mais non limité à miroirs contrôlables, dispositifs électro-optiques ou acousto-optiques, ou des actionneurs piézo-électriques, capable de déplacer la distribution lumineuse compacte ou la séquence de distributions lumineuses compactes dans l'espace avec une grande précision. Dans le système de suivi dynamique de la position de la distribution lumineuse compacte et leur séquence est contrôlée dynamiquement de façon à suivre au moins une cible spécifique.

Dans un autre mode de réalisation de la méthode PSIT, fluorophore noir, non représenté, la distribution lumineuse compacte ou la combinaison mathématique de distributions lumineuses compactes est configuré de telle sorte qu'un zéro d'intensité existe au centre de la distribution lumineuse compacte. Le système comprend des moyens aptes à déplacer dans l'espace la distribution lumineuse compacte et ces moyens sont utilisés pour suivre le fluorophore, pour positionner le fluorophore en son centre, en fonction du temps. Lorsque le fluorophore est positionné au centre de la distribution lumineuse compacte, sans mouvement, sa position peut être évaluée avec une grande précision sans lumière fluorescente qui émerge d'un fluorophore réduisant ainsi sensiblement les effets de photo-blanchiment. Un mouvement du fluorophore peut être compensé par un mouvement adéquat de la position de la distribution lumineuse compacte, permettant de suivre le fluorophore en utilisant une petite quantité de lumière fluorescente émise.

Dans un autre mode de réalisation de la méthode PSIT, la position de nanoémetteurs à est obtenue avec une bonne précision en utilisant des distributions lumineuses choisies de façon que la luminosité à la position de l'émetteur soit minimale tout en obtenant une information significative. Ce autre mode de réalisation est spécifiquement adapté aux émetteurs à faible émissivité - capable de délivrer seulement un faible nombre de photons total - tel que, mais non limité à, des effets d'autofluorescence -

Dans un autre mode de réalisation de la méthode PSIT, choix des séquences dynamiques, non représenté, le système détermine de façon dynamique, sur la base d'une hypothèse de positionnement ou sur un premier ensemble de mesures, la séquence optimale des distributions lumineuses compactes.

Dans un autre mode de réalisation de la méthode PSIT, choix des séquences et positionnement dynamiques de la distribution lumineuse compacte, non représenté, le système comporte des moyens, y compris mais non limité à des miroirs contrôlables, dispositifs électro-optiques et acousto-optiques ou des actionneurs piézo-électriques, capable de déplacer dans l'espace le distribution lumineuse compacte ou la combinaison de distributions lumineuses compactes avec une grande précision. Le système détermine de façon dynamique, sur la base d'une hypothèse de positionnement ou sur un premier ensemble de mesures, la séquence optimale et la position des distributions lumineuses compactes.

Dans un autre mode de réalisation de la méthode PSIT, la méthode PSIT de triangulation, deux, ou plus, processus de mesure de la méthode PSIT, décrit antérieurement, sont réalisés sur le même échantillon avec des axes de projection différents. La variation de position latérale entre les deux mesures permet la mesure de la position longitudinale des nanoémetteur lumineux.

Dans un autre mode de réalisation de la méthode PSIT, la méthode PSIT parallèle, la lumière est incidente sur un ensemble de microlentilles - ou un autre moyen optique, connu de l'Homme de l'Art, permettant la réalisation d'un ensemble de distributions lumineuses en parallèle; ces distributions lumineuses sont modifiées par un module optique pour réaliser, simultanément, sur un grand nombre de points discrets, la méthode PSIT.

Dans un autre mode de réalisation de la méthode PSIT, la méthode PSIT multispectrale (non représentée), l'échantillon est illuminé, séquentiellement ou simultanément, par au moins deux séquences d'illumination, chaque séquence projetant de la lumière sur l'échantillon à des longueurs d'ondes différentes

Dans un autre mode de réalisation de la méthode PSIT, un élément polarisant supplémentaire, fixe ou variable, est positionné après l'analyseur, pour contrôler la polarisation des distributions de lumière projetées sur l'échantillon, pour soit limiter les effets vectoriels, soit créer une diversité de polarisation, soit mesurer des paramètres de polarisation des composantes de l'échantillon.

Dans un autre mode de réalisation de la méthode PSIT, les images résultantes sont traitées en utilisant la méthode de Hough généralisée, permettant de reconnaitre des caractéristiques dans une image.

Dans un autre mode de réalisation de la méthode PSIT, on utilise un effet de clignotement pour séparer temporellement les sources lumineuses positionnées a des distances faibles l'une de l'autre ; l'effet de clignotement peut être soit naturel, soit induit, par exemple à l'aide d'une onde additionnelle, régulière ou singulière, par un effet de photoactivation ou de photodepletion. Dans ce mode de réalisation, qui permet d'acquérir des informations à très haute vitesse, le processus de localisation des points émettant séquentiellement utilise le processus de localisation d'un point par rapport d'intensité réémise en fonction des distributions projetées, décrit antérieurement

Dans un autre mode de réalisation de la méthode PSIT, les ondes sont projetées simultanément interagissent de façon non linéaire, par effet de fluorescence multiphotons (incluant la fluorescence a deux photons) ou par effet Raman.

Dans un autre mode de réalisation de la méthode PSIT, les distributions lumineuses sont créées par un système optique à chemin commun et injectées dans une fibre, tel qu'à la sortie de la fibre on obtient les distributions lumineuses compactes de familles topologiques différentes décrites antérieurement, cette configuration permettant de le système optique créant les distributions lumineuses du microscope, simplifiant le design et l'utilisation du microscope. Dans ce mode de réalisation de la méthode PSIT, la fibre peut être utilisée en transmission, pour transmettre les différents modes optiques, créés antérieurement, avec potentiellement une atténuation qui peut varier en fonction des modes. Dans ce mode de réalisation de la méthode PSIT, la fibre peut aussi créer une interaction entre les modes et les modes émergeants de la fibre peuvent différer de ceux incidents dans la fibre étant entendu que le système a été conçu pour prendre en compte et utiliser le couplage, statique ou dynamique dans la fibre

Dans un autre mode de réalisation de la méthode PSIT, la dépendance spectrale de l'émission d'un fluorophore est de surcroit modifiée par un effet de transfert d'énergie de Förster ou par un effet équivalent

Dans un autre mode de réalisation de la méthode PSIT, la projection de distributions lumineuses de topologies différentes est effectuée par une diffraction conique et le système a été modifié pour le rendre achromatique par l'ajout d'éléments supplémentaires, tels que des éléments dispersants connus de l'Homme de l'Art, tels que prismes et réseaux, ou par la modification d'éléments internes tels que les lentilles ou l'utilisation de deux - ou plus -cristaux ayant des dispersions inverses.

Dans un autre mode de réalisation de la méthode PSIT, la projection de distributions lumineuses de topologies différentes est effectuée par une diffraction conique et le système a été modifié pour le rendre achromatique par l'ajout d'éléments supplémentaires, tels que des éléments dispersants connus de l'Homme de l'Art, tels que prismes et réseaux, ou par la modification d'éléments internes tels que les lentilles ou l'utilisation de deux - ou plus -cristaux ayant des dispersions inverses.

Dans un autre mode de réalisation de la méthode PSIT, la projection de distributions lumineuses de topologies différentes est effectuée par une diffraction conique et le système a été modifié pour le rendre athermal par l'ajout d'éléments supplémentaires, tels que des éléments optiques dépendants de la température connus de l'Homme de l'Art, ou par la modification d'éléments internes tels que les lentilles ou l'utilisation de deux - ou plus -cristaux ayant des dépendances thermales inverses.

Dans un autre mode de réalisation de cette invention, l'onde singulière, issue d'un système optique à chemin commun, potentiellement à une longueur d'onde différente de l'onde régulière, crée un effet de déplétion de l'onde régulière par soit désexcitation des fluorophores soit par transition entre états excités différents du fluorophore. Ce mode de réalisation diffère de la description originale de Hell et Wichmann, {Hell, 1994 #1288}, par l'utilisation d'un système optique à chemin commun, simplifiant de façon majeure la complexité et les alignements du système, améliorant sa robustesse et réduisant son cout.

Dans un mode de réalisation de cette invention dérivé du précèdent, l'onde singulière, issue d'un système optique à chemin commun utilisant la diffraction conique ou des cristaux uniaxes, potentiellement à une longueur d'onde différente de l'onde régulière, crée un effet de déplétion de l'onde régulière par soit désexcitation des fluorophores soit par transition entre états excités différents du fluorophore.

Dans un mode de réalisation de cette invention dérivé du précèdent, le système optique à chemin commun utilise soit la diffraction conique soit des cristaux uniaxes, et les ondes régulières et singulières sont obtenues soit par l'action d'éléments polarisants dynamiques, soit par un élément polarisant dispersif additionnel. Ce mode de réalisation diffère de la description originale de Hell et Wichmann, {Hell, 1994 #1288}, par l'utilisation d'un système optique à chemin commun, simplifiant de façon majeure la complexité et les alignements du système, améliorant sa robustesse et réduisant son cout.

Dans un autre mode de réalisation de la méthode PDOS, non représenté, la canalisation de la lumière entrante provenant de sources ponctuelles différentes en fonction de leur position longitudinale est effectuée dans le plan focal. Elle est effectuée en utilisant un élément ayant des propriétés de polarisation dépendantes de la position latérale. La lumière entrant à partir d'un point placé longitudinalement à un plan déterminé sera incidente sur une position donnée aura des propriétés de polarisation spécifiques, et la lumière incidente en provenance de points placés à des positions longitudinales - et latérales - différentes, seront incidentes sur d'autres positions dans le plan focal, qui ont des caractéristiques de polarisation différentes.

Quant à une discussion plus approfondie de la manière de l'utilisation et l'exploitation de l'invention, elle devrait ressortir de la description ci-dessus. Par conséquent, aucune discussion relative à la forme de l'utilisation et du fonctionnement ne sera décrite.

À cet égard, avant d'expliquer au moins un mode de réalisation de l'invention dans le détail, il est entendu que l'invention n'est pas limitée dans son application aux détails de la construction et au régime des composantes énoncées dans la description suivante ou illustrées dans le dessin. L'invention est capable d'autres modes de réalisation et peut être pratiquée et effectuée de diverses manières. En outre, il est entendu que la phraséologie et la terminologie employée dans ce document sont dans le but de la description et ne devrait pas être considérée comme limitative.

Les références citées ici enseignent de nombreux principes qui sont applicables à la présente invention. Par conséquent, la totalité du contenu de ces publications sont incorporés ici par référence, le cas échéant pour les enseignements de détails supplémentaires ou de remplacement, les caractéristiques et / ou d'information technique.

Fibre : Transmission

L'utilisation avantageuse des fibres optiques est la transmission du mode fondamental, le mode $TEM_{00}$ et seulement lui. Toutefois, certaines configurations de fibres optiques, principalement mais non exclusivement basées sur des fibres dites « Photonic Crystal Fiber » (en anglais) permet la transmission simultanée ou non, de modes plus complexes, y compris des modes de vortex. Il serait donc possible de déporter les distributions optiques créées par la réfraction conique à l'aide de fibres optiques, permettant une simplification majeure du système optique.

De plus, certaines fibres les « dual-core photonic crystal fibers », {Li, 2012 #1286}, permettent une interaction entre deux modes, l'un d'entre eux pouvant être un vortex, et fournissent un mécanisme physique supplémentaire pour créer des fonctions de transfert diversifiées.

Il est entendu que l'invention n'est pas limitée dans son application aux détails énoncés dans la description contenue dans les présentes ou illustrés dans les dessins. L'invention est capable d'autres modes de réalisation et d'être pratiquée et effectuée de diverses manières. L'homme de l'art comprendra aisément que diverses modifications et changements peuvent être appliquées aux modes de réalisation de l'invention tel que décrit précédemment sans sortir de son champ d'application, définie dans et par les revendications annexées.

Dans un autre mode de réalisation de l'algorithmique SRCDA, l'algorithmique SRCDA combinatoire, les positions des fluorophores sont discrétisées sur une grille (à un certain pas de résolution) et la reconstruction est faite en balayant systématiquement toutes les positions possibles d'au plus k fluorophores sur la grille (k étant considéré comme un paramètre de la méthode, ou bien

estimé à l'aide des intensité mesurées, ou bien estimé à l'aide d'une mesure différente). Pour chaque k-uplet de positions, la résolution du problème inverse devient très simple (l'estimation des intensités, par exemple, peut se faire par quelques itérations de la méthode de Newton).

Dans un autre mode de réalisation de l'algorithmique SRCDA, l'algorithmique SRCDA entropique, des mesures supplémentaires sont réalisées en sélectionnant et en positionnant séquentiellement les signaux projetés aux points qui maximisent l'entropie de la reconstruction. Ce mode dynamique permet donc d'optimiser la précision du système par rapport au nombre de mesures.

Dans un autre mode de réalisation de l'algorithmique SRCDA, l'algorithmique SRCDA obscure, des mesures supplémentaires sont réalisées en sélectionnant et en positionnant séquentiellement les signaux projetés de manière à minimiser la quantité de photons absorbés par les fluorophores. Ce mode de réalisation peut être combiné avec le mode entropique, en trouvant le compromis optimal entre information recueillie et quantité de photons absorbés.

De nombreuses techniques de superrésolution sont basées sur la mesure de sources ponctuelles, de taille inférieure à une fraction de longueur d'onde. Les techniques de superrésolution selon des modes de réalisation décrits permettent la mesure de sources ponctuelles, mais aussi d'objets structurés, par exemple et principalement des segments de lignes, des cercles ou même d'objets continus. En Biologie, cette extension permettra la mesure d'entités biologiques importantes, telles que des filaments, des neurones et certains microtubules.

Bien que les descriptions des modes de réalisation, pour simplifier la compréhension de l'invention, présentent les applications en Microscopie, plus spécifiquement en Biologie, et encore plus spécifiquement en Biologie de Fluorescence, les applications peuvent être étendues aux applications générales de la Microscopie et à l'ensemble du domaine de la Vision, incluant la Vision artificielle.

Des modes de réalisation de l'invention peuventêtre appliqués, en choisissant un système optique différent, à de nombreuses applications médicales, par exemple mais sans se limiter, à l'observation ophtalmologique. Ce champ d'application correspond à la mesure d'objets biologiques ou médicaux de résolution micronique, la résolution étant comprise entre 1 et 10 $\mu$m.

De plus, des modes de réalisation de l'invention peuvent être appliqués, comme expliquée ultérieurement, à travers une fibre optique. Ceci permet de nombreuses applications supplémentaires, par exemple mais sans se limiter, à l'observation gastrique ou gastroentérologique, et à l'observation du colon et des voies urinaires.

Il est entendu que l'invention n'est pas limitée dans son application aux détails énoncés dans la description contenue dans les présentes ou illustrés dans les dessins. L'invention est capable d'autres modes de réalisation et d'être pratiquée et effectuée de diverses manières. L'homme de l'art comprendra aisément que diverses modifications et changements peuvent être appliquées aux modes de réalisation de l'invention tel que décrit précédemment sans sortir de son champ d'application, définie dans et par les revendications annexées.

**Référencés**

1. Zeiss, "Zeiss Microscopy and image analysis, http://www.zeiss.com/4125681C00466C26/?Open " (2012).

2. Nikon, "MicroscopyU The source for Microscopy éducation" (2012), retrieved 6 March 2012.

3. L. Schermelleh, R. Heintzmann, and H. Leonhardt, "A guide to super-resolution fluorescence microscopy," The Journal of cell biology 190, 165-175 (2010).

4. M. V. Berry, "Conical diffraction asymptotics: fine structure of Poggendorff rings and axial spike," Journal Of Optics A-Pure And Applied Optics 6, 289-300 (2004).

5. W. contributors, (\i Wikipedia, The Free Encyclopedia\i0 \par, 2 February 2012 19:47 \par), retrieved {\field{\*\fldinst{HYPERLINK "http://en.wikipedia.org/w/index.php?title=Super resolution microscopy&oldid= 474630789"}} l\fldrsltf\ul\cfl http://en.wikipedia.org/w/index.php?title=Super_resolution_microscopy&oldid=4 74630789}}}l\f0\fs24\par.

6. Lindegren, "Photoelectric astrometry - A comparison of methods for precise image location," in Modem astrometry; Proceedings of the Colloquium, Vienna, Austria, September 11-14, 1978. , 1978), 197-217.

7. J. F. Nye and M. V. Berry, "Dislocations in Wave Trains," Proceedings of the Royal Society of London. Series A, Mathematical and Physical Sciences (1934-1990) 336, 165-190 (1974).

8. S. W. Hell and J. Wichmann, "Breaking the diffraction resolution limit by stimulated émission: stimulated-emission-depletion fluorescence microscopy," Optics letters 19, 780-782 (1994).

9. S. M. Finkbeiner, "Robotic microscopy systems," (2006).

10. W. R. Hamilton, "Third Supplement to an Essay on the Theory of Systems of Rays," Trans. Royal Irish. Acad., pp 1-144 (1833).

11. H. Llyold, "On the Phenomena presented by Light in its Passage along the Axes of Biaxial Crystals," The London and Edinburgh Philosophical Magazine and Journal of Science ii, 112-120 (1833).

12. M. V. Berry and M. R. Jeffrey, "Conical diffraction: Hamilton's diabolical point at the heart of crystal optics," in Progress in Optics (2007 - In Press).

13. M. V. Berry, M. R. Jeffrey, and J. G. Lunney, "Conical diffraction: observations and theory.," Proc. R. Soc. A. 462 1629-1642 (2006).

14. C. Phelan, D. O'Dwyer, Y. Rakovich, J. Donegan, and J. Lunney, "Conical diffraction and Bessel beam formation with a high optical quality biaxial crystal," J. Opt. A, Pure Appl. Opt 7, 685-690 (2009).

15. M. Berry and M. Jeffrey, "Conical diffraction: Hamilton's diabolical point at the heart of crystal optics," Progress in Optics 50, 13 (2007).

16. A. Geivandov, I. Kasianova, E. Kharatiyan, A. Lazarev, P. Lazarev, and S. Palto, "Printable Thin Birefringent Film Retarders for LCD."

17. B. Acharya, A. Primak, T. Dingemans, E. Samulski, and S. Kumar, "The elusive thermotropic biaxial nematic phase in rigid bent-core molecules," Pramana 61, 231-237 (2003).

18. T. Maldonado, "Electro-optic modulators," in Handbook ofOptics, M. Bass, ed. (McGraw Hill, Orlando, 1995).

19. J. Kemp, "Piezo-optical birefringence modulators: new use for a long-known effect," Journal of the Optical Society of America 59, 950-953 (1969).

20. D. H. Goldstein and E. Collett, Polarized light (CRC, 2003), Vol. 83.

21. J. B. Pawley, Handbook ofbiological confocal microscopy (Springer Verlag, 2006).

22. M. Bass, Handbook ofoptics (McGraw-Hill, 2001).

23. M. Minsky, "Microscopy Apparatus," 3,013,467 (1961).

24. A. Ferrando, M. Zacarés, and M.-Á. García-March, "Vorticity Cutoff in Nonlinear Photonic Crystals," Physical Review Letters 95, 043901 (2005).

25. P. Li, J. Zhao, S. Liu, X. Gan, T. Peng, and X. Jiao, "Dynamic behaviors of optical vortices in dual-core photonic crystal fibers," Optics Communications (2012).

26. Y. Zhang, "Generation of three-dimensional dark spots with a perfect light shell with a radially polarized Laguerre-Gaussian beam," Applied optics 49, 6217-6223 (2010).

## Revendications

1. Un procédé optique de mesure pour déterminer la distribution spatiale ou spatiotemporelle d'un échantillon, l'échantillon comportant au moins une source réémettrice ledit au moins une source réémettrice réémettant de la lumière en fonction de la lumière projetée, suivant une loi déterminée, sur l'échantillon, le procédé comportant :

   la projection sur l'échantillon , au moyen d'un appareil optique de projection achromatique, d'au moins deux distributions lumineuses compactes de familles topologiques différentes, créées par une interférence entre une onde régulière et une onde singulière, ou entre deux ondes singulières; se propageant suivant le même chemin optique, et obtenues par une diffraction conique,
   la détection de la lumière réémise par ledit au moins une source réémettrice de l'échantillon ;
   la génération, d'au moins une image optique, optique, pour chaque distribution lumineuse, à partir de la lumière détectée ; et l'analyse algorithmique des images optiques pour obtenir une information de localisation dudit au moins une source réémettrice, les au moins deux distributions lumineuses compactes de familles topologiques différentes étant projetées séquentiellement et la génération, d'au moins une image optique, à partir de la lumière détectée étant effectuée, pour chaque distribution lumineuse.

2. Un procédé selon la revendication 1 dans lequel une différenciation spatiale entre lesdites au moins deux distributions est créée en faisant varier au moins un des paramètres suivants:

   a) au moins un des paramètres de l'onde régulière;
   b) au moins un paramètre d'au moins une onde singulière et
   c) une différence de phase entre l'onde régulière et l'onde singulière ou entre les deux ondes singulières.

3. Un procédé selon la revendication 1 ou 2 comportant en outre la modification de la projection par une variation des états de polarisation d'entrée et de sortie d'un au moins un cristal conique effectuant la diffraction conique.

4. Un procédé selon l'une quelconque des revendications précédentes dans lequel la projection de distributions lumineuses de topologies différentes est effectuée par une diffraction conique dans un cristal mince.

5. Un procédé selon l'une quelconque des revendications précédentes comprenant en outre : la transmission le long d'une partie du chemin optique des au moins deux distributions lumineuses compactes de familles topologiques différentes par une fibre optique.

6. Un procédé selon l'une quelconque des revendications précédentes comportant la séparation temporelle, par l'application d'un effet physique, des sources réémettrices positionnées, dans l'échantillon, à des distances faibles l'une de l'autre, en utilisant une technique de microscopie de localisation.

7. Un procédé selon la revendication 6 comportant en outre l'induction de l'effet physique à l'aide d'une onde supplémentaire, régulière ou singulière, par un effet de photoactivation ou de photodepletion.

8. Un procédé selon l'une quelconque des revendications précédentes dans lequel les ondes des distributions lumineuses projetées interagissent de façon non linéaire, par effet de fluorescence à multiphotons ou par effet Raman.

9. Un procédé l'une quelconque des revendications 5 à 8, dans lequel la fibre optique est configurée pour transmettre les distributions lumineuses compactes de familles topologiques différentes , créées antérieurement, avec une atténuation différente pour les différentes distributions lumineuses.

10. Un procédé selon l'une quelconque des revendications 5 à 9 dans lequel la fibre optique est agencée pour créer, par couplage, statique ou dynamique dans la fibre, une interaction entre les distributions lumineuses injectées dans la fibre optique et pour que les distributions lumineuses émergeantes de la fibre diffèrent de celles injectées dans la fibre

11. Un procédé selon l'une quelconque des revendications précédentes dans lequel ledit au moins deux distributions lumineuses compactes de familles topologiques différentes sont collocalisées.

12. Un procédé selon l'une quelconque des revendications précédentes dans lequel l'appareil achromatique comporte au moins une source lumineuse de longueur d'onde comprise dans une bande spectrale de largeur supérieure à 15% de la longueur d'onde médiane de la bande spectrale,
l'appareil optique achromatique créant des distributions lumineuses compactes, collocalisées, de familles topologiques différentes, se propageant suivant le même chemin optique pour toute longueur d'onde comprise dans la bande spectrale.

13. Un dispositif de mesure pour déterminer la distribution spatiale ou spatiotemporelle d'un échantillon, l'échantillon comportant au moins une source réémettrice, ledit au moins une source réémettrice réémettant de la lumière en fonction de la lumière projetée, suivant une loi déterminée, sur l'échantillon, le dispositif comportant:

- un module de projection achromatique à projeter sur l'échantillon d'au moins deux distributions lumineuses compactes de familles topologiques différentes, créées par une interférence entre une onde régulière et une onde singulière, ou entre deux ondes singulières, se propageant suivant le même chemin optique, et obtenues par une diffraction conique, un module de détection apte à détecter de la lumière réémise par ledit au moins une source réémettrice de l'échantillon ;
- un module de génération, apte à générer au moins une image optique, pour chaque distribution lumineuse, à partir de la lumière détectée; et
- un module d'analyse algorithmique apte à analyser des images optiques pour obtenir une information de localisation dudit au moins une source réémettrice. le module de projection étant configuré pour projeter séquentiellement les au moins deux distributions lumineuses compactes de familles topologiques différentes ; et le module de génération étant configuré pour générer ledit au moins une image optique, à partir de la lumière détectée pour chaque distribution lumineuse.

14. Un dispositif selon la revendication 13 dans lequel

- le module de projection est apte à créer une différenciation spatiale entre lesdites au moins deux distributions est créée en faisant varier au moins un des paramètres suivants:

- a) au moins un des paramètres de l'onde régulière;
- b) au moins un paramètre d'au moins une onde singulière et
- c) une différence de phase entre l'onde régulière et l'onde singulière ou entre les deux ondes singulières.

15. Un dispositif selon l'une des revendications 13 à 14, dans lequel le module de projection comporte au moins un cristal conique pour effectuer la projection de distributions lumineuses de familles topologies différentes par une diffraction conique.

16. Un dispositif selon la revendication 15 comportant en outre des moyens de modification de projection configurés à varier des états de polarisation d'entrée et de sortie dudit au moins un cristal conique.

17. Un dispositif selon la revendication 15 ou 16, dans lequel ledit au moins un cristal conique est un cristal mince.

18. Un dispositif selon l'une quelconque des revendications 13 à 17, comprenant en outre une fibre optique pour effectuer la transmission le long d'une partie du chemin optique des au moins deux distributions lumineuses compactes de familles topologiques différentes.

19. Un dispositif selon l'une quelconque des revendications 13 à 18, comportant un module de séparation temporelle apte àséparer temporellement, par l'application d'un effet physique, des sources réémettrices positionnées, dans l'échantillon, à des distances faibles l'une de l'autre, en utilisant une technique de microscopie de localisation.

20. Un dispositif selon la revendication 19 comportant en outre des moyens d'induction de l'effet physique à l'aide d'une onde supplémentaire, régulière ou singulière, par un effet de photoactivation ou de photodepletion.

21. Un dispositif selon l'une quelconque des revendications 13 à 20, dans lequel le module de projection est configuré pour projeter les ondes des distributions lumineuses tel que elles interagissent de façon non linéaire, par effet de fluorescence à multiphotons ou par effet Raman.

22. Un dispositif l'une quelconque des revendications 18 à 21, dans lequel la fibre optique est configurée pour transmettre les distributions lumineuses compactes de familles topologiques différentes , créées antérieurement, avec une atténuation différente pour les différentes distributions lumineuses.

23. Un dispositif selon l'une quelconque des revendications 18 à 22, dans lequel la fibre optique est agencée pour créer, par couplage, statique ou dynamique dans la fibre, une interaction entre les distributions lumineuses injectées dans la fibre optique et pour que les distributions lumineuses émergeantes de la fibre diffèrent de celles injectées dans la fibre.

24. Un dispositif selon l'une quelconque des revendications 13 à 23, comportant en outre dans des moyens pour modifier la dépendance spectrale de l'émission d'une source réémettrice par un effet de transfert d'énergie de Förster.

25. Un dispositif selon l'une quelconque des revendication 13 à 24, comportant un dispositif de microscopie modifié pour le rendre achromatique, athermal ou achromatique et athermal, par l'ajout d'éléments optiques supplémentaires ou par modification des éléments internes du dispositif.

26. Un dispositif selon la revendication 25 dans lequel les éléments optiques ajoutés comprennent au moins un prisme, un réseau, une lentille ou un cristal supplémentaire ayant des dispersion inverses.

27. Un dispositif selon l'une quelconque des revendications 13 à 26, dans lequel le module de projection achromatique est apte à créer au moins deux distributions lumineuses compactes de familles topologiques différentes collocalisées.

28. Un dispositif selon l'une quelconque des revendications 13 à 27, dans lequel le module de projection achromatique comporte au moins une source lumineuse de longueur d'onde comprise dans une bande spectrale de largeur supérieure à 15% de la longueur d'onde médiane de la bande spectrale, et est configuré pour créer des distributions lumineuses compactes, collocalisées, de familles topologiques différentes, se propageant suivant le même chemin optique pour toute longueur d'onde comprise dans la bande spectrale.

29. Un dispositif selon la revendication 13 comportant en outre des moyens d'interférence pour créer lesdites au moins deux distributions lumineuses compactes de familles topologiques différentes par une interférence entre une onde régulière et une onde singulière, ou entre deux ondes singulières, et une différenciation spatiale entre lesdites au moins deux distributions est créée en faisant varier au moins un des paramètres suivants:

a) au moins un des paramètres de l'onde régulière;
b) au moins un paramètre d'au moins une onde singulière et
c) une différence de phase entre l'onde régulière et l'onde singulière ou entre les deux ondes singulières.

**30.** Un dispositif selon la revendication 29 dans lequel l'onde singulière, issue d'un système optique à chemin commun, à une longueur d'onde différente de l'onde régulière, est configuré pour créer un effet de déplétion de l'onde régulière par soit désexcitation dudit au moins une source réémettrice soit par transition entre états excités différents dudit au moins une source réémettrice

**31.** Un dispositif selon la revendication 30 comportant des moyens de dispersion de polarisation pour effectuer un effet de dispersion de polarisation pour permettre au système optique à chemin commun de créer sans modification dynamique, une onde régulière à une longueur d'onde et une onde singulière à une différente longueur d'onde.

**Patentansprüche**

**1.** Optisches Messverfahren zur Bestimmung der räumlichen oder raumzeitlichen Verteilung einer Probe, wobei die Probe mindestens eine wiederausstrahlende Quelle umfasst, wobei die mindestens eine wiederausstrahlende Quelle Licht in Abhängigkeit von dem Licht, das nach einem bestimmten Gesetz auf die Probe projiziert wird, wiederausstrahlt, wobei das Verfahren umfasst:

Projektion von mindestens zwei kompakten Lichtverteilungen unterschiedlicher topologischer Familien, die durch Interferenz zwischen einer regulären Welle und einer singulären Welle oder zwischen zwei singulären Wellen, die sich entlang desselben optischen Weges ausbreiten, erzeugt und
durch Kegelbeugung erhalten werden, auf die Probe mittels eines achromatischen optischen Projektionsgeräts, Erfassen des Lichts, das von der mindestens einen wiederausstrahlenden Quelle der Probe erneut emittiert wird;
Erzeugen von mindestens einem optischen Bild für jede Lichtverteilung aus dem erfassten Licht; und
algorithmische Analyse der optischen Bilder, um eine Ortsinformation der mindestens einen wiederausstrahlenden Quelle zu erhalten, wobei die mindestens zwei kompakten Lichtverteilungen unterschiedlicher topologischer Familien sequentiell projiziert werden und die Erzeugung mindestens eines optischen Bildes aus dem erfassten Licht für jede Lichtverteilung durchgeführt wird.

**2.** Ein Verfahren nach Anspruch 1, bei dem eine räumliche Differenzierung zwischen den mindestens zwei Verteilungen erzeugt wird, indem mindestens einer der folgenden Parameter variiert wird:

a) mindestens einen der Parameter der regulären Welle ;
b) mindestens einen Parameter von mindestens einer singulären Welle und
c) eine Phasendifferenz zwischen der regulären Welle und der singulären Welle oder zwischen den beiden singulären Wellen.

**3.** Ein Verfahren nach Ansprüche 1 oder 2, das außerdem die Modifikation der Projektion durch eine Variation der Eingangs- und Ausgangs-Polarisationszustände von mindestens einem Kegelkristall, der die Kegelbeugung durchführt, umfasst.

**4.** Ein Verfahren nach einem der vorhergehenden Ansprüche, bei dem die Projektion von Lichtverteilungen mit unterschiedlichen Topologien durch Kegelbeugung in einem dünnen Kristall erfolgt.

**5.** Ein Verfahren nach einem der vorhergehenden Ansprüche umfasst außerdem: das Übertragen entlang eines Teils des optischen Weges der mindestens zwei kompakten Lichtverteilungen aus unterschiedlichen topologischen Familien durch eine optische Faser.

**6.** Ein Verfahren nach einem der vorhergehenden Ansprüche, bei dem durch die Anwendung eines physikalischen Effekts die zeitlich getrennte Anordnung der in der Probe in geringen Abständen voneinander positionierten Reemitter-Quellen unter Verwendung einer Lokalisierungsmikroskopietechnik erfolgt.

**7.** Ein Verfahren nach Anspruch 6, das außerdem die Induktion des physikalischen Effekts mithilfe einer zusätzlichen, regelmäßigen oder singulären Welle durch einen Fotoaktivierungs- oder Fotoverarmungseffekt umfasst.6

**8.** Ein Verfahren nach einem der vorhergehenden Ansprüche, bei dem die Wellen der projizierten Lichtverteilungen auf nichtlineare Weise interagieren, durch den Mehrphotonen-Fluoreszenz-Effekt oder den Raman-Effekt.

**9.** Ein Verfahren nach einem der Ansprüche 5 bis 8, bei dem die optische Faser so konfiguriert ist, dass sie kompakte Lichtverteilungen aus verschiedenen, zuvor erzeugten topologischen Familien mit einer unterschiedlichen Dämpfung für die verschiedenen Lichtverteilungen überträgt.

**10.** Ein Verfahren nach einem der Ansprüche 5 bis 9, bei dem die optische Faser so angeordnet ist, dass sie durch statische oder dynamische Kopplung in der Faser eine Wechselwirkung zwischen den in die optische Faser eingespeisten Lichtverteilungen erzeugt und dass sich die aus der Faser austretenden Lichtverteilungen von den in die Faser eingespeisten unterscheiden.

**11.** Ein Verfahren nach einem der vorhergehenden Ansprüche, bei dem die mindestens zwei kompakten Lichtverteilungen aus unterschiedlichen topologischen Familien kolokalisiert werden.

**12.** Ein Verfahren nach einem der vorhergehenden Ansprüche, bei dem das achromatische Gerät mindestens eine Lichtquelle mit einer Wellenlänge umfasst, die in einem Spektralband mit einer Breite von mehr als15% der mittleren Wellenlänge des Spektralbandes liegt, das achromatische optische Gerät erzeugt kompakte, kolokalisierte Lichtverteilungen unterschiedlicher topologischer Familien, die sich für jede Wellenlänge innerhalb des Spektralbandes entlang desselben optischen Weges ausbreiten.

**13.** Eine Messvorrichtung zur Bestimmung der räumlichen oder raumzeitlichen Verteilung einer Probe, wobei die Probe mindestens eine wiederausstrahlende Quelle umfasst, wobei die mindestens eine wiederausstrahlende Quelle Licht in Abhängigkeit von dem Licht, das nach einem bestimmten Gesetz auf die Probe projiziert wird, wieder ausstrahlt, wobei die Vorrichtung umfasst:

- ein achromatisches Projektionsmodul, das auf die Probe von mindestens zwei kompakten Lichtverteilungen unterschiedlicher topologischer Familien zu projizieren ist, die **durch Interferenz zwischen einer regulären Welle und einer singulären Welle** oder zwischen zwei singulären Wellen **erzeugt werden, die** sich entlang desselben optischen Weges ausbreiten und durch kegelförmige Beugung erhalten werden,
- ein Detektionsmodul, das dazu geeignet ist, Licht zu detektieren, das von der mindestens einen neu emittierenden Quelle der Probe wieder ausgestrahlt wird;
- ein Generierungsmodul, das geeignet ist, für jede Lichtverteilung mindestens ein optisches Bild aus dem erfassten Licht zu erzeugen; und
- ein algorithmisches Analysemodul, das in der Lage ist, optische Bilder zu analysieren, um Informationen über den Standort der mindestens einen wiederausstrahlenden Quelle zu erhalten.

wobei das Projektionsmodul so konfiguriert ist, dass es die mindestens zwei kompakten Lichtverteilungen von unterschiedlichen topologischen Familien sequentiell projiziert; und das Erzeugungsmodul so konfiguriert ist, dass es das mindestens eine optische Bild aus dem für jede Lichtverteilung erfassten Licht erzeugt.

**14.** Eine Vorrichtung nach Anspruch 13, wobei

- das Projektionsmodul geeignet ist, eine räumliche Differenzierung zwischen den mindestens zwei Verteilungen zu erzeugen wird erzeugt, indem mindestens einer der folgenden Parameter variiert wird:

a) mindestens einen der Parameter der regulären Welle ;
b) mindestens einen Parameter von mindestens einer singulären Welle und
c) eine Phasendifferenz zwischen der regulären Welle und der singulären Welle oder zwischen den beiden singulären Wellen.

**15.** Eine Vorrichtung nach einem der Ansprüche 13, bei 14,der das Projektionsmodul mindestens einen kegelförmigen Kristall enthält, um die Projektion von Lichtverteilungen unterschiedlicher Topologiefamilien durch kegelförmige Beugung zu bewirken.

**16.** Eine vorrichtung nach Anspruch 15, die außerdem eine Projektionsänderungseinrichtung umfasst, die so konfiguriert ist, dass sie die Eingangs- und Ausgangspolarisationszustände des mindestens einen kegelförmigen Kristalls variiert.

**17.** Eine vorrichtung nach Ansprüche 15 oder 16, wobei der mindestens eine kegelförmige Kristall ein dünner Kristall ist.

**18.** Eine Vorrichtung nach einem der Ansprüche 13 bis 17, die außerdem eine optische Faser umfasst, um die Übertragung entlang eines Teils des optischen Weges der mindestens zwei kompakten Lichtverteilungen aus unterschiedlichen topologischen Familien zu bewirken.

**19.** Eine vorrichtung nach einem der Ansprüche 13 bis 18, mit einem Zeittrennungsmodul, das durch Anwendung eines physikalischen Effekts Quellen, die in der Probe in geringen Abständen voneinander positioniert sind, zeitlich trennen kann, wobei eine Technik der Lokalisierungsmikroskopie verwendet wird

**20.** Eine Vorrichtung nach Anspruch 19, die außerdem Mittel zur Induktion des physikalischen Effekts mit Hilfe einer zusätzlichen, regelmäßigen oder singulären Welle durch einen Photoaktivierungs- oder Photodepletionseffekt umfasst.

**21.** Vorrichtung nach einem der Ansprüche 13 bis 20, bei der das Projektionsmodul so konfiguriert ist, dass es die Wellen der Lichtverteilungen so projiziert, dass sie nichtlinear interagieren, durch den Mehrphotonen-Fluoreszenz-Effekt oder den Raman-Effekt.

**22.** Vorrichtung nach einem der Ansprüche 18 bis 21, wobei der Lichtwellenleiter so konfiguriert ist, dass er die kompakten Lichtverteilungen verschiedener topologischer Familien, die zuvor erzeugt wurden, mit einer unterschiedlichen Dämpfung für die verschiedenen Lichtverteilungen überträgt.

**23.** Eine Vorrichtung nach einem der Ansprüche 18 bis 22, wobei die optische Faser so angeordnet ist, dass sie durch Kopplung, statisch oder dynamisch in der Faser, eine Wechselwirkung zwischen den in die optische Faser eingespeisten Lichtverteilungen erzeugt und dass die aus der Faser austretenden Lichtverteilungen sich von den in die Faser eingespeisten Lichtverteilungen unterscheiden.

**24.** Eine Vorrichtung nach einem der Ansprüche 13 bis 23, die außerdem in Mittel zur Änderung der spektralen Abhängigkeit der Emission einer wiederausstrahlenden Quelle durch einen Förster-Energieübertragungseffekt umfasst.

**25.** Eine Vorrichtung nach einem der Ansprüche 13 bis 24 mit einer Mikroskopievorrichtung, die modifiziert wurde, um sie achromatisch, athermal oder achromatisch und athermal zu machen, indem zusätzliche optische Elemente hinzugefügt oder die inneren Elemente der Vorrichtung modifiziert wurden.

**26.** Eine Vorrichtung nach Anspruch 25, bei der die hinzugefügten optischen Elemente mindestens ein Prisma, ein Gitter, eine Linse oder einen zusätzlichen Kristall mit umgekehrter Dispersion umfasse

**27.** Eine Vorrichtung nach einem der Ansprüche 13 bis 26, bei der das achromatische Projektionsmodul geeignet ist, mindestens zwei kollokalisierte kompakte Lichtverteilungen aus unterschiedlichen topologischen Familien zu erzeugen.

**28.** Eine Vorrichtung nach einem der Ansprüche 13 bis 27, bei der das achromatische Projektionsmodul mindestens eine Lichtquelle mit einer Wellenlänge umfasst, die in einem Spektralband enthalten ist, das breiter als 15% der mittleren Wellenlänge des Spektralbandes ist, und konfiguriert ist, um kompakte, kollokalisierte Lichtverteilungen unterschiedlicher topologischer Familien zu erzeugen, die sich für jede Wellenlänge, die in dem Spektralband enthalten ist, entlang desselben optischen Weges ausbreiten.

**29.** Eine Vorrichtung nach Anspruch 13, die außerdem Folgendes umfasst
Interferenzmittel zum Erzeugen der mindestens zwei kompakten Lichtverteilungen unterschiedlicher topologischer Familien durch Interferenz zwischen einer regulären Welle und einer singulären Welle oder zwischen zwei singulären Wellen, wobei eine räumliche Differenzierung zwischen den mindestens zwei Verteilungen durch Variieren mindestens eines der folgenden Parameter erzeugt wird:

    a) mindestens einen der Parameter der regulären Welle;

b) mindestens einen Parameter von mindestens einer singulären Welle und

c) eine Phasendifferenz zwischen der regulären Welle und der singulären Welle oder zwischen den beiden singulären Wellen.

**30.** Vorrichtung nach Anspruch 29, bei der die singuläre Welle, die von einem optischen System mit gemeinsamem Weg ausgeht und eine andere Wellenlänge als die reguläre Welle hat, einen Verarmungseffekt der regulären Welle erzeugt, indem sie entweder die mindestens eine wiederausstrahlende Quelle enterregt oder zwischen verschiedenen angeregten Zuständen der mindestens einen wiederausstrahlenden Quelle übergeht.

**31.** Eine Vorrichtung nach Anspruch 30 mit Polarisationsdispersionsmitteln zum Bewirken eines Polarisationsdispersionseffekts, um es dem optischen System mit gemeinsamem Pfad zu ermöglichen, ohne dynamische Änderung eine reguläre Welle bei einer Wellenlänge und eine singuläre Welle bei einer anderen Wellenlänge zu erzeugen.

**Claims**

**1.** An optical measuring method for determining the spatial or spatiotemporal distribution of a sample, the sample comprising at least one re-emitting source, said at least one re-emitting source re-emitting light as a function of light projected onto the sample according to a determined law, the method comprising :

the projection on the sample, by means of an achromatic projection optical apparatus, of at least two compact light distributions of different topological families, created by an interference between a regular wave and a singular wave, or between two singular waves; propagating along the same optical path, and obtained by conical diffraction,

detecting light re-emitted by the at least one re-emitting source of the sample;

generating at least one optical image for each light distribution from the detected light; and

algorithmic analysis of the optical images in order to obtain localisation information for the at least one re-emitting source, the at least two compact light distributions of different topological families being projected sequentially and the generation of at least one optical image from the detected light being carried out for each light distribution.

**2.** A method according to claim 1 wherein spatial differentiation between said at least two distributions is created by varying at least one of the following parameters:

a) at least one of the regular wave parameters ;

b) at least one parameter of at least one singular wave and

c) a phase difference between the regular wave and the singular wave or between the two singular waves.

**3.** A method according to claim 1 or 2 further comprising modifying the projection by varying the input and output polarisation states of at least one conical crystal performing the conical diffraction.

**4.** A method according to any one of the preceding claims wherein the projection of light distributions of different topologies is performed by conical diffraction in a thin crystal.

**5.** A method according to any one of the preceding claims further comprising: transmitting along a portion of the optical path the at least two compact light distributions of different topological families through an optical fibre.

**6.** A method according to any one of the preceding claims involving the temporal separation, by the application of a physical effect, of re-emitting sources positioned, in the sample, at small distances from each other, using a localisation microscopy technique.

**7.** A method according to claim 6 further comprising inducing the physical effect with an additional regular or singular wave by a photoactivation or photo depletion effect.

**8.** A method according to any one of the preceding claims wherein the waves of the projected light distributions interact non-linearly, by multi-photon fluorescence effect or by Raman effect.

**9.** A method of any one of claims 5 to 8, wherein the optical fibre is configured to transmit compact light distributions of different topological families, created earlier, with different attenuation for the different light distributions.

10. A method according to any one of claims 5 to 9, wherein the optical fibre is arranged to create, by static or dynamic coupling into the fibre, an interaction between the light distributions injected into the optical fibre and for the light distributions emerging from the fibre to differ from those injected into the fibre.

11. A method according to any of the preceding claims wherein said at least two compact light distributions of different topological families are co-located.

12. A method according to any one of the preceding claims wherein the achromatic apparatus comprises at least one light source of wavelength within a spectral band of width greater than 15% of the median wavelength of the spectral band,
the achromatic optical device creating compact, co-located light distributions of different topological families, propagating along the same optical path for any wavelength within the spectral band.

13. A measuring device for determining the spatial or spatiotemporal distribution of a sample, the sample comprising at least one re-emitting source, said at least one re-emitting source re-emitting light as a function of light projected onto the sample according to a determined law, the device comprising :

   - an achromatic projection module to project onto the sample at least two compact light distributions of different topological families, **created by an interference between a regular wave and a singular wave,** or between two singular waves, propagating along the same optical path, and obtained by conical diffraction,

      - a detection module adapted to detect light re-emitted by the at least one re-emitting source of the sample;
      - a generation module, capable of generating at least one optical image, for each light distribution, from the detected light; and
      - an algorithmic analysis module capable of analysing optical images to obtain localisation information for the at least one re-emitting source.

   the projection module being configured to sequentially project the at least two compact light distributions of different topological families; and the generation module being configured to generate the at least one optical image from the light detected for each light distribution.

14. A device as claimed in claim 13 wherein

   - the projection module is able to create a spatial differentiation between said at least two distributions by varying at least one of the following parameters:

      a) at least one of the regular wave parameters ;
      b) at least one parameter of at least one singular wave and
      c) a phase difference between the regular wave and the singular wave or between the two singular waves.

15. A device according to any one of claims 13 to 14, wherein the projection module comprises at least one conical crystal to effect projection of light distributions of different topology families by conical diffraction.

16. A device according to claim 15 further comprising projection changing means configured to vary input and output polarisation states of said at least one conical crystal.

17. A device according to claim 15 or 16, wherein said at least one conical crystal is a thin crystal.

18. A device according to any one of claims 13 to 17, further comprising an optical fibre for effecting transmission along a portion of the optical path of the at least two compact light distributions of different topological families.

19. A device according to any one of claims 13 to 18, comprising a temporal separation module able to separate temporally, by the application of a physical effect, re-emitting sources positioned in the sample at small distances from each other, using a localisation microscopy technique.

20. A device according to claim 19 further comprising means for inducing the physical effect with an additional regular or singular wave by a photoactivation or photodepletion effect.

**21.** A device according to any one of claims 13 to 20 wherein the projection module is configured to project the waves of light distributions such that they interact non-linearly, by multiphoton fluorescence effect or by Raman effect.

**22.** A device of any one of claims 18 to 21, wherein the optical fibre is configured to transmit the compact light distributions of different topological families, created previously, with different attenuation for the different light distributions.

**23.** A device according to any one of claims 18 to 22, wherein the optical fibre is arranged to create, by static or dynamic coupling into the fibre, an interaction between the light distributions injected into the optical fibre and for the light distributions emerging from the fibre to differ from those injected into the fibre

**24.** A device according to any one of claims 13 to 23 further comprising in means for modifying the spectral dependence of the emission from a re-emitting source by a Förster energy transfer effect.

**25.** A device according to any one of claims 13 to 24 comprising a microscopy device modified to render it achromatic, athermal or achromatic and athermal, by adding additional optical elements or by modifying the internal elements of the device.

**26.** A device according to claim 25 wherein the added optical elements comprise at least one additional prism, grating, lens or crystal having inverse dispersion.

**27.** A device according to any one of claims 13 to 26 wherein the achromatic projection module is adapted to create at least two compact light distributions of different topological families collocated.

**28.** A device according to any one of claims 13 to 27 wherein the achromatic projection module comprises at least one light source of wavelength within a spectral band of width greater than 15% of the median wavelength of the spectral band, and is configured to create compact, collocated light distributions of different topological families, propagating along the same optical path for any wavelength within the spectral band.

**29.** A device according to claim 13 further comprising
interference means for creating said at least two compact light distributions of different topological families by interference between a regular wave and a singular wave, or between two singular waves, and a spatial differentiation between said at least two distributions is created by varying at least one of the following parameters

a) at least one of the regular wave parameters;
b) at least one parameter of at least one singular wave and
c) a phase difference between the regular wave and the singular wave or between the two singular waves.

**30.** A device according to claim 29 wherein the singular wave, originating from a common path optical system, at a different wavelength from the regular wave, is configured to create a depletion effect of the regular wave by either de-excitation of the at least one re-emitting source or by transition between different excited states of the at least one re-emitting source

**31.** A device according to claim 30 comprising polarisation dispersion means for performing a polarisation dispersion effect to enable the common path optical system to create, without dynamic change, a regular wave at one wavelength and a singular wave at a different wavelength.

FIG. 1

FIG. 2

FIG. 3

FIG. 4a

FIG. 4d

FIG. 5

EP 2 839 298 B1

FIG. 6

**Figure 7a**

**Figure 7b**

FIG. 8

FIG. 9

Figure 10

FIG. 11

EP 2 839 298 B1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 202009007250 U1
- WO 2011086519 A1
- WO 2010133678 A1

**Littérature non-brevet citée dans la description**

- **J.F NYE ; M. BERRY.** *optique singulière,* 1974
- **ZEISS.** *Zeiss Microscopy and image analysis,* 2012, http://www.zeiss.com/4125681C00466C26/?Open
- **NIKON.** *MicroscopyU The source for Microscopy éducation,* 06 Mars 2012
- **L. SCHERMELLEH ; R. HEINTZMANN ; H. LEONHARDT.** A guide to super-resolution fluorescence microscopy. *The Journal of cell biology,* 2010, vol. 190, 165-175
- **M. V. BERRY.** Conical diffraction asymptotics: fine structure of Poggendorff rings and axial spike. *Journal Of Optics A-Pure And Applied Optics,* 2004, vol. 6, 289-300
- **W. CONTRIBUTORS.** *The Free Encyclopedia,* 02 Février 2012, http://en.wikipedia.org/w/index.php?title=Super resolution microscopy&oldid= 474630789''}} l\fldrsltf\ul\cfl http://en.wikipedia.org/w/index.php?title=Super_resolution_microscopy&oldid=4 74630789}}}l\f0\fs24\par
- **LINDEGREN.** Photoelectric astrometry - A comparison of methods for precise image location. *Modem astrometry; Proceedings of the Colloquium, Vienna, Austria,* 11 Septembre 1978, 197-217
- **J. F. NYE ; M. V. BERRY.** Dislocations in Wave Trains. *Proceedings of the Royal Society of London. Series A, Mathematical and Physical Sciences,* 1974, vol. 336, 165-190
- **S. W. HELL ; J. WICHMANN.** Breaking the diffraction resolution limit by stimulated émission: stimulated-emission-depletion fluorescence microscopy. *Optics letters,* 1994, vol. 19, 780-782
- **S. M. FINKBEINER.** *Robotic microscopy systems,* 2006
- **W. R. HAMILTON.** Third Supplement to an Essay on the Theory of Systems of Rays. *Trans. Royal Irish. Acad.,* 1-144
- **H. LLYOLD.** On the Phenomena presented by Light in its Passage along the Axes of Biaxial Crystals. *The London and Edinburgh Philosophical Magazine and Journal of Science,* vol. ii, 112-120
- **M. V. BERRY ; M. R. JEFFREY.** Conical diffraction: Hamilton's diabolical point at the heart of crystal optics. *Progress in Optics,* 2007
- **M. V. BERRY ; M. R. JEFFREY ; J. G. LUNNEY.** Conical diffraction: observations and theory. *Proc. R. Soc. A.,* 2006, vol. 462, 1629-1642
- **C. PHELAN ; D. O'DWYER ; Y. RAKOVICH ; J. DONEGAN ; J. LUNNEY.** Conical diffraction and Bessel beam formation with a high optical quality biaxial crystal. *J. Opt. A, Pure Appl. Opt,* 2009, vol. 7, 685-690
- **M. BERRY ; M. JEFFREY.** Conical diffraction: Hamilton's diabolical point at the heart of crystal optics. *Progress in Optics,* 2007, vol. 50, 13
- **A. GEIVANDOV ; I. KASIANOVA ; E. KHARATIYAN ; A. LAZAREV ; P. LAZAREV ; S. PALTO.** *Printable Thin Birefringent Film Retarders for LCD.*
- **B. ACHARYA ; A. PRIMAK ; T. DINGEMANS ; E. SAMULSKI ; S. KUMAR.** The elusive thermotropic biaxial nematic phase in rigid bent-core molecules. *Pramana,* 2003, vol. 61, 231-237
- Electro-optic modulators. **T. MALDONADO.** Handbook ofOptics. McGraw Hill, 1995
- **J. KEMP.** Piezo-optical birefringence modulators: new use for a long-known effect. *Journal of the Optical Society of America,* 1969, vol. 59, 950-953
- **D. H. GOLDSTEIN ; E. COLLETT.** Polarized light. CRC, 2003, vol. 83
- **J. B. PAWLEY.** Handbook ofbiological confocal microscopy. Springer Verlag, 2006
- **M. BASS.** Handbook ofoptics. McGraw-Hill, 2001
- **M. MINSKY.** *Microscopy Apparatus,* 1961, vol. 3 (013), 467
- **A. FERRANDO ; M. ZACARÉS ; M.-Á. GARCÍA-MARCH.** Vorticity Cutoff in Nonlinear Photonic Crystals. *Physical Review Letters,* 2005, vol. 95, 043901

- **P. LI ; J. ZHAO ; S. LIU ; X. GAN ; T. PENG ; X. JIAO.** Dynamic behaviors of optical vortices in dual-core photonic crystal fibers. *Optics Communications,* 2012

- **Y. ZHANG.** Generation of three-dimensional dark spots with a perfect light shell with a radially polarized Laguerre-Gaussian beam. *Applied optics,* 2010, vol. 49, 6217-6223